(19) Europäisches Patentamt
European Patent Office
Office européen des brevets

(11) **EP 4 697 069 A1**

(12) **EUROPEAN PATENT APPLICATION**

(43) Date of publication:
**18.02.2026 Bulletin 2026/08**

(21) Application number: **24194905.6**

(22) Date of filing: **16.08.2024**

(51) International Patent Classification (IPC):
**G01S 19/07** (2010.01)     **G01S 19/42** (2010.01)
**G01S 19/08** (2010.01)

(52) Cooperative Patent Classification (CPC):
**G01S 19/072; G01S 19/426;** G01S 19/073;
G01S 19/074; G01S 19/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Trimble Inc.**
**Westminster, CO 80021 (US)**

(72) Inventors:
• **Weinbach, Ulrich**
**Hoehenkirchen-Siegertsbrunn (DE)**
• **Liu, Xiao**
**Hoehenkirchen-Siegertsbrunn (DE)**
• **Chen, Xiaoming**
**Hoehenkirchen-Siegertsbrunn (DE)**
• **Rothmaier, Fabian**
**Hoehenkirchen-Siegertsbrunn (DE)**

(74) Representative: **Hoffmann Eitle**
**Patent- und Rechtsanwälte PartmbB**
**Arabellastraße 30**
**81925 München (DE)**

(54) **GENERATION, TRANSMISSION, AND USE OF IONOSPHERIC DISTURBANCE INFORMATION FOR POSITIONING PURPOSES**

(57)     Some embodiments pertain to generating, transmitting, and using ionospheric disturbance information applicable to at least a part (204) of the Earth's surface (202). The ionospheric disturbance information is transmitted (s50, s70) in the form of at least one message comprising reference point ionospheric disturbance levels, i.e. levels associated with a plurality of reference points (216) on a reference ionospheric shell (214). On the receiver side, an estimator is operated (s60), and, for each of at least one NSS signal observed by a NSS receiver, the reference point ionospheric disturbance levels are used to decide whether to adopt some ionospheric disturbance mitigation measures in the context of estimating parameters useful to determine a position. The ionospheric disturbance information may for example comprise ionospheric amplitude scintillation information, ionospheric phase scintillation information, and/or ionospheric gradient information. Systems, vehicles, and computer programs are also disclosed.

Fig. 1

EP 4 697 069 A1

**Description**

**[Field of technology]**

The invention relates to methods, systems, devices, and computer programs for generating, transmitting, and using information related to the ionosphere in the context of (e.g., positioning) methods and systems making use of navigation satellite systems (NSS) signals. The fields of application of the methods, systems, devices, and computer programs include, but are not limited to, geospatial positioning, navigation, highly automated driving, autonomous driving, mapmaking, land surveying, civil engineering, construction, agriculture, disaster prevention and relief, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), the Indian Regional Navigational Satellite System (IRNSS, also referred to as NAVIC) (systems in use or in development), and are also intended to be inclusive of MEO-PNT and LEO-PNT navigation satellite systems. An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.

An overview of GPS, GLONASS, and Galileo is provided for example in sections 9, 10, and 11 of ref. [1] (a list of references is provided at the end of the present description, after a list of abbreviations and acronyms).

Positioning using NSS signal codes provides a limited accuracy, notably due to the distortion the code is subject to upon transmission through the atmosphere. For instance, the GPS includes the transmission of a coarse/acquisition (C/A) code modulated on a carrier signal at about 1575 MHz, the so-called L1 frequency. This code is freely available to the public, whereas the Precise (P) code is reserved for military applications. The accuracy of code-based positioning using the GPS C/A code is approximately 15 meters, when taking into account both the electronic uncertainty associated with the detection of the C/A code (electronic detection of the time of arrival of the pseudorandom code) and other errors including those caused by ionospheric and tropospheric effects, ephemeris errors, satellite clock errors, and multipath propagation.

The carrier signals transmitted by the NSS satellites can also be tracked to provide an alternative, or complementary way of determining the range, or change in range between the receiver and satellite. Carrier phase measurements from multiple NSS satellites facilitate estimation of the position of the NSS receiver.

The approach based on carrier phase measurements has the potential to provide much greater position precision, i.e. down to centimetre-level or even millimetre-level precision, compared to the code-based approach. The reason may be intuitively understood as follows. The code, such as the GPS C/A code on the L1 band, has an effective chip length that is much longer than one cycle of the carrier on which the code is modulated. Code and carrier phase measurements have precisions that are roughly the same fraction of the respective chip length or wavelength. The position resolution may therefore be viewed as greater for carrier phase detection than for code detection.

However, in the process of estimating the position based on carrier phase measurements, the carrier phases are ambiguous by an unknown number of cycles. The fractional phase of a received signal can be determined but the additional number of cycles required to determine the satellite's range cannot be directly determined in an unambiguous manner. This is the so-called "integer ambiguity problem", "integer ambiguity resolution problem", or "phase ambiguity resolution problem", which may be solved to yield the so-called fixed-ambiguity solution (sometimes referred to simply as the fixed solution).

GNSS observation equations for code observations and for carrier phase observations are for example provided in ref. [1], section 5. An introduction to the GNSS integer ambiguity resolution problem, and its conventional solutions, is provided in ref. [1], section 7.2. The person skilled in the art will recognize that the same or similar principles apply to RNSS.

GNSS observables therefore include the carrier phase and code (pseudorange), the former being generally much more precise than the latter, but ambiguous. These observables enable a user to obtain the geometric distance from the receiver to the satellite. With known satellite position and satellite clock error, the receiver position and receiver clock error can be estimated.

As mentioned above, the GPS includes the transmission of a C/A code using a carrier signal at about 1575 MHz, the so-called L1 frequency. More precisely, each GPS satellite transmits continuously using two radio frequencies in the L-band, referred to as L1 and L2, at respective frequencies of 1575.42 MHz and 1227.60 MHz. With the ongoing modernization of the GPS, signals on a third frequency, known as L5, are becoming available. Among the two signals transmitted on L1, one is for civil users and the other is for users authorized by the United States Department of Defense (DoD). Signals are also transmitted on L2, for civil users and DoD-authorized users. Each GPS signal at the L1 and L2 frequencies is modulated with a pseudo-random noise (PRN) code, and optionally with satellite navigation data. When GNSS satellites broadcast signals that do not contain navigation data, these signals are sometimes termed "pilot" signals, or "data-free" signals. In relation to GPS, two different PRN codes are transmitted by each satellite: a C/A code and a P code which is encrypted for DoD-authorized users to become a Y code. Each C/A code is a unique sequence of 1023 bits, which is repeated each millisecond. Other NSS systems also have satellites transmitting multiple signals on multiple carrier frequencies.

In order to reduce the convergence time of a positioning solution, it is known from ref. [2], p. 4, lines 26-30, to provide, to NSS receivers and/or to servers in charge of processing observations from NSS receiver(s), regionally-applicable correction information (i.e., regional correction information) representing regional ionosphere correction models per satellite. This may for example be used in precise point positioning (PPP) applications. The regional correction information may comprise information for correcting observations useful for estimating phase ambiguities and/or a position of the NSS receiver(s) (ibid., p. 5, lines 41-42), and, in particular, it may represent, per NSS satellite, the ionospheric delay in the region of interest (ibid., p. 6, lines 30-34). The ionospheric delay (also called ionosphere delay) represents an actual delay in the case of the code observations, whereas the carrier phase observations are advanced by the same amount (ibid., p. 10, lines 25-47).

There is a constant need for improving the implementation of positioning or similar systems making use of NSS observables, in particular considering the effects the physical properties of the Earth's atmosphere may have on radio waves and therefore on NSS signals.

**[Summary]**

The present invention aims at addressing the above-mentioned need. The invention includes methods, systems, computer programs, computer program products, and storage mediums as defined in the independent claims. Particular embodiments are defined in the dependent claims.

In a first embodiment, a method aims at providing ionospheric disturbance information applicable to at least a part of the Earth's surface, the at least a part of the Earth's surface being hereinafter referred to as "surface of interest". The ionospheric disturbance information is suitable for use by at least one of (i) a NSS receiver and (ii) a processing entity capable of receiving data from the NSS receiver, in contributing to computing a positioning solution based on NSS signals received by the NSS receiver. The method comprises the following steps and/or operations. For each of a plurality of satellite-station links, an ionospheric disturbance level, hereinafter referred to as "link-specific ionospheric disturbance level" (LSIDL), is computed, wherein each satellite-station link is a link between a NSS satellite and a point, hereinafter referred to as "station", on or near the surface of the Earth. For each LSIDL, the LSIDL is associated with an ionospheric pierce point (IPP) being at an intersection of a reference ionospheric shell and the satellite-station link for which the LSIDL has been computed. For each of a plurality of reference points on the reference ionospheric shell, the following is performed: (i) identifying, among the IPPs, any IPP fulfilling a proximity criterion for, i.e. with respect to, the reference point, such IPP being hereinafter referred to as "proximate ionospheric pierce point" or simply "proximate IPP"; and (ii) computing a measure of the LSIDLs associated with the proximate IPP or IPPs, the measure being hereinafter referred to as "reference point ionospheric disturbance level". At least one message comprising ionospheric disturbance information being or comprising the reference point ionospheric disturbance levels is then sent to a plurality of devices, each of the plurality of devices being a NSS receiver and/or a processing entity capable of receiving data from a NSS receiver.

The method of the first embodiment aims at allowing the generation and efficient transmission (e.g., by broadcasting) of specific ionospheric disturbance information that NSS receivers (and/or processing entities capable of receiving data from NSS receivers) may use to mitigate the effect of ionospheric disturbances on, for example, a positioning solution. This is particularly useful because ionospheric scintillation and other ionospheric disturbances can severely degrade the quality of NSS signals received by a NSS receiver, reduce the accuracy of ionospheric models, limit the predictability of the ionospheric delay based on previous observations, and thus compromise, for example, positioning performance.

In a second embodiment, a method is carried out by a NSS receiver and/or a processing entity capable of receiving data from the NSS receiver, for estimating parameters useful to, i.e. suitable to, determine a position. The NSS receiver observes NSS signals from each of a plurality of NSS satellites. The method comprises the following steps and/or operations. At least one estimation process is operated, each estimation process being hereinafter referred to as "NSS estimator" and the at least one NSS estimator being hereinafter referred to as "NSS estimator set", wherein each NSS estimator uses state variables and computes values of its state variables based on at least one of: NSS signals observed by the NSS receiver, and information derived from the NSS signals. For each of a plurality of reference points on a reference ionospheric shell above a surface of interest, ionospheric disturbance information associated with the reference point is obtained, the ionospheric disturbance information being hereinafter referred to as "reference point ionospheric disturbance level" and the surface of interest being at least a part of the Earth's surface. For each of at least one NSS signal observed by the NSS receiver, the following is performed. An IPP being at an intersection of the reference ionospheric shell and a link between the NSS receiver and a NSS satellite from which the NSS signal originates is determined. Among the plurality of reference points, any reference point fulfilling a proximity criterion for, i.e. with respect to, the IPP is identified, any such reference point being hereinafter referred to as "proximate reference point". An ionospheric disturbance level associated with the IPP is determined based on the reference point ionospheric disturbance level or levels of the proximate reference point or points. It is then determined that the ionospheric disturbance level associated with the IPP exceeds a threshold. For at least one NSS estimator of the NSS estimator set, a first operation and/or a second operation is performed. The first operation comprises: (a) adapting an ionospheric noise model of the NSS estimator based on the ionospheric disturbance information, or (b) switching the NSS estimator to ionosphere-free observations. The second operation comprises: (c) adapting an observation noise model of the NSS estimator based on the ionospheric disturbance information.

In a third embodiment, a method is also carried out by a NSS receiver and/or a processing entity capable of receiving data from the NSS receiver, for estimating parameters useful to, i.e. suitable to, determine a position. The NSS receiver also observes NSS signals from each of a plurality of NSS satellites. The method comprises the same steps and/or operations as the above-described method of the second embodiment, except that, after determining that the ionospheric disturbance level associated with the IPP exceeds a threshold, the first operation and/or a second operation are not or not necessarily performed, and, for at least one NSS estimator of the NSS estimator set, one of the following is performed: (i) refraining from using the NSS signal in the NSS estimator, (ii) refraining from using a first type of observable of the NSS signal in the NSS estimator while still using a second type of observable of the NSS signal in the NSS estimator, and (iii) refraining from using a first group of at least one type of observable of the NSS signal in the NSS estimator while still using a second group of at least one type of observable of the NSS signal in the NSS estimator.

The methods of the second and third embodiments aim at allowing the efficient transmission, reception, and use of ionospheric disturbance information by NSS receivers, or by processing entities capable of receiving data from NSS receivers, to mitigate the effect of ionospheric disturbances on, for example, a positioning solution.

In one embodiment, a system is configured for carrying out the above-described method of the first embodiment.

In one embodiment, a system comprises an NSS receiver and/or a processing entity capable of receiving data from the NSS receiver, the system being for estimating parameters useful to, i.e. suitable to, determine a position, the NSS receiver being configured for observing NSS signals from each of a plurality of NSS satellites, and the system being configured for carrying out the above-described method of the second embodiment, the third embodiment, or both. In one embodiment, a vehicle comprises such a system.

In some embodiments, computer programs, computer program products and storage media for storing such computer programs are provided. Such computer programs comprise computer-executable instructions configured for carrying out, when executed on a computer such as one embedded in, or otherwise part of, a NSS receiver or in another apparatus such as a processing entity capable of receiving data from the NSS receiver, or when executed on a set of computers such as a set of computers embedded in, or otherwise part of, a set of apparatuses or devices, the above-described methods.

**[Brief description of the drawings]**

Embodiments of the present invention shall now be described in conjunction with the appended drawings in which:

Fig. 1 is a flowchart of a method for generating and sending ionospheric disturbance information in one embodiment of the invention;
Fig. 2 is a schematic diagram illustrating some operations of a method for generating and sending ionospheric disturbance information in one embodiment of the invention;
Fig. 3a is a schematic diagram illustrating an orthogonal grid of reference points and a plurality of IPPs in one embodiment of the invention;
Fig. 3b is a schematic diagram illustrating an orthogonal grid of reference points and a plurality of IPPs in one embodiment of the invention, wherein, furthermore, proximate IPPs of two reference points are identified;
Fig. 4 is a schematic diagram illustrating an isometric grid of reference points in one embodiment of the invention;
Fig. 5 is a schematic diagram illustrating a hexagonal grid of reference points in one embodiment of the invention;
Fig. 6 is a flowchart of a method in one embodiment of the invention, involving the computation of link-specific ionospheric amplitude scintillation levels;
Fig. 7 is a flowchart of a method in one embodiment of the invention, involving the computation of link-specific ionospheric phase scintillation levels;
Fig. 8 is a flowchart of a method in one embodiment of the invention, involving the computation of link-specific ionospheric gradient levels;

Figs. 9a to 9m are flowcharts of methods in thirteen embodiments of the invention, in which mitigation measures are taken after determining that ionospheric disturbance information indicates an ionospheric disturbance level exceeding a threshold;

Figs. 10a and 10b are flowcharts of methods in two embodiments of the invention, in each of which mitigation measures are taken for two estimators;

Fig. 11a is a schematic diagram illustrating an orthogonal grid of reference points and an IPP in one embodiment of the invention, wherein, furthermore, one proximate reference point for the IPP is identified;

Fig. 11b is a schematic diagram illustrating an orthogonal grid of reference points and an IPP in one embodiment of the invention, wherein, furthermore, four proximate reference points for the IPP are identified;

Fig. 12 schematically illustrates the computation of a time-step spatial ionospheric gradient in one embodiment of the invention;

Fig. 13 schematically illustrates a system in one embodiment of the invention, for generating and sending ionospheric disturbance information;

Fig. 14 schematically illustrates a system in one embodiment of the invention, for receiving and using ionospheric disturbance information;

Fig. 15 schematically illustrates a system in another embodiment of the invention, for receiving and using ionospheric disturbance information;

Fig. 16 illustrates an amplitude scintillation example for the L1CA signal of GPS21 satellite; and

Fig. 17 illustrates a phase scintillation example for GPS21 satellite based on L1CA-L2PE signals.

**[Detailed description]**

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments. In addition, as mentioned above in the "Background" section, the term "NSS" is here intended to cover different types of embodiments, and those may also include embodiments involving MEO-PNT and/or LEO-PNT navigation satellite systems.

In the art, the term "observables" is often used to refer to structures of an NSS signal from which observations or measurements can be made (PRN-code, carrier phase, Doppler, SNR) (see e.g. ref. [3]: "The word *observable* is used throughout GPS literature to indicate the signals whose measurement yields the range or distance between the satellite and the receiver."). However, in common usage, and in the present document, the term "observable" (also referred to as "NSS observable") is also interchangeably used to refer to the observation itself, such that, for example, "code observable" has the same meaning as "code observation", and "carrier phase observable" has the same meaning as "carrier phase observation". Further, when the present document describes that an NSS signal is observed, this means that at least one observation (measurement) of at least one observable of the NSS signal is made.

When the term "real-time" is used in the present document, it means that an action is performed (e.g., data is received, processed, or transmitted, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

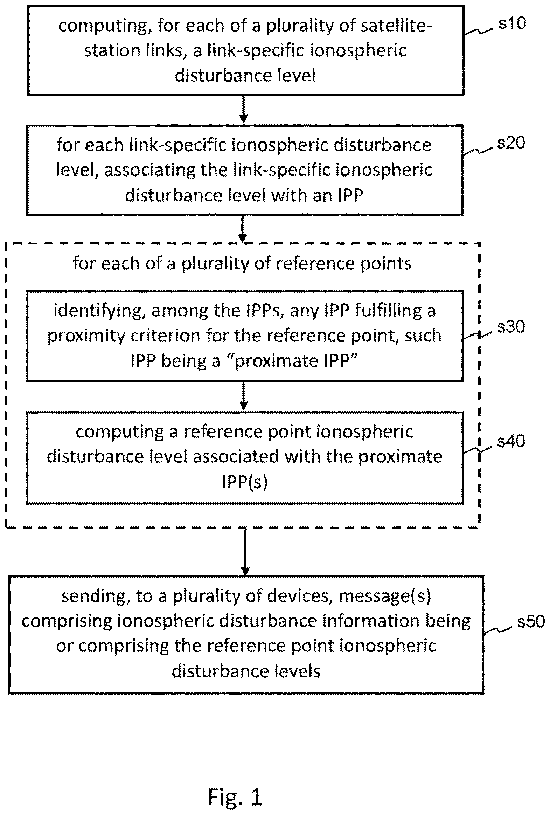

Fig. 1 is a flowchart of a method in one embodiment of the invention, for generating and providing, i.e., transmitting, ionospheric disturbance information applicable to a surface of interest. The surface of interest is at least a part of the Earth's surface, i.e. either a part of the Earth's surface (the target region) or the entire Earth's surface. The ionospheric disturbance information is suitable for use by a NSS receiver and/or a processing entity capable of receiving data from the NSS receiver, in contributing to computing a positioning solution based on NSS signals received by, i.e., observed by, the NSS receiver from a plurality of NSS satellites over multiple epochs. The method illustrated in Fig. 1 may be carried out by one or a plurality of computers and/or servers, or more generally by any number of processing entities implemented in hardware, firmware, software, and/or using any form of machine-readable instructions. In one embodiment, the method is carried out partially or entirely in the cloud, i.e. by any number of processing entities in the cloud.

Ionospheric disturbance information means here information that at least represents transient irregularities or disturbances (also called "perturbations" or "anomalies") in the ionosphere and/or an amount or level (also referred to as "severity") of such irregularities or disturbances in the ionosphere at a given point in time (or during a given period). These irregularities or disturbances are susceptible to affect electromagnetic signals -in the radio frequency range- passing through the ionosphere for specific frequencies, beyond the usual ionospheric effects on code and phase observations in a region of interest (these usual effects are described for example in ref. [2], p. 10, lines 21-47; as mentioned above). These transient irregularities or disturbances encompass, but are not necessarily limited to, ionospheric scintillation and ionospheric gradient changes such as ionospheric gradient changes caused by travelling ionospheric disturbances (TID), and the ionospheric disturbance information may represent a level of ionospheric scintillation, a level of ionospheric gradient changes, a level of a certain type of ionospheric scintillation or ionospheric gradient changes, or an aggregated level of both scintillation and ionospheric gradient changes. These transient irregularities or disturbances correspond to dynamic changes in time and/or space in the properties of the ionosphere, whereas in contrast the above-referred usual ionospheric effects affecting code and phase observations are related to the slowly varying large-scale changes of the ionosphere.

Ionospheric scintillations are rapid fluctuations in the amplitude and phase of radio signals due to small scale irregularities in the ionosphere. They can lead to complete loss of signal tracking or loss of carrier phase lock (cycle slips). Ionospheric scintillation is a strong function of local time, season, geomagnetic activity and the solar cycle. Typically, it is a post-sunset phenomenon occurring between 7PM and 1AM local time in equatorial regions. It can, however, occur at any time in polar regions. In some embodiments, amplitude scintillations are rapid fluctuations in amplitude of radio signals in that the scintillations may for example be characterized by an order of magnitude of 10 dBHz/s rates of change as measured in carrier-to-noise-density ratio ($C/N_0$) rates of change. In some embodiments, phase scintillations are rapid fluctuations in phase of radio signals in that the scintillations may for example be characterized by an order of magnitude of a couple of L1 cycles/s as measured in the GPS L1 ionospheric delay rate of change.

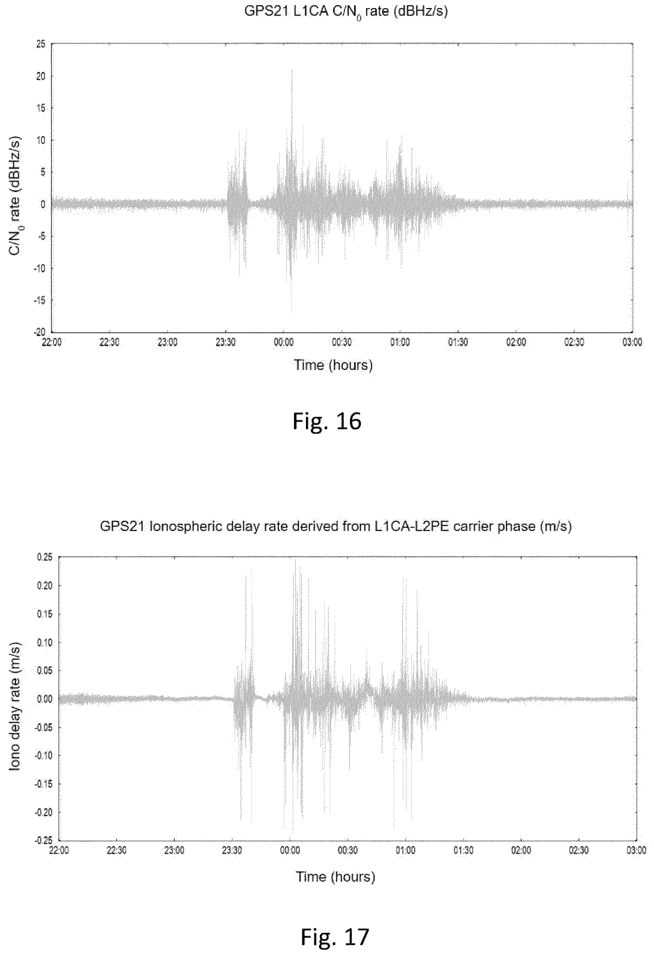

Fig. 16 illustrates an amplitude scintillation example for the L1CA signal of GPS21 satellite, observed over Rio Verde, Brazil. Specifically, Fig. 16 shows the carrier-to-noise-density ratio (C/No) rate of change (dBHz/s) overtime, from 2016-10-14 22:00 to 2016-10-15 03:00 UTC, which corresponds to 7 PM to 12 PM BRT. Fig. 17 illustrates a phase scintillation example for GPS21 satellite based on L1 C/AL2 PE signals, also observed over Rio Verde, Brazil. Specifically, Fig. 17 shows, over time (also from 2016-10-14 22:00 to 2016-10-15 03:00 UTC, i.e. from 7 PM to 12 PM BRT), the ionospheric delay rate of change (m/s) computed from the L1CA and L2PE carrier phase observations (regarding how the ionospheric delay rate of change may be computed, see also Equation 5 below). The GPS L1CA signal (also referred to as "L1 C/A" signal) is the GPS coarse/acquisition (C/A) code signal transmitted on the GPS L1 frequency band (1575.42 MHz). For older GPS satellites, which do not transmit the modernized GPS L2 C code signal on the GPS L2 frequency band (1227.6 MHz), a codeless or semi-codeless technique may be used to track the encrypted GPS P code signal (see refs. [22] and [23]), here referred to as GPS L2PE (also referred to as "L2 PE").

The maximum intensity and frequency of ionospheric scintillation generally occurs at the peak of the 11-year solar cycle and in two bands surrounding the magnetic equator. Its frequency also tends to increase around the equinoxes (i.e., March and September). At the time of writing, the next solar maximum is predicted to occur in July 2025.

It has been observed that, over Brazil, in an equatorial region, ionospheric scintillation typically impacts a subset of the NSS satellites, it is characterized by a high ionospheric delay rate of change, and it causes significant $C/N_0$ fades and a significant number of cycle slips. It has been further observed that, over Canada, in a polar region, ionospheric scintillation typically impacts most (if not all) satellites simultaneously, it is characterized by a very high ionospheric delay rate of change, and it causes no significant $C/N_0$ fading and relatively few cycle slips.

More information regarding the physical phenomenon of ionospheric scintillation can be found for example in refs. [4] to [8]. Ref. [4] relates to monitoring ionospheric irregularities on a global scale using the GPS network. Ref. [5] relates to deriving a total electron content (TEC) rate using GNSS carrier phase measurements to characterize dynamic changes of the ionosphere (i.e., ionospheric disturbance) in a low-latitude region, i.e. the Hong Kong region. It distinguishes between ionosphere quiet periods and ionosphere disturbance periods, also called "ionosphere active periods" (with typical TEC rates being three times larger than the TEC rates in ionosphere quiet periods). Ref. [6] relates to observing ionospheric irregularities at high latitudes using GPS measurements, and generation of maps of ionospheric irregularities (maps of the ionospheric fluctuation activity). Its introduction notably discusses the causes of ionospheric scintillation, how it can be characterized, and which indicators can be used to characterize it. Ref. [7] discusses the causes and nature of ionospheric scintillation and focuses on how scintillation can be measured, i.e. detected (sensed), with GNSS receivers. Ref. [8] relates to the derivation of a GNSS receiver-based amplitude scintillation index. In its introduction (see especially first and second paragraphs), ref. [8] divides the ionospheric effect on GNSS signals into a component having a benign effect, the usual ionospheric delay (see above discussion of ref. [2]), and a component causing disturbance, known as ionospheric scintillation, which in turn "can be classified into amplitude scintillation and phase scintillation".

Travelling ionospheric disturbances (TID) are short-term deviations from regular ionospheric climatology. Large-scale TIDs typically have periods between 30 minutes and 5 hours whereas medium-scale TIDs typically have periods between 10 to 30 minutes and small-scale TIDs typically have periods smaller or equal to 10 minutes. TIDs may develop from various sources such as geomagnetic storms, solar flares, eclipses, sunset, sunrise, hurricanes, tornadoes, volcanos, earthquakes, and rocket launches. They can be local, regional, and sometimes global, and they can occur at any latitude and at any time. TIDs induce irregular variations in the total electron content (TEC) leading to higher-than-expected ionospheric delay gradients (also called "ionospheric spatial gradients", "ionospheric spatial decorrelation", or simply "ionospheric gradients"), i.e. higher-than-expected (i.e., anomalous) spatial variations of the ionosphere delay. As an example, ref. [9], Fig. 1, third column, shows the effect of medium-scale TIDs on differenced ionospheric biases in the south-north ($\Delta I_{LAT}$) and west-east ($\Delta I_{LON}$) directions in the mid-latitude region of Central Europe. The term "higher-than-expected" means, in one embodiment, two or more orders of magnitude larger than during quiet periods. As an example, ref. [20] explains that, during one geomagnetic storm (large-scale TIDs), the authors observed a maximum increase in the ionospheric gradients almost three orders of magnitude greater than during quiet periods (specifically 980 mm/km vs 1 mm/km or 980 ppm vs 1 ppm). See also ref. [21] regarding the magnitude of ionospheric gradients observed during geomagnetic storms.

More information regarding the physical phenomena causing TIDs and ionospheric spatial gradients can be found for example in refs. [10] to [14]. Ref. [10] explains that an ionospheric spatial decorrelation is usually quantified using a spatial gradient parameter, which is an ionosphere TEC difference per unit distance of ionospheric pierce point (IPP), and ref. [10] "focuses on the relationship between the ionospheric spatial decorrelation and space weather indices". Ref. [11] notably shows, in its Fig. 1, a "worst-case" ionospheric spatial gradient "modeled as a wave front of a certain magnitude (...) moving with constant speed and direction", and it focuses on detecting ionospheric gradients in real-time. Ref. [12] studies ionospheric spatial gradients in Brazil and notably uses a time-step method to estimate the standard deviation of vertical ionospheric gradients ($\sigma_{vig}$). That method "groups a single satellite and a single receiver as a pair and obtains the spatial separation of interest by adjusting the time window of observation" (ref. [12], p. 392, right-hand col.). Ref. [13] also relates to using time-step gradients to detect ionospheric spatial decorrelations for Ground-Based Augmentation Systems (GBAS) at low latitudes, and it explains that ionospheric spatial decorrelations can be caused by plasma bubbles in the ionosphere. Ref. [14] relates to estimating ionospheric delay gradients in Indonesia for use in GBAS.

The term "providing" in "providing ionospheric disturbance information" (or the like) means here sending, for example from a reference station (also sometimes called "base receiver") or more generally from a reference station system, the ionospheric disturbance information, i.e. transmitting, broadcasting or otherwise making the ionospheric disturbance information available, to one or a plurality of NSS receivers and/or one or a plurality of processing entities capable of receiving data from one or some of the NSS receiver(s).

The surface of interest to which the ionospheric disturbance information is applicable is a part of the Earth's surface over which the ionospheric disturbance information is considered to be relevant, or is the entire Earth's surface.

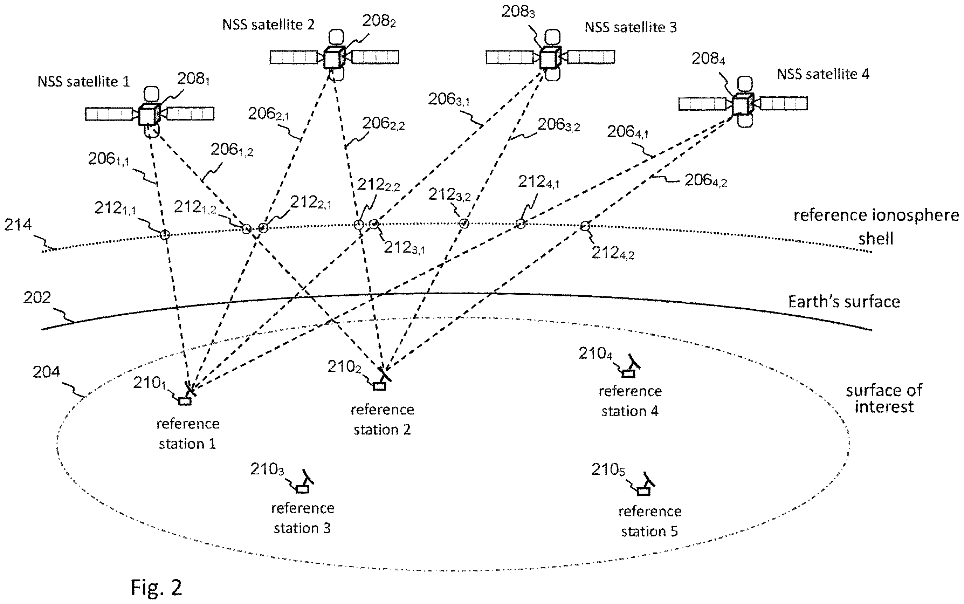

Returning to Fig. 1 (and now also referring to Fig. 2), in step s10, an ionospheric disturbance level, here referred to as "link-specific ionospheric disturbance level" (LSIDL), is computed, i.e. estimated, for each of a plurality of satellite-station links 206. A satellite-station link 206 is a link between a NSS satellite 208 and a point 210. A point 210 is here also referred to as "station" 210 or "reference station" 210, and is located on or near the surface of the Earth. By "link", it is here meant a path that a radio frequency signal may potentially take from a NSS satellite 208 to a reference station 210. By "on or near the surface of the Earth", it is here meant that a reference station 210 may be on the surface of the Earth or somewhere between the surface of the Earth and the ionosphere. That is, a reference station 210 needs not be precisely on the surface of the Earth but may for example be attached to or arranged on a structure itself resting on the surface of the Earth. Specifically, point 210 may be an antenna phase center (APC) of a reference station (the position of which may be precisely known).

In one embodiment, the method involves a plurality of NSS satellites 208 and a single reference station 210. In another embodiment, the method involves a plurality of NSS satellites 208 and a plurality of reference stations 210. The reference stations 210 may form a network of reference stations 210, and one reference station 210 may act as central processing entity. Alternatively, the network of reference stations 210 may be communicably connected to a central processing entity, such as a central processing server. In other words, the processing entity or entities configured for carrying out the method (as referred to above) is (or are) hosted in one of the reference stations 210 or, alternatively, the processing entity or entities configured for carrying out the method is (or are) communicably connected to the reference stations 210.

This is further schematically illustrated in Fig. 2, which depicts, as an example, four NSS satellites $208_1$, $208_2$, $208_3$, $208_4$ (also labelled NSS satellites 1 to 4 in Fig. 2), and five stations $210_1$, $210_2$, $210_3$, $210_4$, $210_5$ (also labelled reference stations 1 to 5 in Fig. 2). The five stations 210 are located on or near the Earth's surface, and may be located within the surface of interest 204, although some stations 210 may also be located outside the surface of interest 204 (not illustrated in Fig. 2). In the example of Fig. 2, all four satellites 208 are visible from each of the five stations 210 (this is not essential, however; i.e., in some embodiments, not all satellites 208 may be visible from all stations 210). Thus, 20 satellite-station links 206 are formed. To avoid overloading the diagram, only 8 satellite-station links $206_{1,1}$, $206_{1,2}$, $206_{2,1}$, $206_{2,2}$, $206_{3,1}$, $206_{3,2}$, $206_{4,1}$, $206_{4,2}$, are depicted in Fig. 2. The skilled person will recognize how to form the other satellite-station links.

In one embodiment, an LSIDL computed for a satellite-station link 206 comprises an ionospheric scintillation level and/or an ionospheric gradient level affecting the satellite-station link 206. An ionospheric scintillation level may comprise information that at least represents estimated ionospheric scintillation properties or an estimated amount (also referred to as "severity") of ionospheric scintillation in the ionosphere at a given point in time or during a given period, and affecting the satellite-station link 206 under consideration. An ionospheric gradient level may comprise information that at least represents estimated spatial variations of the ionosphere delay or an estimated amount (also referred to as "severity") of spatial variations in the ionosphere at a given point in time or during a given period, and affecting the satellite-station link 206 under consideration. The LSIDL may be computed and provided specifically for a frequency or a frequency band.

In other words, an LSIDL represents an estimated level of ionospheric disturbance affecting a satellite-station link 206 between a satellite 208 and a reference station 210 at a given point in time or during a given period. In one embodiment, a satellite-station link 206 between a satellite 208 and a reference station 210 follows or substantially follows the line of sight between the two.

In one embodiment, computing s10 LSIDLs is based on signal-to-noise ratio (SNR) estimates and carrier phase observations of the reference station(s) 210. Specifically, in one embodiment, SNR estimates and carrier phase observations for at least two carrier frequencies are used. This may increase the reliability of the generated ionospheric disturbance information.

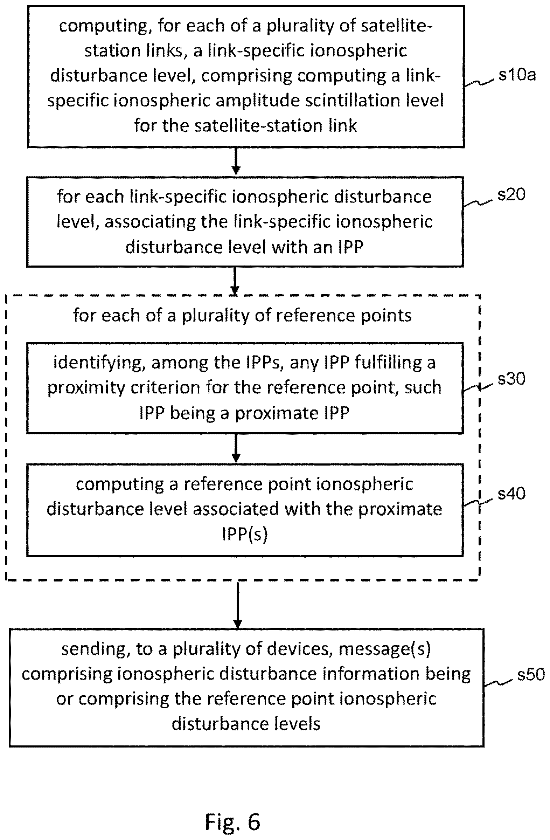

As SNR estimates and carrier phase observations are widely used GNSS observation types, this computation approach lends itself well to be used with a variety of reference stations, with a sufficient observation update rate, and generally without being limited to specific receiver types, brands, or firmware versions. SNR estimates and carrier phase observations may be sent from one or a plurality of reference stations 210 to a central processing entity in charge of performing operations s10 to s50. Computation operation s10 will be further described below with reference to Figs. 6 to 8.

In step s20, each LSIDL is associated with an ionospheric pierce point (IPP) 212 being at the intersection (i.e., at the geographical location of the intersection) of a given reference ionospheric shell 214 and the satellite-station link 206 for which the LSIDL has been computed. By "being at" the intersection of reference ionospheric shell 214 and satellite-station link 206, it is meant that IPP 212 is either precisely at the intersection or at a point that is close to the intersection, for example due to a rounding effect in the calculations. Reference ionospheric shell 214 is an imaginary shell of infinitesimal thickness at an altitude of, for example, 300, 350, 400, or 450 km above the Earth's mean radius. Using a reference ionospheric shell with varying height, for example depending on the latitude, is also possible.

Referring again to Fig. 2, this means that IPP $212_{1,1}$ is associated with the LSIDL of satellite-station link $206_{1,1}$, IPP $212_{1,2}$ is associated with the LSIDL of satellite-station link $206_{1,2}$, IPP $212_{2,1}$ is associated with the LSIDL of satellite-station link $206_{2,1}$, etc. The associations may be represented and stored in a table structure, as illustrated for example in Table 1.

Table 1. Associations of LSIDLs with IPPs (excerpt).

| ionospheric pierce point (IPP) | link-specific ionospheric disturbance level (LSIDL) |
|---|---|
| IPP $212_{1,1}$ | $LSIDL_{1,1}$ |
| IPP $212_{1,2}$ | $LSIDL_{1,2}$ |
| IPP $212_{2,1}$ | $LSIDL_{2,1}$ |
| IPP $212_{2,2}$ | $LSIDL_{2,2}$ |
| ... | ... |

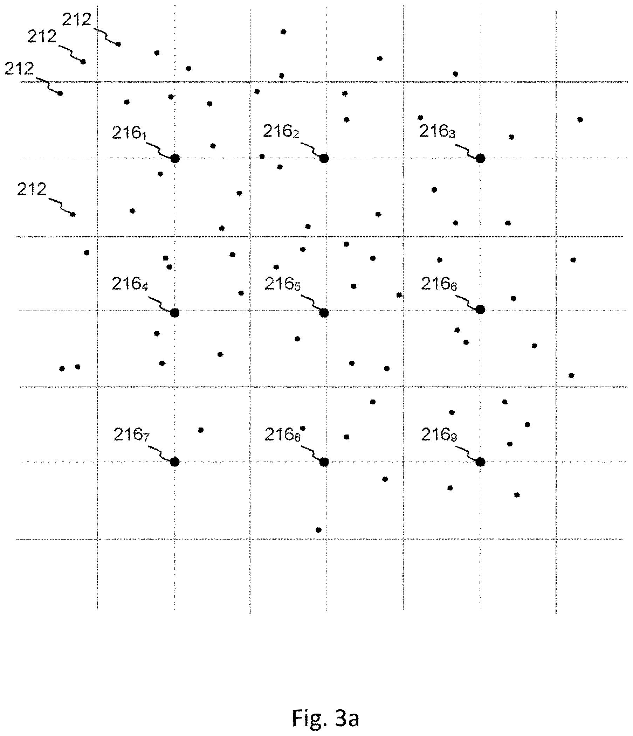

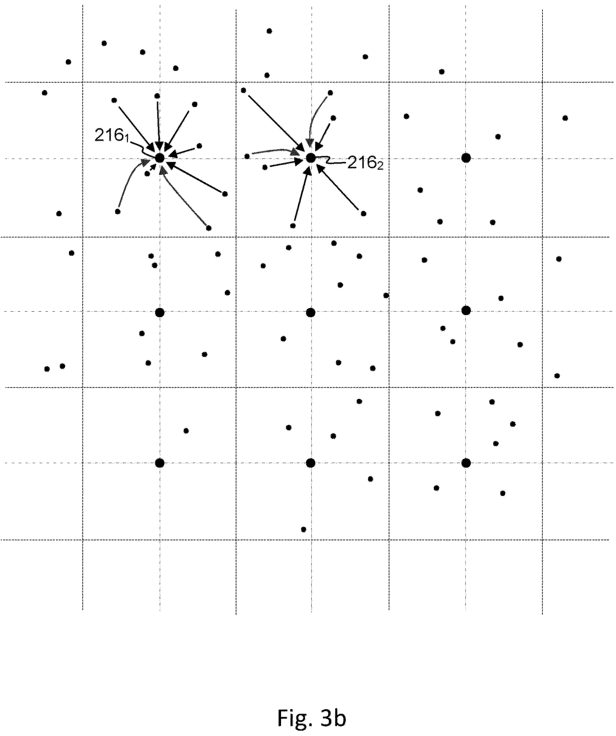

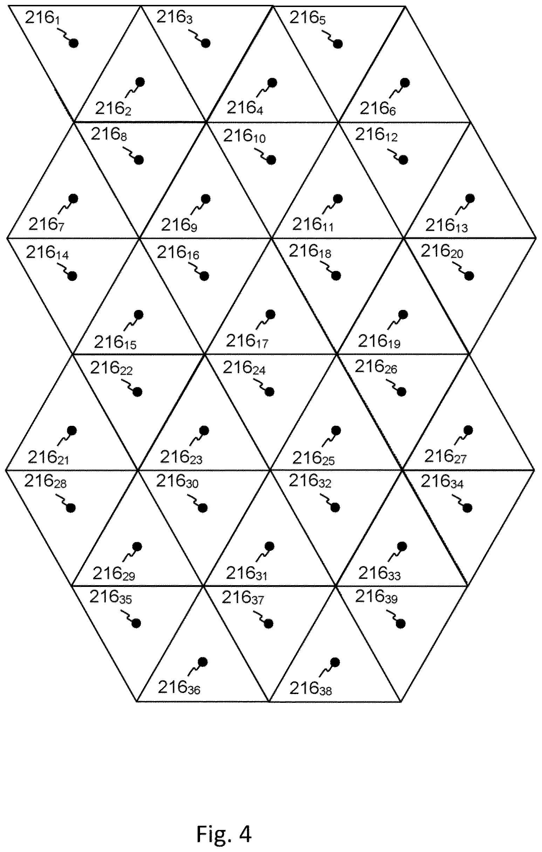

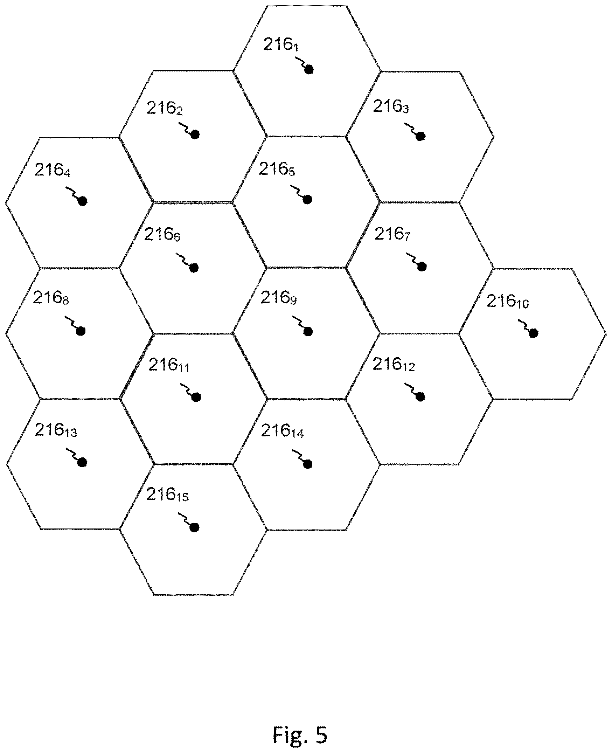

A plurality of reference points 216 on reference ionospheric shell 214 are then taken, i.e. defined, to cover the target region. The term "reference" in "reference point" means here that the point is used as reference for operations performed as part of the method. The plurality of reference points 216 may form a grid, such as a regular or irregular grid, i.e. a structured or unstructured grid. The grid may extend on the whole reference ionospheric shell 214 or on a part thereof. A regular grid may for example be an isometric grid (i.e., a grid of equilateral triangles on reference ionospheric shell 214, as schematically illustrated in Fig. 4), an orthogonal grid (i.e., a grid of squares on reference ionospheric shell 214, as schematically illustrated in Figs. 3a and 3b), a rectilinear grid (i.e., a grid of squares on reference ionospheric shell 214), or a hexagonal grid (i.e., a grid of hexagons on reference ionospheric shell 214, as schematically illustrated in Fig. 5). An irregular grid may for example be a grid that is denser in some regions of the ionospheric shell than in other regions. Other grids can alternatively be used.

For each reference point 216, any IPP 212 fulfilling a proximity criterion for, i.e. with respect to, the reference point 216 is identified s30 among the IPPs 212. Any such IPP 212 fulfilling the proximity criterion for, i.e. with respect to, the reference point 216 is here referred to as "proximate ionospheric pierce point" (or "proximate IPP") for that reference point 216. A proximity criterion is a distance-based condition, i.e. a condition based on a distance between an IPP 212 and a reference point 216 under consideration. The proximity criterion is fulfilled if the distance-based condition is fulfilled.

Fig. 3a schematically illustrates, purely as an example, a plurality of reference points $216_1$ to $216_9$ arranged on an orthogonal grid on reference ionospheric shell 214, as well as numerous smaller dots, which are IPPs 212 determined in step s20. The identified proximate IPPs 212 for a given reference point 216 may for example be, according to one proximity criterion, all IPPs 212 that are located within the square centred around the reference point 216. In Fig. 3a, reference point $216_1$ has eight (8) proximate IPPs; reference point $216_2$ has seven (7) proximate IPPs; reference point 216s has five (5) proximate IPPs; etc.

For each reference point 216, a measure of the LSIDLs associated with its proximate IPP(s) 212 is then computed s40. The measure is here referred to as "reference point ionospheric disturbance level". A reference point ionospheric disturbance level of a reference point 216 is a measure that serves to summarize the ionospheric disturbance level around reference point 216. Fig. 3b schematically illustrates the summarizing process, as an example, i.e. the LSIDLs of the 8 proximate IPPs of reference point $216_1$ are used to compute the reference point ionospheric disturbance level for reference point $216_1$ (hence, the 8 arrows pointing to reference point $216_1$ in Fig. 3b), the LSIDLs of the 7 proximate IPPs of reference point $216_2$ are used to compute the reference point ionospheric disturbance level for reference point $216_2$ (hence, the 7 arrows pointing to reference point $216_2$), etc.

In one embodiment, the reference point ionospheric disturbance level of a reference point 216 is or comprises at least one of: (i) a mean of the LSIDLs associated with the proximate IPPs 212 of the reference point 216; (ii) a weighted mean of the LSIDLs associated with the proximate IPPs 212 of the reference point 216; (iii) a maximum of the LSIDLs associated with the proximate IPPs 212 of the reference point 216; and (iv) a nth percentile of the LSIDLs associated with the proximate IPPs 212 of the reference point 216, wherein n may for example be equal to 68, 90, or another value that is suitable to exclude large, potentially bad, measurements, e.g. from a jammed or broken receiver. The invention is, however, not limited to the use of these summarizing measures for a reference point 216. Other types of summarizing measures may be used instead.

Regarding item (ii) ("a weighted mean of the LSIDLs associated with the proximate IPPs 212 of the reference point 216"), in one embodiment, the weight assigned to the LSIDL associated with a given proximate IPP 212 in the weighted mean depends, in some embodiments, on the distance between the proximate IPP 212 and the reference point 216, i.e. the closer the proximate IPP 212 is to the reference point 216, the greater the weight.

Regarding item (iv) ("a nth percentile of the LSIDLs associated with the proximate IPPs 212 of the reference point 216"), in one embodiment, n is equal to 68 if the number of proximate IPPs 212 of the reference point 216 is smaller than a threshold and n is equal to 90 if the number of proximate IPPs 212 of the reference point 216 is larger than or equal to a threshold. In one embodiment, the threshold is a number selected within the range from 10 to 100, for example 50.

In one embodiment, if the number of proximate IPPs 212 identified for a reference point 216 is smaller than a threshold, i.e. if there is no or too few proximate IPPs 212 for the reference point 216, the reference point 216 may be flagged as invalid in the sense that no reference point ionospheric disturbance value is assigned thereto.

In one embodiment, the minimum number of proximate IPPs 212, e.g. the number of IPPs 212 within a predefined radius of reference point 216, for the reference point 216 to be considered valid is a configurable value and may be set for example to 5. In one embodiment, if more than the minimum number of proximate IPPs 212 but less than 50 are identified, the reference point 216 may be assigned the 68th percentiles of the link-specific ionospheric amplitude scintillation level (as explained below with reference to equation 1) and link-specific ionospheric phase scintillation level (as explained below with reference to equation 2). If 50 or more proximate IPPs 212 are identified within the predefined radius of a reference point 216, the 90th percentiles of the RMS values may be assigned to that reference point 216.

Performing steps s30 and s40 for the plurality of reference points 216 may therefore result in constructing a collection or grid of ionospheric disturbance indices for a certain geographical region. As the ionospheric disturbance indices describe the distribution and strength of the ionospheric disturbance effects for an entire geographical region, such a model can be used by an unlimited number of rover receivers in that region.

In step s50, a message, or a set of messages, which comprises ionospheric disturbance information being or comprising the reference point ionospheric disturbance levels is then transmitted to a plurality of devices. The devices are NSS receivers and/or processing entities capable of receiving data from a NSS receiver. The transmission may for example be performed by broadcasting the message(s) from a reference station or reference station system to a NSS receiver or NSS receiver system in the region (i.e., surface of interest 204) to which the information is applicable.

The ionospheric disturbance levels associated with reference points 216 may be transmitted s50 by means of any suitable type of data structure, such as for example: (i) a data structure comprising an ionospheric disturbance level value associated with each point of a grid of known coordinates (i.e., known at the transmitter and receiver sides), (ii) a data structure comprising indices corresponding to a plurality of points of a grid of known coordinates and, for each of the points, an ionospheric disturbance level value, (iii) a data structure comprising a bitmask indicating for which point of a grid of known coordinates an ionospheric disturbance level value is provided and, for each of these points, an ionospheric disturbance level value, or (iv) a data structure comprising coordinates of a plurality of points and, for each of the points, an ionospheric disturbance level value. Examples (ii), (iii), and (iv) may be particularly suitable and efficient for transmitting ionospheric disturbance levels for selected regions of interest, such as during global-scale scintillation events affecting a number of regions. In this respect, see also description with reference to step s70 below.

The method illustrated in Fig. 1 therefore aims at allowing the generation and efficient transmission (e.g., by broadcasting) of specific ionospheric disturbance information associated with a plurality of reference points 216 on a reference ionospheric shell 214, which NSS receivers (and/or processing entities capable of receiving data from NSS receivers) may then use to mitigate the effect of ionospheric disturbances on, for example, a positioning solution. As mentioned above, this is particularly useful because ionospheric scintillation and other ionospheric disturbances can severely degrade the quality of NSS signals received by a NSS receiver, reduce the accuracy of ionospheric models, limit the predictability of the ionospheric delay based on previous observations, and thus compromise, for example, positioning performance. The provision of ionospheric disturbance information associated with reference points 216 on a reference ionospheric shell 214 may enable an efficient transmission in terms of payload and thus also in terms of bandwidth required for transmission, while at the same time providing means for NSS receivers (and/or processing entities capable of receiving data from NSS receivers), when applicable, to reduce the time required to obtain fixed carrier phase ambiguities, increase the precision of estimates in fixed navigation solutions, avoid skewed fixed navigation solutions due to wrong ambiguity fixing, avoid situations in which no navigation solutions can be obtained due to the inability to maintain carrier phase lock, and, in general, increase the productivity of positioning processes on the NSS receiver side.

Moreover, the fact that the ionospheric disturbance information is associated with reference points 216 on a reference ionospheric shell 214 allows that information to be used on the receiver side in an efficient and effective manner.

Indeed, as the input data, i.e., the ionospheric disturbance information, pertains to the reference ionospheric shell 214, where the actual disturbance can be regarded as occurring (ionosphere effects can be modelled as occurring in a thin ionosphere shell), the input data is well-suited in terms of processing efficiency. By "processing efficiency", it is here meant the efficiency in terms of resource requirements (how much processing resources the method requires), time (how quickly the method can be executed) and space complexity (how much memory the method requires). This in turn can save battery power.

This is also effective in that the ionospheric disturbance information associated with reference points 216 on reference ionospheric shell 214 forms a model describing the distribution of ionospheric disturbances. Transmitting this model to one or a plurality of rover receivers allow them to reliably identify satellite observations that are likely to be affected by scintillation or similar ionospheric disturbances and consequently allow them to react accordingly, e.g. by relaxing the ionospheric constraints in the position solution for those satellites and/or satellite observations.

Compared to the detection of scintillated GNSS satellites based on rover observations alone, the identification via a reference station 210 or via a network of reference stations 210 is generally more reliable because the reference station data is not, or to a much lower degree, degraded by signal obstructions causing tracking interruptions and diffraction as well as high frequency multipath effects.

On the receiver side, the ionospheric disturbance information associated with reference points 216 may also be applied to satellite links that are tracked by the rover receiver and not by the reference station (network), e.g. because a specific GNSS is not supported by the reference station (network) due to hardware or data transmission constraints.

The method also allows operation on the receiver side without receiving continuous, real-time input from a network of reference stations, since, in the method, ionospheric disturbance information may be transmitted at a relatively low frequency, e.g. once every 20 seconds. In other words, the method works well with PPP protocols in view of the low bandwidth used. On the other hand, using a relatively short update interval (e.g. 10 seconds) is desirable for the rover to get ionospheric disturbance information quickly during startup and during rapidly changing conditions.

Transmitting ionospheric disturbance information, associated with reference points 216 distributed on a reference ionospheric shell 214, from a reference station system to NSS receivers (or to processing entities capable of receiving data from a NSS receiver) may for example be carried out in the form of data packets, such as IP packets, through, for example, any one of, or a combination of, the Internet, a cellular network, and a suitable satellite link. The skilled person would, however, appreciate that other forms of wired or wireless transmission may be involved, such as, and without being limited to, wireless transmissions based on Bluetooth, Wi-Fi, or Li-Fi. In one embodiment, data is transmitted in real-time, i.e. as soon as available (in line with the above-mentioned definition of the term "real-time"). In one embodiment, the data is transmitted as a data stream in that messages containing said data are transmitted at regular or irregular intervals through the same communication medium or channel. The data may be encoded and/or encrypted prior to transmission, and it may transit through any number of intermediate computers or other processing entities.

The ionospheric disturbance information associated with reference points 216 on a reference ionospheric shell 214 may be transmitted periodically (i.e., at regular intervals) or aperiodically (i.e., at irregular intervals).

In one embodiment, the ionospheric disturbance information is sent (e.g. broadcast) every $u$ second(s), wherein $u$ is a number selected within the range from 0.1 to 180, preferably a number selected within the range from 10 to 600, such as for example 20 seconds (i.e., three transmissions per minute).

In one embodiment, the ionospheric disturbance information is sent (e.g. broadcast) at irregular intervals. For example, the frequency of transmission may be set to be higher during periods when the ionospheric scintillation is more likely to occur, e.g. during certain periods of time during the year (e.g., March, September) or during certain periods of the day (e.g., sunset).

In one embodiment, the frequency of transmission of ionospheric disturbance information is set dynamically, such as based on a history of detection of ionospheric disturbance and/or the severity of the detected events. For example, the frequency of transmission may be increased if ionospheric disturbance above a certain threshold has been detected for any of the reference points 216 in the recent past.

In one embodiment, the ionospheric disturbance information associated with reference points 216 is transmitted together with other correction data, for example as part of a correction stream (see e.g. refs. [2] and [15], and specifically for RTK correction formats, see e.g. refs. [18] and [19]). In one embodiment, the correction stream may be regionalized in that it applies to a region of the Earth's surface. The compactness of the ionospheric disturbance information associated with discrete reference points 216 lends itself well to broadcasting in a correction stream, which generally should be received as quickly as possible on the NSS receiver side.

In one embodiment, the ionospheric disturbance information associated with reference points 216 is transmitted over a one-way channel from the reference station system side to the NSS receiver side, i.e. not requiring a communication channel from the NSS receiver side to the reference station system side and therefore not requiring a transmitter at the NSS receiver. This differs from some virtual reference station (VRS) systems requiring a two-way communication channel because the rover (i.e., a form of NSS receiver) needs to communicate its approximate position to the network.

In one embodiment, the ionospheric disturbance information associated with reference points 216 comprises at least one of: ionospheric amplitude scintillation information, ionospheric phase scintillation information, and ionospheric gradient information. In one embodiment, the three types of ionospheric disturbance information are all generated and transmitted. For example, 3 bits may be used for transmitting an amplitude scintillation level per reference point, 3 bits for a phase scintillation level per reference point, and 3 bits for a gradient level per reference point.

In one embodiment, the density of reference points 216 on the reference ionospheric shell 214 is selected as a trade-off between efficiency of transmission, on the one hand (i.e., considering for example the size in memory of the resulting model and the bandwidth for the transmission of the model), and precision and accuracy of the ionospheric disturbance information, on the other hand. Another factor that may be used for determining the density of reference points 216 is the benefit of identifying a sufficient number of proximate IPPs 212 per reference point 216 in view of the density of the network of reference stations 210 and the selected definition of the proximity criterion.

In one embodiment, the density of reference points 216 is one reference point per $v$ square kilometres (either on reference ionospheric shell 214 or as a density of reference points 216 after projection on the Earth's surface), where $v$ is a number selected for example within the range from 100 to 200000.

As mentioned above, although the plurality of reference points 216 may form an orthogonal grid as schematically illustrated in Figs. 3a and 3b, other types of grids or tessellations of the region of interest of the reference ionospheric shell 214 may be used. For example, Fig. 4 schematically illustrates a plurality of reference points $216_1$ to $216_{39}$ arranged on an isometric grid on reference ionospheric shell 214. As another example, Fig. 5 schematically illustrates a plurality of reference points $216_1$ to $216_{15}$ arranged on a hexagonal grid.

In one embodiment, information pertaining to the proximity criterion or characteristics thereof is transmitted together with the ionospheric disturbance information. For example, a reference point 216 may be associated with a dedicated validity radius, which means that reference point 216 can be a proximate reference point for an IPP 218 only if the IPP falls within the validity radius around the reference point.

Fig. 6 is a flowchart of a method in one embodiment of the invention, which differs from Fig. 1 in that the ionospheric disturbance information specifically comprises ionospheric amplitude scintillation information.

Namely, computing s10, for each of a plurality of satellite-station links 206, a link-specific ionospheric disturbance level (LSIDL) comprises computing s10a a link-specific ionospheric amplitude scintillation level based on a channel carrier-to-noise-density ratio (C/N0) rate of change associated with the satellite-station link 206, for the purpose of ionospheric amplitude scintillation detection. After steps s20 and s30 (described with reference to Fig. 1), a measure of the link-specific ionospheric amplitude scintillation levels around each reference point 216 is computed s40, the measure being here referred to as "reference point amplitude scintillation level". In step s50, the ionospheric disturbance information, which is or comprises the reference point amplitude scintillation levels associated with reference points 216, is transmitted such as, as explained above, broadcast from a reference station system to NSS receivers or NSS receiver systems in the region to which the information is applicable.

In one embodiment, a reference point amplitude scintillation level for a reference point 216 is or comprises at least one of: (i) a mean of the link-specific ionospheric amplitude scintillation levels associated with the proximate IPPs 212 of the reference point 216; (ii) a weighted mean of the link-specific ionospheric amplitude scintillation levels associated with the proximate IPPs 212 of the reference point 216; (iii) a maximum of the link-specific ionospheric amplitude scintillation levels associated with the proximate IPPs 212 of the reference point 216; and (iv) a nth percentile of the link-specific ionospheric amplitude scintillation levels associated with the proximate IPPs 212 of the reference point 216, wherein n may for example be equal to 68, 90, or another value suitable to exclude large, potentially bad, measurements.

In one embodiment, NSS signals on more than one NSS frequency, here referred to as "NSS channel" (for example the GPS L1, L2, and L5 frequencies), are received from each of at least some of the satellites 208, here referred to as "multi-channel satellites", and, for each multi-channel satellite, computing the channel carrier-to-noise-density ratio (C/No) rate of change comprises: computing a carrier-to-noise-density ratio rate of change for each NSS channel, and computing a mean carrier-to-noise-density ratio rate of change over all computed carrier-to-noise-density ratio rate of changes.

In one embodiment, the channel carrier-to-noise-density ratio $(C/N_0)$ rate of change described with reference to Fig. 6 is a $m$ Hz mean channel carrier-to-noise-density ratio rate of change, wherein $m$ is a number selected within the range from 0.5 to 200, preferably a number selected within the range from 1 to 100, most preferably any one of 1, 2, 5, 10, 20, 50, and 100. In other words, a time series per link 206 is monitored for amplitude scintillation detection.

Computing s10, for a satellite-station link 206, a link-specific ionospheric amplitude scintillation level may, in one embodiment, comprise the following operations (i) to (iv): (i) computing, for each channel received from the satellite 208, a carrier-to-noise-density rate of change from an epoch $T-\Delta T$ to an epoch $T$, where $\Delta T$ is equal to $1/m$ second (regarding the value $m$, see previous paragraph); (ii) computing the $m$ Hz mean channel carrier-to-noise-density ratio rate of change by computing a mean of the carrier-to-noise-density rates of change over all channels; (iii) adding the $m$ Hz mean channel carrier-to-noise-density ratio rate of change to a $n$-second moving window; and (iv) computing the root mean square (RMS) of all values in the $n$-second moving window to obtain the link-specific ionospheric amplitude scintillation level. In that embodiment, $n$ is a number selected within the range from 10 to 240, preferably a number selected within the range from 30 to 120. As an example, $n$ may be equal to 60. Each satellite 208 provides signals on $L$ channels where $L$ is, in one embodiment, in the range 1 to 6 depending on the receiver. If $L$ equals 1, above-referred operation (ii) can be skipped, i.e. the m Hz mean channel carrier-to-noise-density ratio rate of change may be equal to the carrier-to-noise-density rate of change over the single channel.

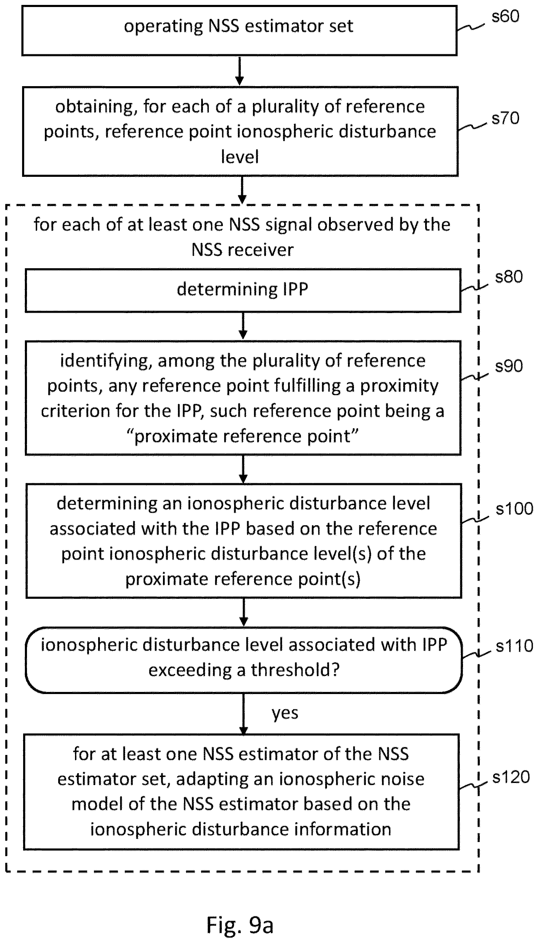

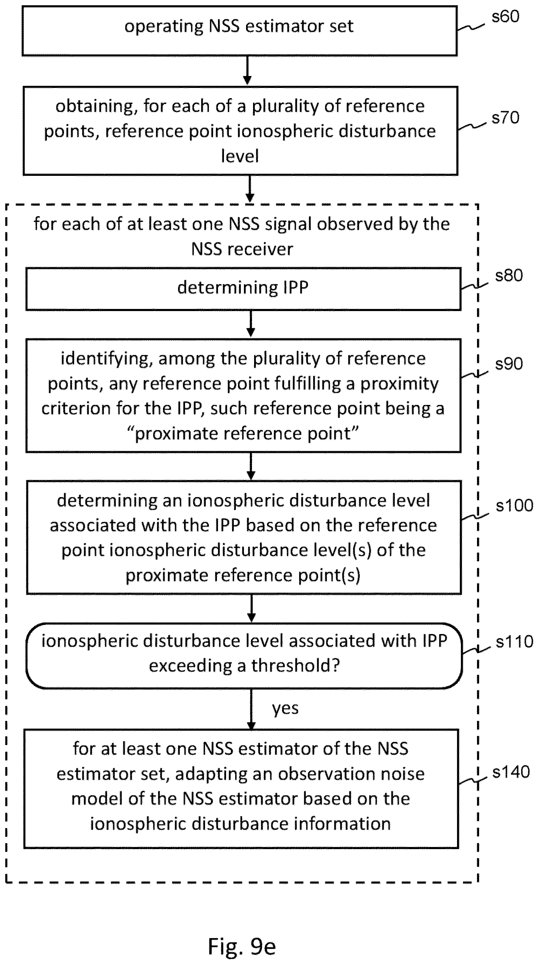

Further, the link-specific ionospheric amplitude scintillation level may, as part of step s10, be filtered so that the level quickly moves up with increasing RMS and slowly fades with decreasing RMS. Such a filtering is beneficial in that rising amplitude scintillation levels can be quickly detected and acted upon. This in turn is beneficial to protect the integrity of the NSS estimator(s) (also sometimes called "navigation filter"). On the other hand, slowly reducing (fading) the link-specific ionospheric amplitude scintillation level with decreasing RMS is beneficial given the likelihood of scintillation re-occurring on the previously affected link. Regarding the NSS estimator(s), see also step s60 described below (with reference to Figs. 9a to 9m).

Amplitude scintillation may for example be detected using the carrier-to-noise-density ratio $(C/N_0)$ which is generally available in addition to the code, carrier phase and Doppler measurements from each signal tracked by a NSS receiver. As shown in Fig. 16, amplitude scintillation causes rapid changes in the otherwise stable $C/N_0$ rate of change.

In one embodiment, the link-specific ionospheric amplitude scintillation level is the RMS of values contained in a 60-second moving window consisting of the mean satellite channel $C/N_0$ rates of change computed at 1-second intervals. For example, (a) for each satellite channel, the $C/N_0$ rate of change is computed using the $C/N_0$ observations at times $T-\Delta T$ and $T$ where $\Delta T$ = 1 second; (b) the mean $C/N_0$ rate of change (over all satellite channels received from the satellite under consideration) is computed from (a); (c) the mean $C/N_0$ rate of change from (b) is added to the 60-second moving window; (d) the amplitude scintillation level is computed from the RMS of the values contained in the moving window; and (e) the amplitude scintillation level from (d) may be filtered so that it quickly adapts to rising amplitude scintillation levels and slowly fades for decreasing amplitude scintillation levels.

In other words, to compute the amplitude scintillation level for a link 206 (i.e., the above-referred link-specific ionospheric amplitude scintillation level), the $C/N_0$ rates of change for all available signals from the satellite (i.e., for each satellite channel) may be computed at 1-second intervals (i.e., using the $C/N_0$ observations at times $T-\Delta T$ and $T$ where $\Delta T$ = 1 second). The mean of these $C/N_0$ rates may be computed and may then be added to a 60-second moving window, and the RMS of the $C/N_0$ rates in the moving window may be used to determine the amplitude scintillation level for the link 206. Further, a filter may be applied to the RMS values such that the amplitude scintillation level adapts quickly to increasing RMS values and fades slowly for decreasing RMS values, for example following:

$$\boldsymbol{\beta}(t_n) = \boldsymbol{\beta}(t_{n-1}) + (\mathbf{RMS}(t_n) - \boldsymbol{\beta}(t_{n-1})) \times \mathbf{K} \qquad \text{(Equation 1)}$$

where

$\beta(t_n)$      is the amplitude scintillation level at $t_n$ (dBHz/s)

$\beta(t_{n-1})$      is the amplitude scintillation level at $t_{n-1}$ (dBHz/s) at to, $\boldsymbol{\beta(t_0)} = \mathbf{RMS(t_0)}$

$\mathbf{RMS}(t_n)$      is the moving window RMS at $t_n$ (dBHz/s)

$\mathbf{K}$      is the filter gain = 1.000 when $\mathbf{RMS}(t_n) > \beta(t_{n-1})$ 0.003 when $\mathbf{RMS}(t_n) <= \beta(t_{n-1})$.

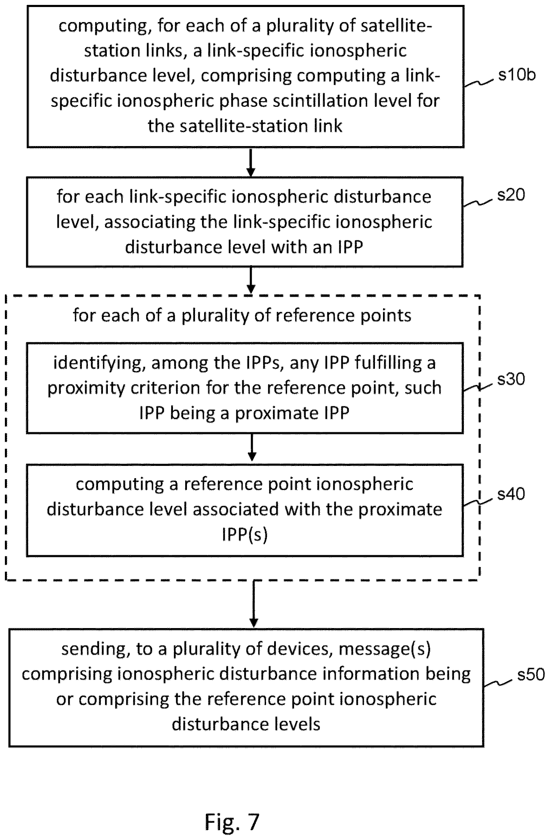

Fig. 7 is a flowchart of a method in one embodiment of the invention, which differs from Fig. 1 in that the ionospheric disturbance information specifically comprises ionospheric phase scintillation information.

Namely, computing s10, for each of a plurality of satellite-station links 206, a LSIDL comprises computing s10b a link-specific ionospheric phase scintillation level based on an ionospheric delay, geometry-free rate of change associated with the satellite-station link 206, for the purpose of ionospheric phase scintillation detection. The ionospheric delay, geometry-free rate of change is computed based on two different carrier frequencies, i.e. on a channel pair of carrier frequencies. The two carrier frequencies preferably have a difference of more than 200 MHz. After steps s20 and s30 (described above with reference to Fig. 1), a measure of the link-specific ionospheric phase scintillation levels around each reference point 216 is computed s40, the measure being here referred to as "reference point phase scintillation level". In step s50, the ionospheric disturbance information, which is or comprises the reference point phase scintillation levels associated with reference points 216, is transmitted such as, as explained above, broadcast from a reference station system to NSS receivers or NSS receiver systems in the region to which the information is applicable.

In one embodiment, a reference point phase scintillation level for a reference point 216 is or comprises at least one of: (i) a mean of the link-specific ionospheric phase scintillation levels associated with the proximate IPPs 212 of reference point 216; (ii) a weighted mean of the link-specific ionospheric phase scintillation levels associated with the proximate IPPs 212 of reference point 216; (iii) a maximum of the link-specific ionospheric phase scintillation levels associated with the proximate IPPs 212 of reference point 216; and (iv) a nth percentile of the link-specific ionospheric phase scintillation levels associated with the proximate IPPs 212 of reference point 216, wherein, as mentioned above, n may for example be equal to 68, 90, or another value suitable to exclude large, potentially bad, measurements.

In one embodiment, NSS signals on more than two carrier frequencies (for example the GPS L1, L2, and L5 frequencies), here referred to as "NSS channel", are received from each of at least some of the satellites, these satellites being here referred to as "three-or-more-channel satellites" and, for each three-or-more-channel satellite, computing the ionospheric delay, geometry-free rate of change associated with the satellite-station link 206 comprises: computing ionospheric delay, geometry-free rate of change for each NSS channel pair, and computing a mean ionospheric delay, geometry-free rate of change over all computed ionospheric delay rate of changes. In other words, if there are only two channels for a satellite, only one ionospheric delay rate of change is used for the link 206. If there are more than two channels, a mean of all possible channel pairs may be computed. For example, if a receiver is tracking L1, L2 and L5 signals from a GPS satellite, a mean ionospheric delay, geometry-free rate of change may be computed using the following three pairs: L1-L2, L1-L5, and L2-L5. In practice, however, a minimum frequency difference between the signals (e.g., larger than 200 MHz) is desirable to compute precise ionospheric delays. As a consequence, the L1-L2 and L1-L5 combinations are preferred over the L2-L5 combination, which should generally not be considered for this computation.

In one embodiment, the channel pair ionospheric delay geometry-free rate of change described with reference to Fig. 7 is a $p$ Hz mean channel pair ionospheric delay rate of change, wherein $p$ is a number selected within the range from 0.5 to 200, preferably a number selected within the range from 1 to 100, most preferably any one of 1, 2, 5, 10, 20, 50, and 100. In other words, a time series per link 206 is monitored for phase scintillation detection.

Computing s10b, for a satellite-station link 206, the link-specific ionospheric phase scintillation level may, in one embodiment, comprise the following operations (i) to (iv): (i) computing, for each pair of channels received from the satellite, an ionospheric delay rate of change using carrier phase observations from the signals from the pair of channels from an epoch $T-\Delta T$ to an epoch $T$, where $\Delta T$ is equal to $1/p$ second (regarding the value $p$, see previous paragraph); (ii) computing the $p$ Hz mean pair ionospheric delay rate of change by computing a mean of the ionospheric delay rate of changes over all pairs of channels; (iii) adding the $p$ Hz mean channel carrier-to-noise-density ratio rate of change to a $q$-second moving window; and (iv) computing the RMS of all values in the $q$-second moving window to obtain the link-specific phase scintillation level. In that embodiment, $q$ is a number selected within the range from 10 to 240, preferably a number selected within the range from 30 to 120. As an example, $q$ may be equal to 60. Each satellite 208 provides signals on $L$ channels where $L$ is, in one embodiment, in the range 2 to 6 depending on the receiver. If $L$ equals 2, above-referred operation (ii) can be skipped, i.e. the $p$ Hz mean channel carrier-to-noise-density ratio rate of change may be equal to the ionospheric delay rate of change over the single pair of channels (e.g., GPS L1 and GPS L2).

Further, the link-specific ionospheric phase scintillation level may, as part of step s10b, be filtered so that the level quickly moves up with increasing RMS and slowly fades with decreasing RMS. In a similar way to what was mentioned above in relation to the filtering of the ionospheric amplitude scintillation level, such a phase scintillation filtering is beneficial in that rising phase scintillation levels can be quickly detected and acted upon. This in turn is beneficial to protect the integrity of the NSS estimator(s) (also sometimes called "navigation filter"). On the other hand, slowly reducing (fading) the link-specific ionospheric phase scintillation level with decreasing RMS is beneficial given the likelihood of scintillation re-occurring on the previously affected link. Regarding the NSS estimator(s), see also step s60 described below (with reference to Figs. 9a to 9m).

Phase scintillation may for example be detected by monitoring the rate of change of the ionospheric delay computed using two carrier phase measurements to the same satellite. As shown in Fig. 17, phase scintillation causes rapid changes in the otherwise stable ionospheric delay rate of change.

In one embodiment, the link-specific ionospheric phase scintillation level is the RMS of values contained in a 60-second moving window consisting of the mean ionospheric delay rate of change computed at 1-second intervals. For example, (a) for each possible satellite channel pair, the GPS L1 ionospheric delay rate of change is computed using the two-channel carrier phase observations at times $T-\Delta T$ and $T$ where $\Delta T$ = 1 second (the "GPS L1 ionospheric delay rate of change" means here the ionospheric delay rate of change computed from any two carrier phase measurements, converted to the equivalent GPS L1 frequency value using Equation 2); (b) the mean GPS L1 ionospheric delay rate of change (over all pairs of channels received from the satellite under consideration) is computed from (a); (c) the mean GPS L1 ionospheric delay rate of change (b) is added to 60-second moving window; (d) the ionospheric phase scintillation level is computed from the RMS of the values contained in the moving window; and (e) the phase scintillation level (d) may be filtered so that it quickly adapts to rising phase scintillation levels and slowly fades for decreasing phase scintillation levels.

In one embodiment, the slant ionospheric delay at a given point in time may be computed as follows:

$$I_s = \left(-\left(\phi_p - N_p\right) + \frac{(\phi_s - N_s)*F_p}{F_s}\right) \times \left(\frac{F_p^2}{F_{1GPS}^2}\right) \times \left(\frac{F_s^2}{(F_s^2 - F_p^2)}\right) \times \lambda_p$$

(Equation 2)

where

$I_s$     is GPS $L_1$ slant ionospheric delay (meters)

$\phi_p$     is the primary band carrier phase measurement (cycles)

$\phi_s$     is the secondary band carrier phase measurement (cycles)

$N_p$     is the primary band carrier phase ambiguity (cycles)

$N_s$     is the secondary band carrier phase ambiguity (cycles)
$F_p$     is the primary band frequency (GHz)
$F_s$     is the secondary band frequency (GHz)
$F_{1GPS}$    is the GPS $L_1$ band frequency (1575.42 GHz)
$\lambda_p$     is the primary band wavelength (meters/cycle).

Separating the ambiguity terms in Equation 2 and lumping them into an ensemble bias gives:

$$I_s = \left(-\phi_p + \frac{\phi_s*F_p}{F_s}\right) \times \left(\frac{F_p^2}{F_{1GPS}^2}\right) \times \left(\frac{F_s^2}{(F_s^2 - F_p^2)}\right) \times \lambda_p - N_b$$

(Equation 3)

where

$N_b$     is an ensemble bias (meters).

In the absence of cycle slips, the ensemble bias, $N_b$, is a constant.

The choice of primary and secondary band signals used to compute the ionospheric delay depends on the signals broadcast by each satellite and tracked by the receiver.

The slant ionospheric delay computed using Equation 3 is precise but ambiguous due to the ambiguity term, $N_b$. However, assuming there are no carrier phase cycle slips between the time step epochs $t_n$ and $t_{n+1}$, the ambiguity cancels when the delta ionospheric delay is computed:

$$\Delta I_s = I_s(t_n) - I_s(t_{n-1})$$        (Equation 4)

where

$\Delta I_s$     is slant delta ionospheric delay (m)
$I_s(t_n)$     is GPS $L_1$ slant ionospheric delay at epoch $t_n$ (m)

$I_s(t_{n-1})$   is GPS $L_1$ slant ionospheric delay at epoch $t_{n-1}$ (m).

The slant delta ionospheric delay rate of change is then:

$$\Delta I_S^A = ( I_s(t_n) - I_s(t_{n-1}) ) / ( t_n - t_{n-1} ) \qquad \text{(Equation 5)}$$

where

$\Delta I_S^A$   is slant delta ionospheric delay rate of change (m/s)

$t_n-t_{n-1}$   is generally 1 second but other values may be used.

For each satellite, a mean delta (i.e., time-differenced) ionospheric delay rate of change is computed using multiple pairs of the available signals for the satellite. The mean of the delta ionospheric delay rates is added to a 60-second moving window and the RMS of the mean delta ionospheric delay rates in the moving window is used to determine the phase scintillation level for the satellite. A filter is applied to the RMS values such that the phase scintillation level adapts quickly to increasing RMS values and fades slowly for decreasing RMS values:

$$\Phi(t_n) = \Phi(t_{n-1}) + (RMS(t_n) - \Phi(t_{n-1})) \times K \qquad \text{(Equation 6)}$$

where

$\Phi(t_n)$       is the phase scintillation level at $t_n$ (m/s)
$\Phi(t_{n-1})$   is the phase scintillation level at $t_{n-1}$ (m/s) at $t_0$ $\Phi(t_0) = RMS(t_0)$
$RMS(t_n)$    is the moving window RMS at $t_n$ (m/s)
$K$           is the filter gain = 1.000 when $RMS(t_n) > \Phi(t_{n-1})$ and 0.003 when $RMS(t_n) <= \Phi(t_{n-1})$.

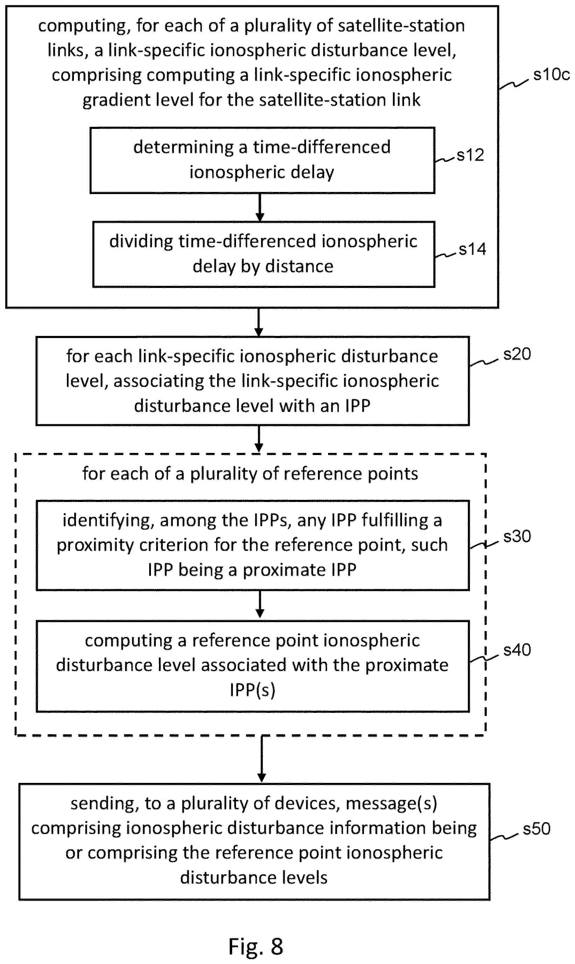

Fig. 8 is a flowchart of a method in one embodiment of the invention, which differs from Fig. 1 in that the ionospheric disturbance information specifically comprises ionospheric delay gradient information.

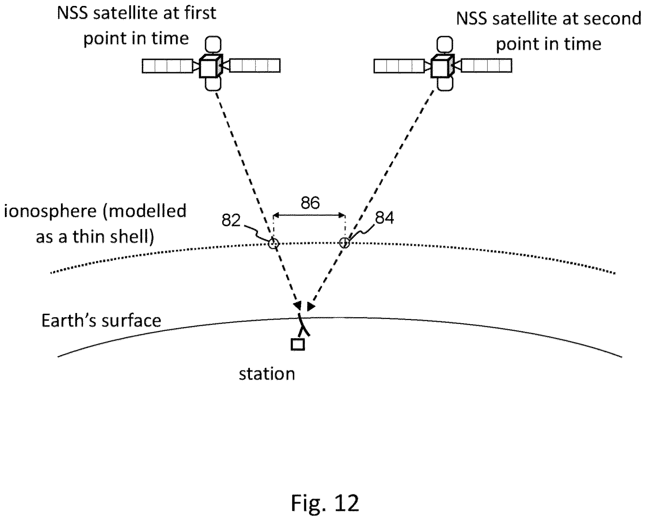

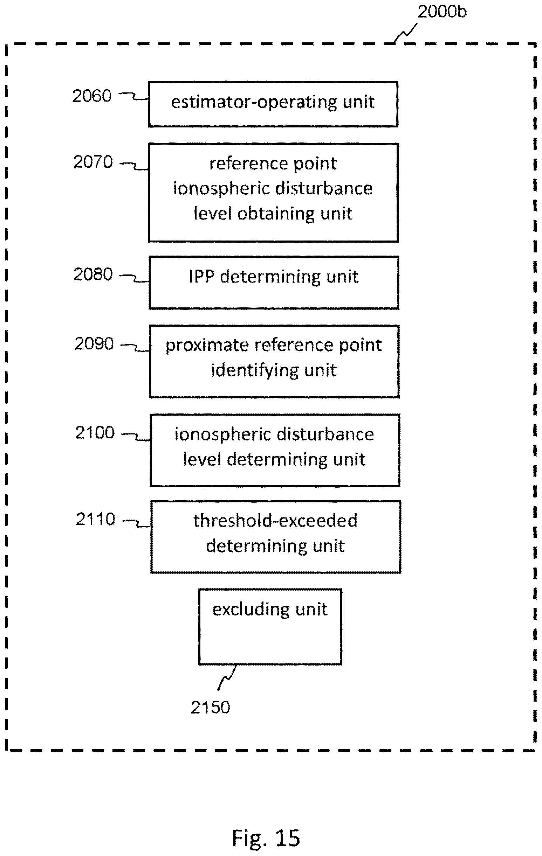

Namely, computing s10, for each of a plurality of satellite-station links 206, a LSIDL comprises computing s10c a link-specific ionospheric gradient level based on: determining s12 a difference, hereinafter referred to as "time-differenced ionospheric delay", between an ionospheric delay at a first point in time and an ionospheric delay at a second point in time (with the same satellite having moved in the meantime); and dividing s14 the time-differenced ionospheric delay by a distance (ref. 86 in Fig. 12) between an IPP (ref. 82 in Fig. 12) applicable at the first point in time and an IPP (ref. 84 in Fig. 12) applicable at the second point in time, as schematically illustrated in Fig. 15 (which is similar to ref. [12], Fig. 12, right-hand side "Time-step method"). For examples of implementations of steps s12 and s14, see also equations 7 and 10 below.

In step s20 (described with reference to Fig. 1), each LSIDL is associated with an IPP 212 being at the intersection of a given reference ionospheric shell 214 and the satellite-station link 206 for which the LSIDL has been computed. As the intersection changes from the above-referred first point in time to the above-referred second point in time (as discussed with reference to steps s12 and s14), the intersection used in step s20 may be uniquely determined for example as the mean of the coordinates of the intersection at the first point in time and the coordinates of the intersection at the second point in time.

After step s30 (described with reference to Fig. 1), a measure of the link-specific ionospheric gradient levels around each reference point 216 is computed s40, the measure being here referred to as "reference point ionospheric gradient level".

In step s50, the ionospheric disturbance information, which is or comprises the reference point ionospheric gradient levels associated with reference points 216, is transmitted such as, as explained above, broadcast in the region to which the information is applicable.

In one embodiment, a reference point ionospheric gradient level for a reference point 216 is or comprises at least one of: (i) a mean of the link-specific ionospheric gradient levels associated with the proximate IPPs 212 of reference point 216; (ii) a weighted mean of the link-specific ionospheric gradient levels associated with the proximate IPPs 212 of reference point 216; (iii) a maximum of the link-specific ionospheric gradient levels associated with the proximate IPPs 212 of reference point 216; and (iv) a nth percentile of the link-specific ionospheric gradient levels associated with the proximate IPPs 212 of reference point 216, wherein, as mentioned above, n may for example be equal to 68, 90, or another value suitable to exclude large, potentially bad, measurements.

In one embodiment, the first point in time and the second point in time are separated by r seconds, wherein r is a number selected within the range from 10 to 240, preferably a number selected within the range from 30 to 180, most preferably any one of 30, 60, 120, and 180. As an example, over a 60-second interval (i.e., with r being equal to 60), the expected ionospheric gradient is 0.5 ppm during a quiet period, but it may be up to 30 ppm or more during an ionosphere active (i.e., disturbed) period.

The link-specific ionospheric gradient level may, as part of step s10c, be filtered so that the level quickly moves up with increasing gradient and slowly fades with decreasing gradient. In a similar way to what was mentioned above in relation to the filtering of the amplitude and phase scintillation levels, such an ionospheric gradient filtering is beneficial in that rising ionospheric gradient levels can be quickly detected and acted upon. This in turn is beneficial to protect the integrity of the NSS estimator(s) (also sometimes called "navigation filter"). On the other hand, slowly reducing (fading) the link-specific ionospheric gradient level with decreasing RMS is beneficial given the likelihood of ionospheric gradient changes re-occurring on the previously affected link. Regarding the NSS estimator(s), see also step s60 described below (with reference to Figs. 9a to 9m).

In one embodiment, the link-specific ionospheric gradient level is computed using the delta (i.e., time-differenced) ionospheric delay computed using one channel pair over a time interval of 60 seconds divided by the distance between the ionospheric pierce points. For example, (a) for a pre-selected satellite channel pair, the GPS L1 delta ionospheric delay is computed using the channel pair carrier phase observations at times $T-\Delta T$ and $T$ where $\Delta T = 60$ seconds; (b) the ionospheric gradient level is computed by dividing the GPS L1 delta ionospheric delay (a) by the distance between the IPPs at $T-\Delta T$ and $T$; and (c) the ionospheric gradient level (b) may be filtered so that it quickly adapts to rising ionospheric gradient levels and slowly fades for decreasing ionospheric gradient levels.

In one embodiment, steps s12 and s14 may be implemented by computing a time-step spatial ionospheric gradient for a single satellite using NSS carrier phase or code measurements from two frequency bands and the position of the ionospheric shell pierce points for the time step epochs. This may be performed for slant ionospheric gradients and/or vertical ionospheric gradients.

In one embodiment, to compute slant ionospheric gradients, Equation 3 is first used to compute the slant ionospheric delay using carrier phase measurements from an available channel pair for the satellite (Note: alternatively, all available channel pairs for a satellite can be used as well, followed by computing a mean of the slant ionospheric delay, similarly to the case of phase scintillation, as discussed above). The slant delta ionospheric delay is then computed using Equation 4 but with the separation between $t_n$ and $t_{n-1}$ generally 30 seconds or larger.

To compute the distance between the IPPs, it may be assumed that the ionospheric layer is a thin shell being for example 450 km above the Earth's surface. Since the receiver and satellite positions are known with sufficient accuracy, the ionospheric shell pierce point positions at epochs $t_1$ and $t_2$ are easily computed and the slant ionospheric gradient can then be computed as:

$$G_s = \Delta I_s / \| \, IPP(t_n) - IPP(t_{n-1}) \, \| \qquad \text{(Equation 7)}$$

where

$G_s$      is the slant gradient (unitless)
$IPP(t_n)$      is the ionospheric shell pierce point position at epoch $t_n$
$IPP(t_{n-1})$      is the ionospheric shell pierce point position at epoch $t_{n-1}$
$\| \, ... \, \|$      is the vector 2-norm operator.

The slant ionospheric gradient level is computed by filtering the slant ionospheric gradient observations, $G_s$, such that the gradient level adapts more quickly to increasing gradient values and fades more slowly to decreasing gradient values:

$$\Psi_s(t_n) = \Psi_s(t_{n-1}) + (G_s(t_n) - \Psi_s(t_{n-1})) \times K \qquad \text{(Equation 8)}$$

where

$\Psi_s(t_n)$      is the slant ionospheric gradient at $t_n$ (ppm)
$\Psi_s(t_{n-1})$      is the slant ionospheric gradient at $t_{n-1}$ (ppm) at $t_0$ $\Psi_s(t_0) = G_s(t_0)$
$K$      is the filter gain = $(t_n-t_{n-1})/180$ when $G_s(t_n) > \Psi_s(t_{n-1})$ and $(t_n-t_{n-1})/300$ when $G_s(t_n) <= \Psi_s(t_{n-1})$.

Although slant ionospheric gradients are of interest, the vertical ionospheric gradients may also be useful. In one embodiment, a vertical ionospheric gradient is computed by mapping the slant ionospheric delay measurements, $I_s(t_n)$ and $I_s(t_{n-1})$, to the zenith at the pierce point positions, $IPP(t_n)$ and $IPP(t_{n-1})$. The Klobuchar mapping function published in ref. [17] may for example be used for this purpose but other mapping functions can be used as well.

$$\Delta I_v = I_v(t_n) - I_v(t_{nn-1}) = \Omega(t_n) \times I_s(t_n) - \Omega(t_{n-1}) \times I_s(t_{n-1}) - (\Omega(t_n) - \Omega(t_{n-1})) \times N_b$$

(Equation 9)

where

$\Delta I_v$     is the vertical delta ionospheric delay (m)
$I_v(t_n)$     is the vertical ionospheric delay at epoch $t_n$ (m)
$I_v(t_{n-1})$     is the vertical ionospheric delay at epoch $t_{n-1}$ (m)
$\Omega(t_n)$     is the slant to zenith mapping factor at epoch $t_n$
$\Omega(t_{n-1})$     is the slant to zenith mapping factor at epoch $t_{n-1}$.

An issue that arises when computing vertical ionospheric gradients is that the mapping factors at $t_n$ and $t_{n-1}$ are not the same so that the ensemble bias, $N_b$, no longer cancels. The ensemble bias may be estimated but for the purpose of anomalous ionospheric gradient detection this may not be necessary. Instead, the initial ensemble bias may be computed using an ionospheric delay model such as, although not limited to, the Klobuchar model published in ref. [17]. Code measurements may also be used for this purpose.

The vertical ionospheric gradient is then:

$$G_v = \Delta I_v / \ | \ IPP(t_n) - IPP(t_{n-1}) \ |$$

(Equation 10)

The vertical ionospheric gradient level may be computed by filtering the vertical ionospheric gradient observations, $G_v$, such that the gradient level adapts more quickly to increasing gradient values and fades more slowly to decreasing gradient values:

$$\Psi_v(t_n) = \Psi_v(t_{n-1}) + (G_v(t_n) - \Psi_v(t_{n-1})) \times K$$

(Equation 11)

where

$\Psi_v(t_n)$     is the slant ionospheric gradient at $t_n$ (ppm)
$\Psi_v(t_{n-1})$     is the slant ionospheric gradient at $t_{n-1}$ (ppm)
    at $t_0$ $\Psi_v(t_0) = G_v(t_0)$
$K$     is the filter gain = $(t_n-t_{n-1})/180$ when $G_v(t_n) > \Psi_v(t_{n-1})$
    and $(t_n-t_{n-1})/300$ when $G_v(t_n) <= \Psi_v(t_{n-1})$.

In one embodiment, the reference point ionospheric disturbance information serves as a summary of the LSIDLs for each of a plurality of reference points 216, and it may comprise one of, two of, or all of the following: (1) a reference point amplitude scintillation level for each of the reference points 216; (2) a reference point phase scintillation level for each of the reference points 216; and (3) a reference point ionospheric gradient level for each of the reference points 216.

The transmission of both amplitude and phase scintillation levels allows the rover receiver to adapt specifically to high-latitude scintillation effects (characterized by predominant phase scintillation) and low-latitude/equatorial scintillation effects (characterized by simultaneous occurrence of phase and amplitude scintillation).

In one embodiment, the ionospheric disturbance information is broadcast in the form of a message, which is here referred to as "ionospheric disturbance message". A reference point amplitude scintillation level, a reference point phase scintillation level, and a reference point ionospheric gradient level are computed for each reference point 216, as described above. To reduce bandwidth, these summarizing levels for each reference point 216 may be encoded into nine (9) bits with bits 0-2 reserved for the amplitude scintillation level, bits 3-5 reserved for the phase scintillation level, and bits 6-8 reserved for the vertical ionospheric spatial gradient level. The meanings of the 3-bit values are given in Tables 2 to 4, purely as examples of possible encoding.

Table 2. Amplitude scintillation level encoding.

| Bits | Decimal | Amplitude level (dBHz/s) |
|---|---|---|
| XXXXXX000 | 0 | Not available |
| XXXXXX001 | 1 | $0.00 \leq x < 0.50$ |
| XXXXXX010 | 2 | $0.50 \leq x < 1.00$ |

(continued)

| Bits | Decimal | Amplitude level (dBHz/s) |
|---|---|---|
| XXXXXX011 | 3 | 1.00 ≤ x < 2.00 |
| XXXXXX100 | 4 | 2.00 ≤ x < 4.00 |
| XXXXXX101 | 5 | 4.00 ≤ x < 8.00 |
| XXXXXX110 | 6 | 8.00 ≤ x < 16.00 |
| XXXXXX111 | 7 | 16.00 ≤ x |

Table 3. Phase scintillation level encoding.

| Bits | Decimal | Phase level (m/s) |
|---|---|---|
| XXX000XXX | 0 | Not available |
| XXX001XXX | 1 | 0.00 ≤ x < 0.01 |
| XXX010XXX | 2 | 0.01 ≤ x < 0.02 |
| XXX011XXX | 3 | 0.02 ≤ x < 0.04 |
| XXX100XXX | 4 | 0.04 ≤ x < 0.08 |
| XXX101XXX | 5 | 0.08 ≤ x < 0.16 |
| XXX110XXX | 6 | 0.16 ≤ x < 0.32 |
| XXX111XXX | 7 | 0.32 ≤ x |

Table 4. Ionospheric spatial gradient level encoding.

| Bits | Decimal | Gradient level (ppm) |
|---|---|---|
| 000xxxxxx | 0 | Not available |
| 001XXXXXX | 1 | 0.00 ≤ x < 1.00 |
| 010XXXXXX | 2 | 1.00 ≤ x < 2.00 |
| 011 XXXXXX | 3 | 2.00 ≤ x < 4.00 |
| 100XXXXXX | 4 | 4.00 ≤ x < 8.00 |
| 101XXXXXX | 5 | 8.00 ≤ x < 16.00 |
| 110XXXXXX | 6 | 16.00 ≤ x < 32.00 |
| 111XXXXXX | 7 | 32.00 ≤ x |

In one embodiment, nine (9) bits encoded using the technique illustrated in Tables 2, 3, and 4 multiplied by the number of reference points 216 of the grid under consideration may form a message used to broadcast an amplitude scintillation level, a phase scintillation level, and an ionospheric gradient level per reference point 216.

The transmission of a range of ionospheric disturbance indices allows to signal the strength of the ionospheric disturbance effect which may then be used by the rover receiver to adjust its confidence in previously determined or externally provided ionospheric delay estimates.

In one embodiment, the region is an equatorial or polar region and generating ionospheric disturbance information comprises generating both ionospheric scintillation information and ionospheric gradient information. In another embodiment, the region is neither an equatorial nor polar region and generating ionospheric disturbance information comprises generating ionospheric gradient information but does not comprise generating ionospheric scintillation information. That is, the generation, transmission, and reception of ionospheric scintillation information may be made dependent on the region under consideration.

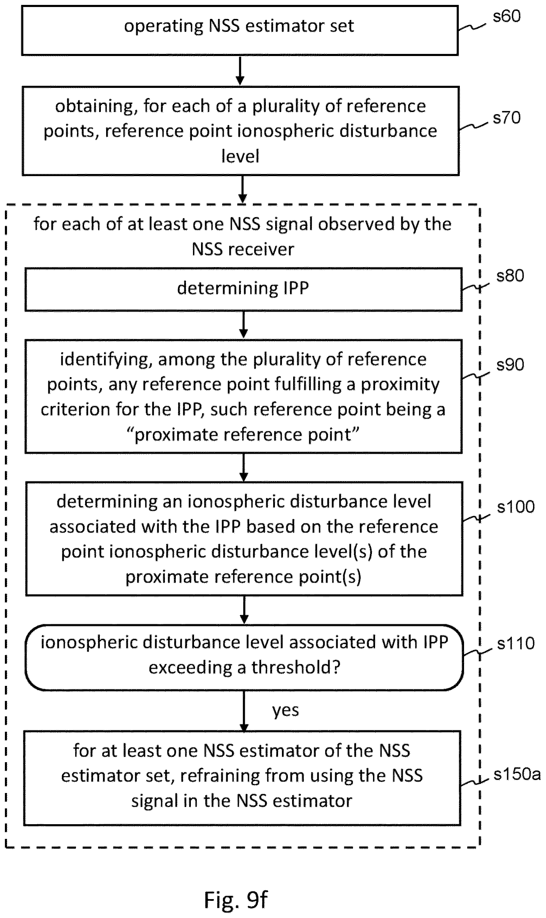

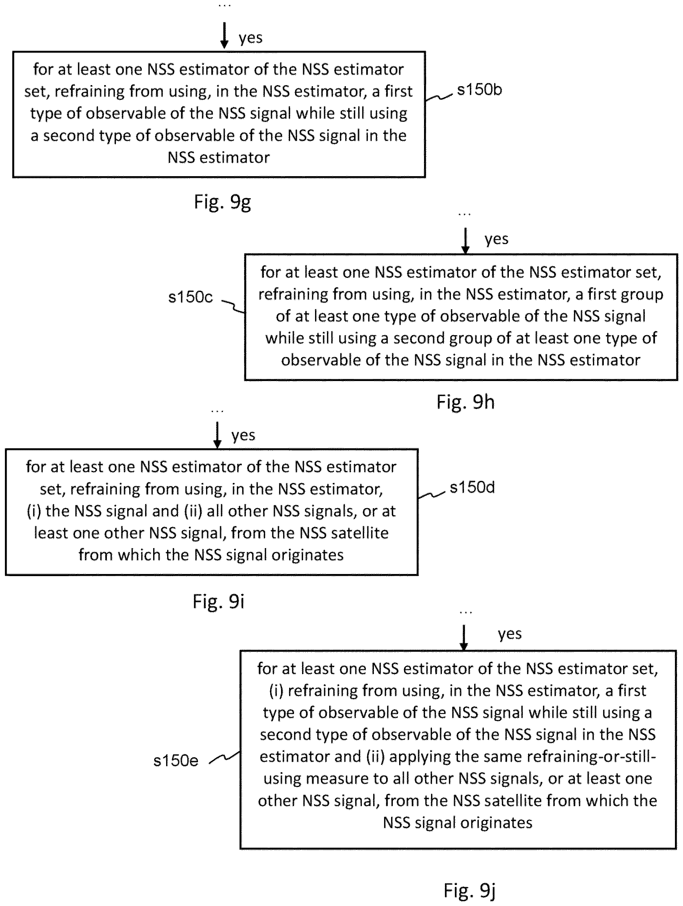

Figs. 9a to 9m are flowcharts of methods in thirteen embodiments of the invention, in which ionospheric disturbance mitigation measures are taken after determining that ionospheric disturbance information indicates that an ionospheric disturbance level exceeds a threshold. Purely for spatial efficiency in Figs. 9g to 9m, the flowcharts thereof utilize ellipsis ('...') to indicate repetition of operations s60 to s110 previously discussed with reference to Figs. 9a to 9f. That is, operations s60 to s110 are part of Figs. 9g to 9m, although not shown, and steps s150b to s150h of Figs. 9g to 9m respectively replace step s150a of Fig. 9f.

The methods illustrated by Figs. 9a to 9m may be carried out by a NSS receiver configured for observing NSS signals from a plurality of NSS satellites (which need not necessarily be the same as the satellites 208 involved in the generation of the ionospheric disturbance information) over multiple epochs, by another processing entity capable of receiving data from the NSS receiver, or by an NSS receiver in conjunction with such other processing entity (i.e., by an NSS receiver and another processing entity). The processing entity may be located remotely from the NSS receiver and may, for example, receive data representing the NSS observations from the NSS receiver.

In one embodiment, the method aims at estimating parameters derived from NSS signals useful to, i.e. suitable to, determine (i.e., estimate) a position, such as a position of a rover receiver (also called "rover system" or simply "rover"). The method may eventually lead to estimating a rover position. In one embodiment, the position is a position relative to a reference point or initial point, whose absolute position need not necessarily be precisely known, and the method may aim at estimating a trajectory relative to the reference point or initial point.

The estimated parameters may for example indicate the most probable number of carrier cycles along the distance separating an NSS satellite from the NSS receiver, i.e. the estimated parameters may be the resolved integer ambiguity (an introduction to the GNSS integer ambiguity resolution problem, and its conventional solutions, is provided in ref. [1], section 7.2). This also means that the method may estimate the position itself but not necessarily: parameters may be estimated that may be used, for example by another entity (such as a processing entity on a server dedicated to such task), to estimate or determine the position of the NSS receiver (e.g., a rover receiver). Furthermore, other parameters such as, for example, properties of the receiver clock offset and drift may be estimated. Indeed, if the position of both the NSS receiver and the plurality of NSS satellites are known, resolving the integer ambiguities may enable the determination of parameters such as the receiver clock offset.

Yet furthermore, beyond determining the position of a rover, if the position of NSS receivers (such as reference stations) is known, solving the integer ambiguities in the carrier phases by solving observation equations may also be used to eventually estimate the position of a satellite.

However, in some embodiments, it is unnecessary to solve the integer ambiguities in the carrier phases because processing the delta-carrier-phase observables (time-differenced carrier phase observables) cancels out the integer ambiguities. Thus, in these embodiments, the parameters estimated by the method may instead be parameters representing a change in the NSS receiver position based on which a trajectory, i.e. a relative position over time, can be derived.

The application relying on NSS observations to produce an estimate of said parameters, or a combination thereof, may for example be a highly automated driving or autonomous driving application relying on NSS observations to produce an estimate of the position, velocity, or acceleration of a vehicle.

In step s60 (referring to each of Figs. 9a to 9m), at least one estimation process is operated, each estimation process being here referred to as "NSS estimator" and the at least one NSS estimator being here referred to as "NSS estimator set". Each NSS estimator uses state variables and computes values of its state variables based on NSS signals observed by the NSS receiver and/or on information derived from the NSS signals.

Each NSS estimator is or comprises an algorithm, procedure, or process, or software, firmware, hardware, and/or any form of machine-readable instructions to implement such an algorithm, procedure, or process, in which a set of state variables (or "state vector") is maintained over time, i.e. the values of the state variables are estimated based on measurements made overtime. The measurements may comprise data representing the observed NSS signals. The estimator involves or comprises, in one embodiment, a Kalman filter, a least mean squares (LMS) estimator, and/or a robust estimator. The invention is, however, not limited to the use of Kalman filter(s), LMS estimator(s), and/or robust estimator(s). Other estimation processes, filters, or filter techniques may be used.

The estimator's state variables may represent, for example, the position of the NSS receiver, an offset in the position of the NSS receiver relative to another position (the offset per se being therefore a relative position), an offset in the position of the NSS receiver relative to another epoch, the rate of change of the position, the rate of change of the offset in the position, a bias related to the NSS receiver, a bias related to any of the NSS satellites, a bias related to any of the satellite systems, a bias related to any of the NSS signals, the rate of change of any of the said biases, or any combination of the above.

In one embodiment, the method uses a single estimator. In another embodiment, the method uses two estimators. The two estimators may for example be a precise estimator and a timely estimator as described in ref. [16] (see notably, but not only, paragraphs [0030] to [0034] in ref. [16]).

In step s70 (referring again to each of Figs. 9a to 9m), ionospheric disturbance information is obtained. More specifically, for each of a plurality of reference points 216 on a reference ionospheric shell 214 above a surface of interest 204, ionospheric disturbance information associated with the reference point 216 is obtained, such as for example received and stored in memory. The ionospheric disturbance information per reference point 216 is here referred to as "reference point ionospheric disturbance level", and the surface of interest 204 is at least a part of the Earth's surface 202.

In one embodiment, the ionospheric disturbance information per reference point 216 comprises ionospheric scintillation information and/or ionospheric gradient information. In one embodiment, the ionospheric disturbance information per reference point 216 more specifically comprises ionospheric scintillation information itself comprising ionospheric amplitude scintillation information and/or ionospheric phase scintillation information.

In one embodiment, the plurality of reference points 216 on reference ionospheric shell 214 form a grid, such as an isometric grid, an orthogonal grid, a rectilinear grid, or a hexagonal grid.

The position of the reference points 216 may be known by the entity obtaining the ionospheric disturbance information prior to carrying out step s70, or the position thereof may alternatively be transmitted together with the ionospheric disturbance information in step s70. In embodiments in which the reference points 216 form a regular grid, the position of the reference points 216 may be conveyed by setting and/or transmitting parameters defining the grid, such as grid spacing, origin, and indexing. The grid definition may be based on ellipsoidal coordinates (latitudes and longitudes) to account for the fact that the ionospheric shell is a curved surface.

In step s80 (referring again to each of Figs. 9a to 9m), for each of at least one NSS signal observed by the NSS receiver, an IPP 218 is determined, which is at the intersection of the reference ionospheric shell 214 and the link between the NSS receiver and the NSS satellite from which the NSS signal originates. Regarding the term "being at" and the meaning of "reference ionospheric shell", the same remarks as those made above in relation to step s20 also apply.

In step s90 (referring again to each of Figs. 9a to 9m), any reference point 216 fulfilling a proximity criterion for, i.e. with respect to, the IPP 218 (determined in step s80) is identified among the plurality of reference points 216. Any such reference point 216 fulfilling the proximity criterion for, i.e. with respect to, the IPP 218 is here referred to as "proximate reference point". Regarding the meaning of "proximity criterion", the remarks made above in relation to step s30 apply similarly. That is, a proximity criterion is a distance-based condition, i.e. a condition based on a distance between a reference point 216 and the IPP 218 under consideration. The proximity criterion is fulfilled if the distance-based condition is fulfilled. By "any reference point fulfilling a proximity criterion for the IPP", it is meant here that there may be any number of reference points fulfilling a proximity criterion for the IPP 218, depending notably on the proximity criterion used.

In step s100 (referring again to each of Figs. 9a to 9m), an ionospheric disturbance level associated with IPP 218 is determined s100 based on the reference point ionospheric disturbance level(s) of the proximate reference point(s) 216. In other words, step s100 generally allows an ionospheric disturbance level to be attributed to every observation of the rover. This may for example be achieved by interpolating the gridded index values at the pierce point associated with the NSS satellites being in view by the rover receiver. Once this is done, the rover may use this value to adjust its confidence in previously determined or externally provided ionospheric delay estimates, e.g. by modifying the noise input for the ionospheric state estimation and the observation type used for the high-rate positioning prediction (original observations or dual-frequency ionosphere-free observations). This will be described below with reference to ionospheric mitigation operations s120 to s150a-h.

In one embodiment, identifying s90, among the plurality of reference points 216, any proximate reference point 216 comprises identifying the reference point 216 being the closest to IPP 218 according to a given distance metric (nearest neighbor solution); and determining s100 an ionospheric disturbance level associated with IPP 218 comprises taking, as ionospheric disturbance level associated with IPP 218, the reference point ionospheric disturbance level of the reference point 216 identified as the closest to IPP 218.

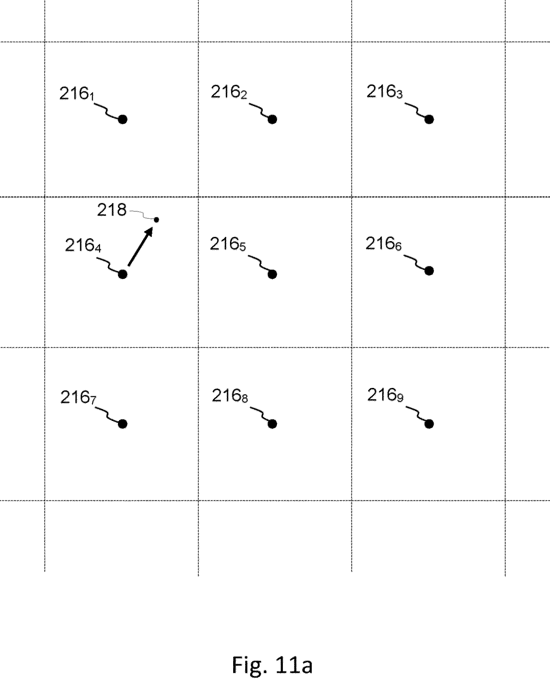

This is illustrated by Fig. 11a, which is a schematic diagram of an example of an orthogonal grid of nine reference points $216_1$ to $216_9$, and an IPP 218 is also shown. As reference point $216_4$ is the closest to IPP 218, the ionospheric disturbance level associated with IPP 218 is taken as reference point ionospheric disturbance level of reference point $216_4$ (hence the arrow from reference point $216_4$ to IPP 218 in Fig. 11a).

In another embodiment, identifying s90, among the plurality of reference points 216, any proximate reference point 216 comprises identifying a plurality of proximate reference points 216 (according to a given proximity criterion); and determining s100 an ionospheric disturbance level associated with IPP 218 comprises taking, as ionospheric disturbance level associated with IPP 218, any one of: (i) a maximum value of the reference point ionospheric disturbance levels of the proximate reference points 216; and (ii) an interpolated value of the reference point ionospheric disturbance levels of the proximate reference points 216. Regarding (i), this may for example mean taking the maximum value of the four surrounding reference points. Regarding (ii), this may for example mean taking a distance-weighted mean of the four surrounding reference points, such as by performing a bilinear interpolation. Alternatively, a bicubic interpolation may be performed, using the reference point ionospheric disturbance levels of more proximate reference points 216, e.g. 16 proximate reference points. Like the grid definition, the interpolation process may be based on ellipsoidal coordinates (latitudes and longitudes) to account for the fact that the ionospheric shell is a curved surface.

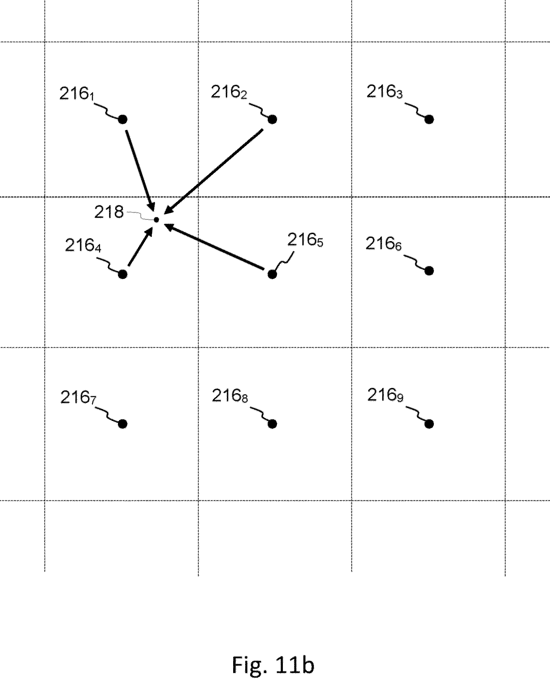

This is illustrated by Fig. 11b, which is, like Fig. 11a, a schematic diagram of an example of an orthogonal grid of nine reference points $216_1$ to $216_9$, and an IPP 218 is also shown. In that case, reference points $216_1$, $216_2$, $216_4$, and $216_5$ fulfil a proximity criterion with respect to IPP 218 (hence the arrow from these reference points to IPP 218). The proximity criterion is that the reference point is within a certain radius of IPP 218. In other words, the proximity criterion is a point-in-circle test, considering a given radius. The ionospheric disturbance level associated with IPP 218 is taken as reference point ionospheric disturbance level of reference point $216_4$ (hence the arrows from reference point $216_4$ to IPP 218 in Fig. 11b).

In one embodiment, the given radius referred to in the context of the grid of Fig. 11b is the diagonal distance between neighboring grid points, i.e. $\sqrt{(d_{Lon}^2 + d_{Lat}^2)}$ , where $d_{Lon}$ is the longitudinal distance between neighboring grid points and $d_{Lat}$ is the latitudinal distance between neighboring grid points. Information pertaining to the radius applicable to the grid or a part thereof may also be transmitted separately or together with the ionospheric disturbance information.

In step s110 (referring again to each of Figs. 9a to 9m), it is determined that the ionospheric disturbance level associated with IPP 218 exceeds a threshold, and one or a plurality of ionospheric disturbance mitigation measures are taken (as further explained below). In one embodiment, if, in contrast, the ionospheric disturbance level associated with IPP 218 does not exceed the threshold (not illustrated in Figs. 9a to 9m), the NSS signal under consideration does not trigger the adoption of any ionospheric disturbance mitigation measure, as such mitigation measure is not necessarily required.

In other words, the transmission of ionospheric disturbance values associated with a plurality of reference points 216 allows, on the receiver side, the determination as to whether individual NSS signals received by a NSS receiver are likely to be affected by ionospheric disturbance and thus also allows the adoption of mitigation measures accordingly. This solution relies on the principle that if an IPP 218 is close to one or a plurality of reference points 216 (e.g., one or a plurality of grid points), it is possible to derive the extent to which the IPP 218 is affected by ionosphere disturbance using the ionospheric disturbance information associated with the reference points 216. Furthermore, transmitting ionospheric disturbance values associated with a plurality of reference points 216 to NSS receivers in the field (or the like) represents an efficient and effective approach, as already explained above with reference to Fig. 1.

In an embodiment wherein the ionospheric disturbance information comprises ionospheric amplitude scintillation information, ionospheric phase scintillation information, and ionospheric gradient information, step s110 may involve converting the amplitude and phase scintillation levels to scale factors using a *priori* noise models for $C/N_0$ and ionospheric delay rates. For example, the following may apply:

$$Amplitude\ scale\ factor = \frac{amplitude\ level}{\left(\dfrac{0.2\,\dfrac{dBHz}{s}}{sin(elev)}\right)}$$

$$Phase\ scale\ factor = \frac{phase\ level}{\left(\dfrac{1\,\dfrac{mm}{s}}{sin^2(elev)}\right)}$$

where *elev* is the satellite elevation (radians). The values $0.2\,\frac{dBHz}{s}$ and $1\,\frac{mm}{s}$ are examples of empirical values, which were obtained by processing base station data collected in a "clean" GNSS environment (i.e., with low multipath, no ionospheric disturbances). A reference point ionospheric disturbance factor may then be taken as the maximum of the amplitude scale factor, the phase scale factor, and the gradient scale factor (the ionospheric gradient level itself is a scale factor and may be used directly).

After step s110 (i.e., with positive outcome - see "yes" in Figs. 9a to 9m), one or a plurality of ionospheric disturbance mitigation measures are taken for at least one NSS estimator of the NSS estimator set. These mitigation measures may be beneficial because ionospheric disturbances can, as mentioned above, severely degrade the quality of NSS signals received by a NSS receiver, reduce the accuracy of ionospheric models, limit the predictability of the ionospheric delay based on previous observations, and thus compromise, for example, positioning performance and availability under harsh ionospheric conditions. The benefits of these mitigation measures may be noticeably amplified when approaching the peak of a 11-year solar cycle, although these benefits may also arise under other circumstances. Specifically, at least three mitigation measures are possible, as shown in Table 5 (Note: additional exclusion measures, not listed in Table 5, are discussed primarily with reference to Figs. 9f to 9m).

Table 5. Some possible mitigation measures.

| Possible measures | Meaning |
|---|---|
| Measure (a) | adapting s120 an ionospheric noise model of the NSS estimator based on the ionospheric disturbance information |
| Measure (b) | switching s130 the NSS estimator to ionosphere-free observations |
| Measure (c) | adapting s140 an observation noise model of the NSS estimator based on the ionospheric disturbance information |

The term "noise model", which is known in the art, refers to a mathematical model representing the expected or assumed value of the error in an observable over time (e.g., code, carrier phase, Doppler, etc.).

Although performing measures (a), (b), and/or (c) may be triggered by operations carried out in relation to one NSS signal (see steps s80 to s110), the measures themselves, once adopted e.g. for a certain period of time, may affect the processing of all NSS signals in an estimator during that period of time. This also means that once a measure among measures (a), (b), and (c) (or a combination thereof as listed in Table 6) is adopted based on one NSS signal, it may then be unnecessary to adopt the same measure(s) based on other NSS signals (steps s120, s130, and s140). However, another NSS signal or observable(s) thereof may nevertheless be excluded (in line with any of steps s150a to s150h). In other words, in some embodiments, it may be decided to generally switch to ionosphere-free observations -for all the satellites or only for the satellite(s) affected by ionospheric disturbance- and also exclude a specific NSS signal or a plurality of NSS signals, or observable(s) thereof, due to e.g. an increased amplitude scintillation level.

Measure (a) may for example involve adapting an ionospheric delay state noise model of a NSS satellite, or of all satellites of a set of NSS satellites, by upscaling the correlated noise and downscaling the correlation time, as explained further below. This may involve adapting ionospheric delay state noise states in a Kalman filter for example.

Measure (b) is advantageous because the impact of ionospheric disturbances can be eliminated or significantly reduced by switching to ionosphere-free observable processing. However, ionosphere-free carrier phase ambiguities are non-integer (or, more precisely, the ionosphere-free carrier phase measurement has an integer ambiguity but it is difficult to fix due to the extremely short wavelength) so that ambiguity fixing is more challenging. Ambiguity fixing can be done more easily using the original uncombined observations, such as for example the GPS L1 carrier phase measurement or the GPS L2 carrier phase measurement. Those have integer ambiguities, and their wavelengths are much longer than the ionosphere-free combination wavelength. Measure (b) may for example involve switching the estimator to processing delta (i.e., time-differenced) carrier phase observations that are corrected for ionospheric delay (or ionospheric delay rate) calculated based on the ionospheric phase combination.

Measure (c) may for example involve adjusting an observation noise model with the ionospheric disturbance information (such as ionospheric scintillation information), as an ionospheric disturbance can degrade observation quality. In particular, it has been observed that carrier phase noise increases when there is severe amplitude scintillation. Code noise seems to be less significantly impacted by amplitude scintillation. The carrier phase noise may be modelled with correlated noise, correlation time, and uncorrelated noise. Measure (c) may comprise, in one embodiment, increasing uncorrelated noise depending on the amplitude scintillation level. Increasing the correlated noise and/or decreasing the correlation time are also possible.

Further, these three mitigation measures may be combined in different embodiments, as shown in Table 6 (Note: additional exclusion measures, not listed in Table 5, are discussed primarily with reference to Figs. 9f to 9m).

Table 6. Combination of some possible mitigation measures per NSS estimator.

| Combinations | Summary (see Table 5 for more detail) | Illustrated by |
|---|---|---|
| Measure (a) | adapting the ionospheric noise model | Fig. 9a |
| Measure (b) | switching to ionosphere-free | Fig. 9b |
| Measures (a) + (c) | adapting the ionospheric noise model and the observation noise model | Fig. 9c |
| Measures (b) + (c) | switching to ionosphere-free and adapting the observation noise model | Fig. 9d |
| Measure (c) | adapting the observation noise model | Fig. 9e |

The third combination (i.e., measures (a) + (c)) and the fourth combination (i.e., measures (b) + (c)) in Table 6 are advantageous especially if severe scintillation is detected. The last combination (measure (c)) may for example be performed for an estimator that was already operating in ionosphere-free observable processing mode.

In one embodiment, adapting s120 an ionospheric noise model comprises applying a scale factor and/or an additive value to the ionospheric noise model.

In one embodiment, the ionospheric noise model is or comprises an ionospheric delay state noise model.

In one embodiment, the ionospheric noise model is or comprises an ionospheric noise model specific to a NSS satellite. Measure (a) may comprise adapting the ionospheric noise model of all the NSS satellites based on a scale factor derived from the reference point scale factors and applied equally to all satellite ionospheric noise models.

In one embodiment, the ionospheric noise model is or comprises a Gauss-Markov noise model. Specifically, the Gauss-Markov noise model may be parametrized by a correlated noise and a correlation time, and then adapting the ionospheric noise model may comprise modifying the correlated noise and/or the correlation time. More specifically, adapting the ionospheric noise model may comprises increasing the correlated noise and/or decreasing the correlation time.

In other words, when ionospheric delay state noise models are adapted, two parameters that define a Gauss-Markov noise model - the correlated noise and the correlation time - may be modified. These two parameters define how much the ionospheric delay state is expected to change between two epochs. When there is ionospheric scintillation and/or higher-than-normal ionospheric spatial gradients, the actual correlated noise increases and the actual correlation time decreases. To get better estimates of the ionospheric delay, the ionospheric delay state Gauss-Markov noise model is, in one embodiment, adapted to better match the actual noise. The ionospheric disturbance levels obtained from the reference station or reference station system are measures of the actual noise and may be used to adapt the Gauss-Markov ionospheric delay state noise models at the rover. From the ionospheric scintillation levels, a scale factor can be derived, and the scale factor is applied to one or both parameters. With the phase scintillation level, the phase scintillation level can be added to the correlated noise. The ionospheric gradient level can be used directly to scale the correlated noise and/or correlation time.

In one embodiment, illustrated by Fig. 9f, the ionospheric disturbance mitigation measure comprises refraining s150a from using the NSS signal in the NSS estimator. In other words, in this embodiment, the NSS signal that is likely to be affected by ionospheric disturbance is excluded in at least one estimator on the receiver side.

In some embodiments, the mitigation measure may also discriminate between the observables of a NSS signal. In other words, the granularity of the exclusion as a mitigation technique may be performed at the observable-type level. For example, one type of observable of the NSS signal under consideration may be excluded while still carrying on using another type of observable of the NSS signal. This is illustrated in and discussed with reference to Figs. 9g and 9h.

In one embodiment, illustrated by Fig. 9g, the ionospheric disturbance mitigation measure comprises refraining s150b from using a first type of observable of the NSS signal in the NSS estimator while still using a second type of observable of the NSS signal in the NSS estimator. For example, the first type of observable may be a carrier phase observable and the second type of observable may be a code (pseudorange) observable. For example, if the ionospheric disturbance level indicates a high level of ionospheric scintillation (especially amplitude scintillation), i.e. above a threshold, it is advantageous not to use the carrier phase observation in the estimator, but the code observations may still be used as the quality of the code observations is less affected by scintillation, as mentioned above. In other words, the observable that is likely to be affected by ionospheric disturbance is excluded in at least one estimator on the receiver side.

In one embodiment, illustrated by Fig. 9h, the ionospheric disturbance mitigation measure comprises refraining s150c from using a first group of at least one type of observable of the NSS signal in the NSS estimator while still using a second group of at least one type of observable of the NSS signal in the NSS estimator. For example, the first group may comprise a carrier phase observable and the second group may comprise a code observable. The first group may further comprise a third observable that the estimator may be configured or configurable to use, such as Doppler observables. In the case of ionospheric disturbance, it has been observed that Doppler observables are generally affected in a similar way as carrier phase observables, so that excluding (disabling) both carrier phase and Doppler observables may be desirable if the ionospheric disturbance level indicates a level of ionospheric disturbance above a threshold.

In some embodiments, the mitigation measure may also relate to all or at least a plurality of NSS signals from the affected satellite(s). This is illustrated in and discussed with reference to Figs. 9i to 9m.

In one embodiment, illustrated by Fig. 9i, the ionospheric disturbance mitigation measure comprises refraining s150d from using, in the NSS estimator, all NSS signals from the affected NSS satellite (i.e., from the NSS satellite from which the NSS signal originates) or at least refraining s150d from using, in the NSS estimator, some of the NSS signals from the affected NSS satellite. In other words, in this embodiment, a plurality of NSS signals likely to be affected by ionospheric disturbance are excluded in at least one estimator on the receiver side. This is advantageous at least because scintillation is often not limited to a narrow frequency band. In yet other words, if scintillation is detected on one channel, all other signals of that receiver-satellite link are also likely to be affected, potentially with a slight delay.

Discriminating between the observables may also be applied when applying the exclusion as a mitigation technique to a plurality of NSS signals from the affected satellite(s).

Specifically, in one embodiment, illustrated by Fig. 9j, the ionospheric disturbance mitigation measure comprises refraining s150e from using, in the NSS estimator, a first type of observable of the NSS signal while still using a second type of observable of the NSS signal in the NSS estimator, and applying the same refraining-or-still-using measure to all other NSS signals, or at least one other NSS signal, from the NSS satellite from which the NSS signal originates. For example, the first type of observable may be a carrier phase observable and the second type of observable may be a code observable.

Here, the expression "applying the same NSS-signal-, observable-type-, or observable-type-group- refraining-or-still-using measure, whichever is applicable, also to all other NSS signals" means (i), if the measure is taken at the NSS signal level, refraining from using all NSS signals from the satellite under consideration, and (ii), if the measure is taken at the observable-type level (or observable-type-group level), applying the same measure, i.e. either refraining or using, for each observable-type no matter the NSS signal from the satellite under consideration (i.e., uniform application of refraining-or-still-using measure over all NSS signals of the satellite under consideration).

For example, for (ii), if two observable types are used, the following may apply (see Table 7):

Table 7. Example of uniform application of refraining-or-still-using measures at the observable-type level over all NSS signals of a satellite affected by ionospheric disturbance, for two observable types (carrier phase, code) or, if three observable types are used, the following may apply (see Table 8):

|  | NSS signal 1 from satellite A (e.g., GPS L1) | NSS signal 2 from satellite A (e.g., GPS L2) | NSS signal 3 from satellite A (e.g., GPS L5) |
| --- | --- | --- | --- |
| Carrier phase observable | refraining from using | refraining from using | refraining from using |
| Code observable | using | using | using |

Table 8. Example of uniform application of refraining-or-still-using measures at the observable-type level over all NSS signals of a satellite affected by ionospheric disturbance, for three observable types (carrier phase, code, Doppler)

|  | NSS signal 1 from satellite A (e.g., GPS L1) | NSS signal 2 from satellite A (e.g., GPS L2) | NSS signal 3 from satellite A (e.g., GPS L5) |
| --- | --- | --- | --- |
| Carrier phase observable | refraining from using | refraining from using | refraining from using |
| Code observable | using | using | using |
| Doppler observable | refraining from using | refraining from using | refraining from using |

The expression "applying the same NSS-signal-, observable-type-, or observable-type-group- refraining-or-still-using measure, whichever is applicable, also [...] to at least one other NSS signal from the NSS satellite from which the NSS signal originates" means essentially the same as the above but not necessarily applied to all NSS signals, as one or some NSS signal(s) may be more robust to ionospheric disturbance than others. That is, this covers a uniform application of refraining-or-still-using measure over a subset of all NSS signals of the satellite under consideration.

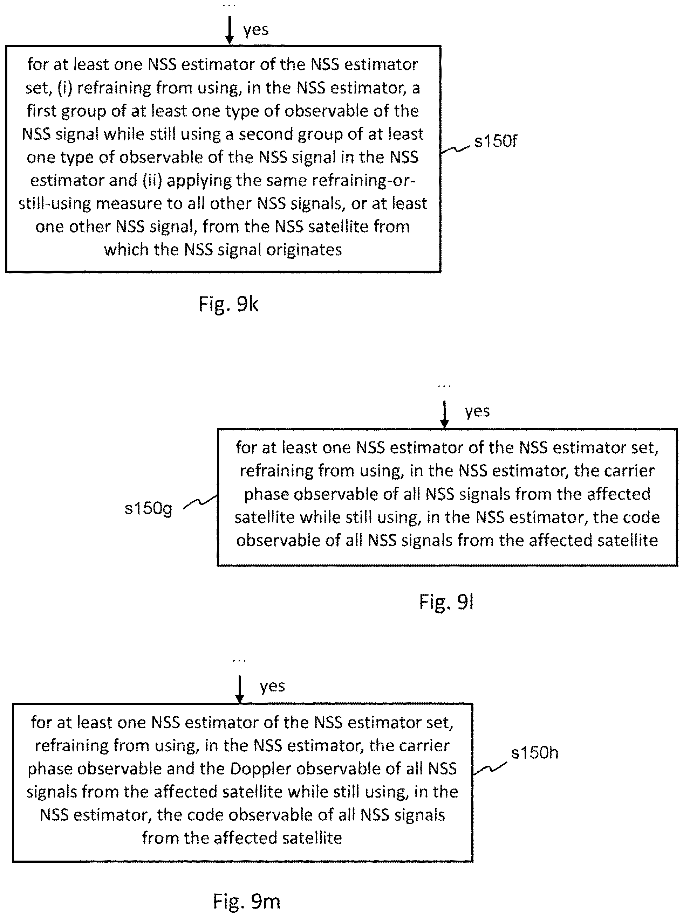

In another embodiment, illustrated by Fig. 9k, the ionospheric disturbance mitigation measure comprises refraining s150f from using, in the NSS estimator, a first group of at least one type of observable of the NSS signal while still using a second group of at least one type of observable of the NSS signal in the NSS estimator, and applying the same refraining-or-still-using measure to all other NSS signals, or at least one other NSS signal, from the NSS satellite from which the NSS signal originates. For example, the first group may comprise a carrier phase observable and another observable such as a Doppler observable, and the second group may comprise a code observable.

Fig. 9l more specifically illustrates one embodiment in which the first type of observable, which is, as mentioned above, excluded s150g from the estimator, is a carrier phase observable of all NSS signals from the affected satellite, and the second type of observable, which is not excluded from the estimator, is a code observable of all NSS signals from the affected satellite.

Likewise, Fig. 9m more specifically illustrates one embodiment in which the first observable-type group, which is, as mentioned above, excluded s150h from the estimator, comprises a carrier phase observable and a Doppler observable, and the second observable-type group, which is not excluded from the estimator, comprises a code observable.

Let us now further explain, in the context of some embodiments, the possible mitigation measures, i.e. operations s120, s130, s140, and s150a-h as schematically illustrated by Figs. 9a to 9m.

To obtain good navigation solutions, it is advantageous that the positioning filter(s) (i.e., the estimator(s)) used by GNSS rover receivers remove the influence of the ionospheric delay on the code and carrier phase measurements. Removing the influence of the ionospheric delay on the code and carrier phase measurements may be done by estimating the ionospheric delay or processing measurement combinations that are free of ionospheric delay. In case of difference-based processing, the reference observations that are used may be from a physical RTK base station or, alternatively, from a virtual base station computed by a reference station system involving a model of the ionospheric delay. The virtual base station may be a virtual reference station (VRS) or a global virtual reference station (GVRS). For more information about GVRS, see for example ref. [24], including notably col. 62 line 48 to col. 63 line 15 (i.e., Part 11.2 titled "Global Virtual Reference Station Positioning").

When estimating differenced ionospheric delay states, the filter(s) (i.e., the estimator(s)) generally use an a *priori* stochastic noise model for the states. A Gauss-Markov stochastic model, parameterized by a correlated noise and correlation time, may be used for this purpose and the default values for the parameters are based on the expectation of an undisturbed ionosphere and on the length of the baseline between the RTK base (reference station) and rover (NSS receiver) or, in case of a virtual base station (VRS or GVRS) or undifferenced processing, the accuracy (indicator) of the underlying ionosphere model. When the ionosphere is disturbed, it is advantageous to adapt the correlated noise and/or correlation time so that the estimated differenced ionospheric delay states better reflect the actual differenced ionospheric delay. The reference point ionospheric disturbance levels received from a reference station or reference station system (see Figs. 9a to 9m) may be used for this purpose. For example, the amplitude and phase scintillation levels may be used to derive a scale factor and/or an additive value that is used to adapt either parameter. The gradient level may also be used directly to scale the correlated noise and/or correlation time.

Instead of estimating ionospheric delay states, code and carrier phase measurement combinations that are free of ionospheric delay can be processed. For example, single-differenced code and carrier phase measurement combinations that are free of ionospheric delay may be processed. A potential drawback of this option is that the ionosphere-free combinations are generally considerably noisier than the primary frequency band measurements used to form the combination. The ionospheric disturbance levels received from a reference station or reference station system (see Figs. 9a to 9m) may be used to decide when it is better to use ionosphere-free measurements combinations rather than primary band measurements.

In one embodiment, if an estimator operating on a rover receiver is operating with ionosphere-free observations and ionospheric disturbance information indicates an ionospheric disturbance level below a threshold (i.e., a period of disturbance ended), the estimator may be switched back to normally processing ionospheric observations, i.e. the estimator may switch back to the normal process such as for example to multi-frequency time-differenced carrier phase observation processing.

Let us now further discuss the amplitude scintillation adaptation in some embodiments of the invention.

When the amplitude scintillation level is higher than a threshold, a scale factor or additive value may be derived and applied to the ionospheric delay state Gauss-Markov noise model of each satellite.

A scale factor may be derived by normalizing the amplitude scintillation levels using the expected level noise which is largely a function of the expected noise of the $C/N_0$ rate measurements used to estimate the amplitude scintillation levels.

The expected variance of the amplitude scintillation levels is:

$$\sigma^2_{\beta(tn)} = (0.125)^2 / \sin(\text{elev}) \qquad \text{(Equation 12)}$$

where

$\sigma^2_{\beta(tn)}$    is amplitude scintillation level variance at epoch $t_n$ ( $(\text{dBHz/s})^2$ )

elev    is the satellite elevation (radians).

The normalized amplitude scintillation level is therefore:

$$|\boldsymbol{\beta}(t_n)| = \boldsymbol{\beta}(t_n) / \sigma_{\beta(tn)}$$

where $\sigma_{\beta(tn)}$ is the amplitude scintillation level standard deviation at epoch $t_n$.

Assuming the amplitude scintillation level measurements are normally distributed, a normalized level of 1 means that there is a 68% probability of amplitude scintillation, a level of 2 means that there is a 95% probability of amplitude scintillation, and a level of 3 means that there is a 99.7% probability of amplitude scintillation. When there is a sufficiently high probability that amplitude scintillation is occurring, the normalized level can be used directly to upscale the Gauss-Markov correlated noise and downscale the Gauss-Markov correlation time.

Alternatively, if the rover navigation filter (estimator) is not estimating ionospheric delay states, a switch to ionosphere-free measurements may be triggered when the amplitude scintillation level exceeds a threshold.

Let us now further discuss the phase scintillation adaptation in some embodiments of the invention.

Like the amplitude scintillation adaptation, when the phase scintillation level is higher than a threshold, a scale factor or additive value may be derived and applied to the ionospheric delay state Gauss-Markov noise model for each satellite.

A scale factor may be derived by normalizing the phase scintillation levels using the expected level noise which is largely a function of the expected noise of the carrier phase measurements used to estimate the phase scintillation levels.

The expected variance of the phase scintillation levels is:

$$\sigma^2_{\Phi(tn)} = (0.001)^2 / \sin^2(\text{elev})$$

(Equation 13)

where

$\sigma^2_{\Phi(tn)}$ is phase scintillation level variance at epoch $t_n$ ( $(m/s)^2$)

elev is the satellite elevation (radians).

The normalized phase scintillation level is therefore:

$$|\Phi(t_n)| = \Phi(t_n) / \sigma_{\Phi(tn)}$$

where $\sigma_{\Phi(tn)}$ is the phase scintillation level standard deviation at epoch $t_n$.

Assuming the phase scintillation level measurements are normally distributed, a normalized level of 1 means that there is a 68% probability of phase scintillation, a level of 2 means that there is a 95% probability of phase scintillation and a level of 3 means that there is a 99.7% probability of phase scintillation. When there is a sufficiently high probability that phase scintillation is occurring, the normalized level may be used directly to upscale the Gauss-Markov correlated noise and downscale the Gauss-Markov correlation time.

Alternatively, if the rover navigation filter is not estimating ionospheric delay states, a switch to ionosphere-free measurements may be triggered when the phase scintillation level exceeds a threshold.

Let us now further discuss the ionospheric spatial gradient adaptation in some embodiments of the invention.

The time-step ionospheric delay spatial gradient level computed for each IPP is a measure of how much the ionospheric delay is expected to change over a distance near the IPP along the line of sight between the RTK base and satellite. As such, the ionospheric gradient level can be used to adapt the Gauss-Markov stochastic models used for the reference station or reference station system to rover satellite-differenced ionospheric delay states. This may be done by scaling the Gauss-Markov stochastic model correlated noise value by the ionospheric delay gradient level.

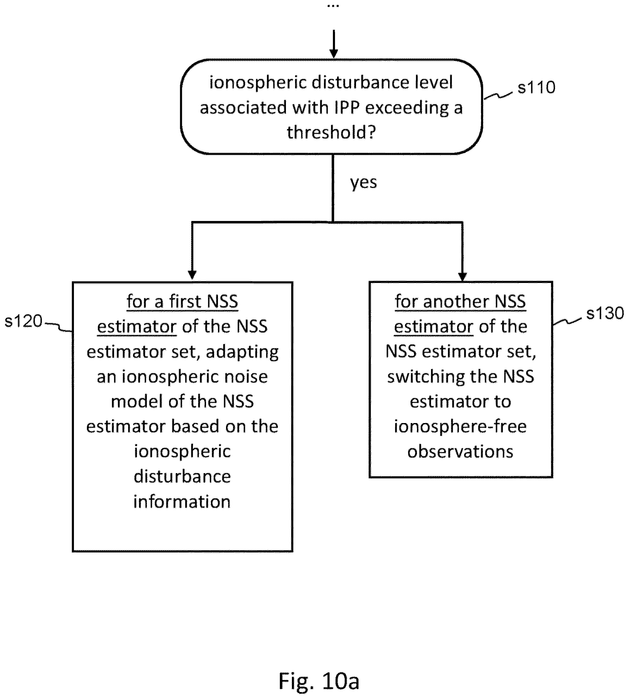

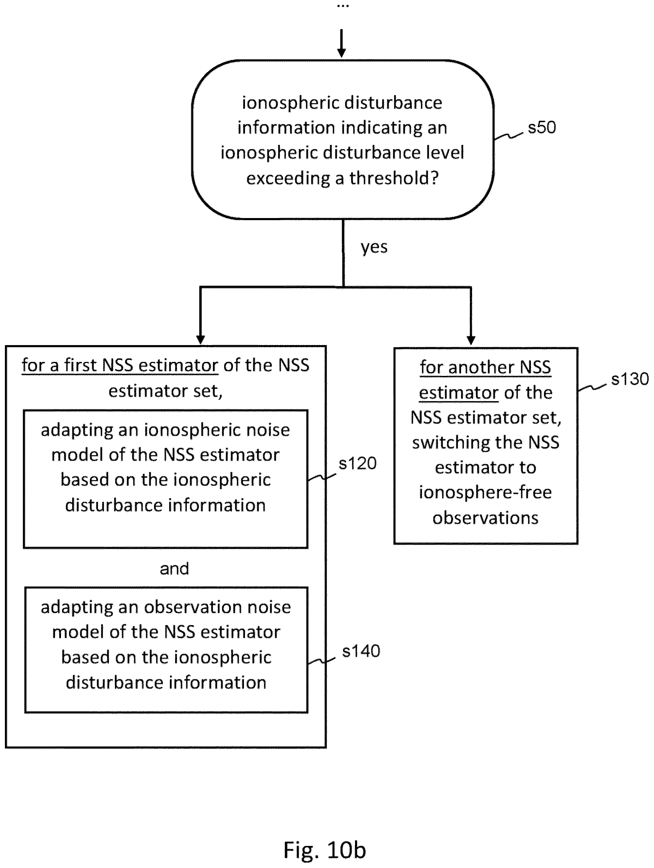

Figs. 10a and 10b are flowcharts of methods in two embodiments of the invention, in which ionospheric disturbance mitigation measures are taken for each of two different estimators, which, as mentioned above, may for example be a precise estimator and a timely estimator as described in ref. [16]. In Fig. 10a, measure (a) (operation s120) is performed for a first NSS estimator, whereas measure (b) (operation s130) is performed for a second NSS estimator. In Fig. 10b, measures (a) and (c) (operations s120 and s140) are performed for a first NSS estimator, whereas measure (b) (operation s130) is performed for a second NSS estimator. Other combinations may be used as well (not illustrated).

For example, different mitigation measures may be taken for a precise estimator and a timely estimator as described in ref. [16] in that, when an ionospheric disturbance level associated with an IPP exceeds a threshold, (i) the precise estimator's satellite ionospheric delay state noise model is adapted by upscaling the correlated noise and downscaling the correlation time and (ii) the timely estimator switches to ionosphere-free carrier phase combination -for all the satellites or only for the satellite(s) affected by ionospheric disturbance (i.e., for which the threshold is exceeded)-, i.e. processing delta (i.e., time-differenced) carrier phase observations that are corrected for ionospheric delay.

In one embodiment (not illustrated in the drawings), the method described with reference to any one of Figs. 9a to 9m, 10a and 10b, comprises an operation of observing NSS signals. That is, in this embodiment, operations s60 to s110, and any one of operations s120, s130, s140 and/or s150a-h (see possible combinations in Table 6) are carried out at least by an NSS receiver, and the NSS receiver also observes NSS signals.

In another embodiment (not illustrated in the drawings), an NSS receiver observes NSS signals and the NSS receiver transmits data representing the observed NSS signals, or information derived therefrom, to another processing entity or set of processing entities in charge of carrying out operations s60, s70, s80, etc., which then receives the data representing the observed NSS signals, or information derived therefrom.

### System

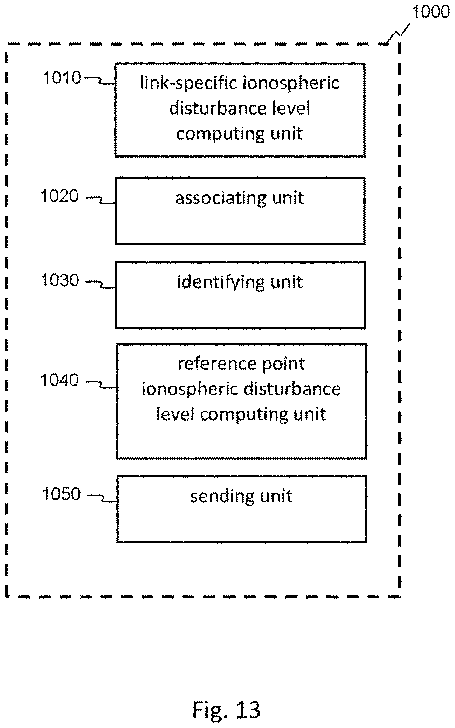

Fig. 13 schematically illustrates a system 1000 in one embodiment of the invention, for providing ionospheric disturbance information applicable to at least a part 204 of the Earth's surface 202. The ionospheric disturbance information is suitable for use by a NSS receiver and/or a processing entity capable of receiving data from the NSS receiver. The ionospheric disturbance information may help in computing a positioning solution based on NSS signals received by the NSS receiver from a plurality of NSS satellites. System 1000 comprises one or a plurality of computers and/or servers, or more generally by any number of processing entities implemented in hardware, firmware, software and/or using any form of machine-readable instructions. Part of system 1000 may also encompass a NSS receiver and/or a processing entity capable of receiving data from the NSS receiver. System 1000 comprises a link-specific ionospheric disturbance level computing unit 1010 to perform operation s10 as described above (see notably Figs. 1, 6, 7, and 8), an associating unit 1020 to perform operation s20 as described above (see also notably Figs. 1, 6, 7, and 8), an identifying unit 1030 to perform operation s30 as described above (see also notably Figs. 1, 6, 7, and 8), a reference point ionospheric disturbance level computing unit 1040 to perform operation s40 as described above (see also notably Figs. 1, 6, 7, and 8), and a sending unit 1050 to perform operation s50 as described above (see also notably Figs. 1, 6, 7, and 8).

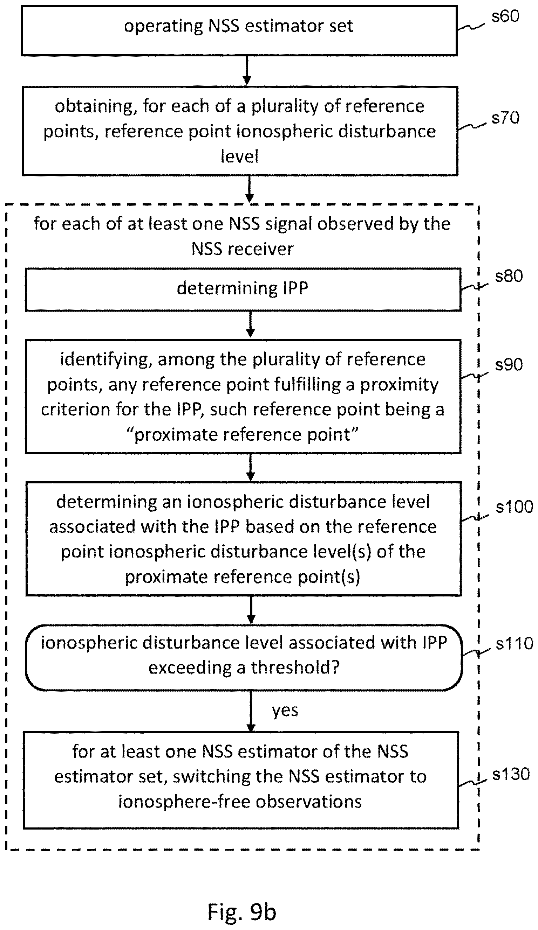

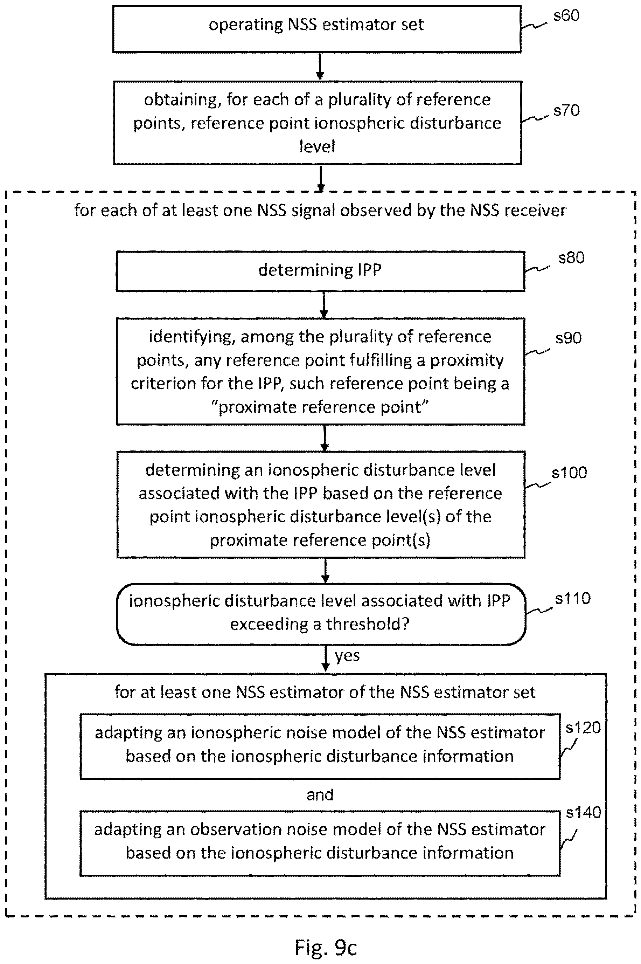

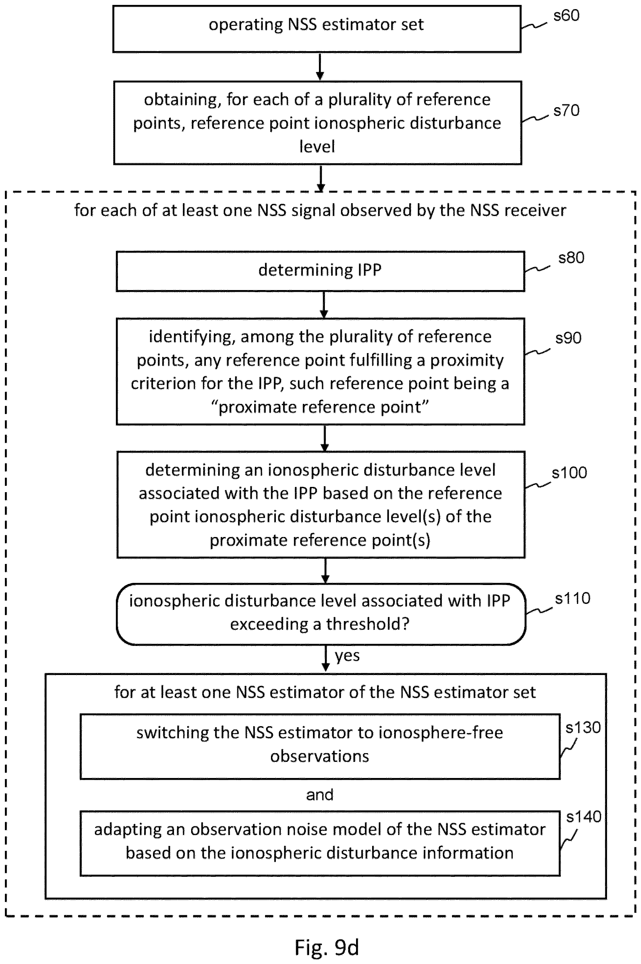

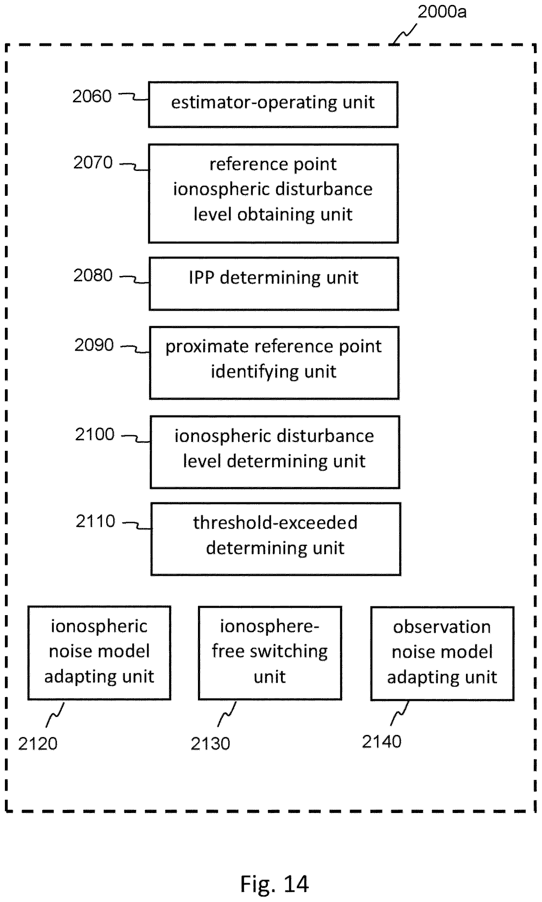

Fig. 14 schematically illustrates a system 2000a in one embodiment of the invention. System 2000a comprises an NSS receiver and/or a processing entity capable of receiving data from the NSS receiver. System 2000a operates to estimate parameters derived from NSS signals useful to, i.e. suitable to, determine a position. The NSS receiver is configured for observing NSS signals from NSS satellites over multiple epochs. System 2000a comprises (i) an estimator-operating unit 2060 to perform operation s60 as described above (see also notably Figs. 9a to 10b), (ii) a reference point ionospheric disturbance level obtaining unit 2070 to perform operation s70 as described above (see also notably Figs. 9a to 10b), (iii) IPP determining unit 2080 to perform operation s80 as described above (see also notably Figs. 9a to 10b), (iv) a proximate reference point identifying unit 2090 to perform operation s90 as described above (see also notably Figs. 9a to 10b), (v) an ionospheric disturbance level determining unit 2100 to perform operation s100 as described above (see also notably Figs. 9a to 10b), (vi) a threshold-exceeded determining unit 2110 to perform operation s110 as described above (see also notably Figs. 9a to 10b), (vii) at least one of: an ionospheric noise model adapting unit 2120 to perform operation s120 as described above (see also notably Figs. 9a, 9c, 10a, and 10b), an ionosphere-free switching unit 2130 to perform operation s130 as described above (see also notably Figs. 9b, 9d, 10a, and 10b), and an observation noise model adapting unit 2140 to perform operation s140 as described above (see also notably Figs. 9c to 9e, and 10b).

Fig. 15 schematically illustrates a system 2000b in one embodiment of the invention, which differs from the embodiment of Fig. 14 in that system 2000b comprises an excluding unit 2150 to perform one of operations s150a to s150h as described above (see also notably Figs. 9f to 9m).

In one embodiment, a vehicle comprises a system 2000a, 2000b as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. Alternatively or additionally, the vehicle may for example be at least one of (the list of possibilities is not meant to be exhaustive): a motor vehicle, a car, a truck, a bus, a train, a motorcycle, a tractor, an agricultural equipment, an agricultural tractor, a combine harvester, a crop sprayer, a forestry equipment, a construction equipment, and a grader. Examples of applications include machine guidance, construction work, operation of unmanned aerial vehicles (UAV), also known as drones, and operation of unmanned surface vehicles/vessels (USV).

A mobile device may also comprise a NSS receiver as described above. The mobile device may be any type of communication terminal such as, for example, a mobile phone, a smartphone, a laptop, a wearable, or any other type of portable device. The mobile device may be able to use or display positions.

Additional remarks

Any of the above-described methods and their embodiments may be implemented, at least partially, by means of a computer program or a set of computer programs. The computer program(s) may be loaded on an apparatus or device, such as for example a server (which may comprise one or a plurality of computers), an NSS receiver (running on a rover station, on a reference station, or within a vehicle) and/or an NSS receiver chipset for mobile phones or automotive applications. Therefore, the invention also relates, in some embodiments and/or aspects, to a computer program or set of computer programs, which, when carried out on an apparatus as described above, such as for example an NSS receiver (running on a rover station, on a reference station, or within a vehicle) or a server, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and systems.

NSS receivers may include one antenna or a plurality of antennas, to receive the signals at the frequencies broadcasted by the satellites, processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "link-specific ionospheric disturbance level computing unit", "associating unit", "identifying unit", "reference point ionospheric disturbance level computing unit", and the like are used herein as units (or sub-units) of an apparatus (such as an NSS receiver), no restriction is made regarding how distributed the constituent parts of a unit (or sub-unit) may be. That is, the constituent parts of a unit (or sub-unit) may be distributed in different software or hardware components or devices for bringing about the intended function. Further, the units may be gathered together for performing their functions by means of a combined, single unit (or sub-unit).

The above-mentioned units and sub-units may be implemented for example using hardware, software, firmware, any combination of hardware, software, and firmware, pre-programmed ASICs (application-specific integrated circuits), or any other form of machine-readable instructions. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | |
|---|---|
| APC | antenna phase center |
| BDS | BeiDou Navigation Satellite System |
| BRT | Brasilia Time |
| C/A | coarse/acquisition (code) |
| CD | compact disc |
| CD-ROM | compact disk read-only memory |
| CPU | central processing unit |
| DVD | digital versatile disc |
| GBAS | Ground-Based Augmentation System |
| GNSS | global navigation satellite system |
| GPS | Global Positioning System |
| GVRS | global virtual reference station |
| I/O | input/output |
| iono | ionospheric or ionosphere |
| IP | Internet Protocol |
| IPP | ionospheric pierce point |
| IRNSS | Indian Regional Navigational Satellite System |
| LEO-PNT | Low Earth Orbit-Positioning, Navigation and Timing |
| LMS | least mean squares |
| LSIDL | link-specific ionospheric disturbance level |
| MEO-PNT | Medium Earth Orbit-Positioning, Navigation, and Timing |
| NAVIC | NAVigation with Indian Constellation |
| NSS | navigation satellite system |
| ppm | part(s) per million |
| PPP | precise point positioning |
| PRN | pseudo-random noise |
| QZSS | Quasi-Zenith Satellite System |
| RAM | random-access memory |
| ref. | reference |
| refs. | references |
| RMS | root mean square |
| RNSS | regional navigation satellite system |
| ROM | read-only memory |
| RTCM | Radio Technical Commission for Maritime Services |
| RTK | real-time kinematic |
| SNR | signal-to-noise ratio |
| SSD | solid-state disk |
| TEC | total electron content |

TID        travelling ionospheric disturbance
VRS       virtual reference station

References:

[1] Hofmann-Wellenhof, B., et al., "GNSS, Global Navigation Satellite Systems, GPS, GLONASS, Galileo, & more", Springer-Verlag Wien, 2008.

[2] EP 3 035 080 A1 titled "Navigation satellite system positioning involving the generation of correction information" (Trimble ref.: A4396).

[3] Jan Van Sickle, "Two Types of Observables I GEOG 862: GPS and GNSS for Geospatial Professionals", John A. Dutton e-Education Institute, College of Earth and Mineral Sciences, The Pennsylvania State University, retrieved from https://www.e-education.psu.edu/geog862/node/1752 on November 8, 2021.

[4] Pi, X., et al. "Monitoring of global ionospheric irregularities using the worldwide GPS network." Geophysical Research Letters 24.18 (1997): 2283-2286.

[5] Zhizhao, L. I. U., and W. U. Chen. "Study of the ionospheric TEC rate in Hong Kong region and its GPS/GNSS application." Global Navigation Satellite System: Technology Innovation and Application (CPGPS 2009); NA V Technology Co., Ltd.: Beijing, China (2009): 129-137.

[6] Cherniak, Iurii, Andrzej Krankowski, and Irina Zakharenkova. "Observation of the ionospheric irregularities over the Northern Hemisphere: Methodology and service." Radio Science 49.8 (2014): 653-662.

[7] Nguyen, Viet Khoi, et al. "Measuring phase scintillation at different frequencies with conventional GNSS receivers operating at 1 Hz." Journal of Geodesy 93 (2019): 1985-2001.

[8] Luo, Xiaomin, et al. "Amplitude scintillation index derived from C/N0 measurements released by common geodetic GNSS receivers operating at 1 Hz." Journal of Geodesy 94.2 (2020): 27.

[9] Wanninger, Lambert. "Ionospheric disturbance indices for RTK and network RTK positioning." Proceedings of the 17th International Technical Meeting of the Satellite Division of The Institute of Navigation (ION GNSS 2004). 2004.

[10] Lee, Jinsil, and Jiyun Lee. "Correlation between ionospheric spatial decorrelation and space weather intensity for safety-critical differential GNSS systems." Sensors 19.9 (2019): 2127.

[11] Caamano, Maria, et al. "Network-based ionospheric gradient monitoring to support GBAS." Navigation 68.1 (2021): 135-156.

[12] Chang, Hyeyeon, et al. "Ionospheric spatial decorrelation assessment for GBAS daytime operations in Brazil." Navigation 68.2 (2021): 391-404.

[13] Marini-Pereira, Leonardo, Alison de Oliveira Moraes, and Sam Pullen. "A Simple and Effective Approach to Real-Time Ionospheric Monitoring for GBAS in Low Latitudes." Proceedings of the 35th International Technical Meeting of the Satellite Division of The Institute of Navigation (ION GNSS+ 2022). 2022.

[14] Supriadi, Slamet, et al. "Construction of nominal ionospheric gradient using satellite pair based on GNSS CORS observation in Indonesia." Earth, Planets and Space 74.1 (2022): 71.

[15] EP 3 130 943 A1 titled "Navigation satellite system positioning involving the generation of tropospheric correction information" (Trimble ref.: 15072-EPO).

[16] EP 3 293 549 A1 titled "Advanced navigation satellite system positioning method and system using delayed precise information" (Trimble ref.: 16029-IDF)

[17] Klobuchar, John A. "Ionospheric time-delay algorithm for single-frequency GPS users." IEEE Transactions on aerospace and electronic systems 3 (1987): 325-331.

[18] RTCM Special Committee. "RTCM standard 10403.3 differential GNSS (global navigation satellite systems) services-version 3." RTCM Special Committee 104 (2016).

[19] Trimble (June 2009). "CMRx: A new correction format from Trimble". White paper, Trimble Navigation Ltd. Retrieved on 17 May 2023 from http://trl.trimble.com/docushare/dsweb/Get/Document-469944/WhitePaper_Heavy Highway_CMRxrev1.pdf.

[20] Zhang, Yixin, et al. "A study on the characteristics of the ionospheric gradient under geomagnetic perturbations." Sensors 20.7 (2020): 1805.

[21] Frissell, Nathaniel A., et al. "First observations of large scale traveling ionospheric disturbances using automated amateur radio receiving networks." Geophysical Research Letters 49.5 (2022): e2022GL097879.

[22] Woo, K. T. "Optimum semi-codeless carrier phase tracking of L2." Navigation 47.2 (2000): 82-99.

[23] US 6,954,488 B1 titled "Method and apparatus for improved L2 performance in dual frequency semi-codeless GPS receivers"

[24] US 9,594,168 B2 titled "GNSS signal processing with synthesized base station data"

**Claims**

1.  Method for providing ionospheric disturbance information applicable to at least a part (204) of the Earth's surface (202), the ionospheric disturbance information being suitable for use by at least one of

    a navigation satellite system, hereinafter abbreviated as "NSS", receiver and
    a processing entity capable of receiving data from the NSS receiver

    in contributing to computing a positioning solution based on NSS signals received by the NSS receiver, the method comprising:

    computing (s10), for each of a plurality of satellite-station links (206), an ionospheric disturbance level, hereinafter referred to as "link-specific ionospheric disturbance level", each satellite-station link (206) being a link between a NSS satellite (208) and a point (210), hereinafter referred to as "station" (210), on or near the surface of the Earth;
    for each link-specific ionospheric disturbance level, associating (s20) the link-specific ionospheric disturbance level with an ionospheric pierce point (212) being at an intersection of a reference ionospheric shell (214) and the satellite-station link (206) for which the link-specific ionospheric disturbance level has been computed;
    for each of a plurality of reference points (216) on the reference ionospheric shell (214):

    identifying (s30), among the ionospheric pierce points (212), any ionospheric pierce point (212) fulfilling a proximity criterion for the reference point (216), such ionospheric pierce point (212) being hereinafter referred to as "proximate ionospheric pierce point"; and
    computing (s40) a measure of the link-specific ionospheric disturbance levels associated with the proximate ionospheric pierce point or points (212), the measure being hereinafter referred to as "reference point ionospheric disturbance level"; and
    sending (s50), to a plurality of devices, at least one message comprising ionospheric disturbance information being or comprising the reference point ionospheric disturbance levels, each of the plurality of devices being at least one of: a NSS receiver and a processing entity capable of receiving data from a NSS receiver.

2.  Method of claim 1, wherein the plurality of reference points (216) on the reference ionospheric shell (214) form a grid.

3.  Method of claim 2, wherein the grid is any one of: an isometric grid, an orthogonal grid, a rectilinear grid, and a hexagonal grid.

4.  Method according to any one of the preceding claims, wherein the ionospheric disturbance information comprises at least one of:

    ionospheric amplitude scintillation information;
    ionospheric phase scintillation information; and
    ionospheric gradient information.

5.  Method according to any one of the preceding claims, wherein the reference point ionospheric disturbance level of a reference point (216) is or comprises at least one of:

    a mean of the link-specific ionospheric disturbance levels associated with the proximate ionospheric pierce points (212) of the reference point (216);
    a weighted mean of the link-specific ionospheric disturbance levels associated with the proximate ionospheric pierce points (212) of the reference point (216);
    a maximum of the link-specific ionospheric disturbance levels associated with the proximate ionospheric pierce points (212) of the reference point (216); and
    a nth percentile of the link-specific ionospheric disturbance levels associated with the proximate ionospheric pierce points (212) of the reference point (216).

6.  Method according to any one of the preceding claims, wherein

    the ionospheric disturbance information comprises ionospheric amplitude scintillation information; and
    computing (s10), for a satellite-station link (206), a link-specific ionospheric disturbance level comprises computing (s10a) a link-specific ionospheric amplitude scintillation level based on a channel carrier-to-noise-density ratio rate of change associated with the satellite-station link (206).

7. Method according to any one of the preceding claims, wherein

the ionospheric disturbance information comprises ionospheric phase scintillation information; and computing (s10), for a satellite-station link (206), a link-specific ionospheric disturbance level comprises computing (s10b) a link-specific ionospheric phase scintillation level based on an ionospheric delay, geometry-free rate of change associated with the satellite-station link (206).

8. Method according to any one of the preceding claims, wherein

the ionospheric disturbance information comprises ionospheric gradient information; and computing (s10), for a satellite-station link (206), a link-specific ionospheric disturbance level comprises computing (s10c) a link-specific ionospheric gradient level based on:

determining (s12) a difference, hereinafter referred to as "time-differenced ionospheric delay", between an ionospheric delay at a first point in time and an ionospheric delay at a second point in time; and dividing (s14) the time-differenced ionospheric delay by a distance between an ionospheric pierce point applicable at the first point in time and an ionospheric pierce point applicable at the second point in time.

9. Method, carried out by at least one of a navigation satellite system, hereinafter abbreviated as "NSS", receiver, and a processing entity capable of receiving data from the NSS receiver, for estimating parameters useful to determine a position, the NSS receiver observing NSS signals from NSS satellites, the method comprising:

operating (s60) at least one estimation process, each estimation process being hereinafter referred to as "NSS estimator" and the at least one NSS estimator being hereinafter referred to as "NSS estimator set", wherein each NSS estimator uses state variables and computes values of its state variables based on at least one of: NSS signals observed by the NSS receiver, and information derived from the NSS signals; obtaining (s70), for each of a plurality of reference points (216) on a reference ionospheric shell (214) above a surface of interest (204), ionospheric disturbance information associated with the reference point (216), the ionospheric disturbance information being hereinafter referred to as "reference point ionospheric disturbance level" and the surface of interest (204) being at least a part of the Earth's surface (202); and for each of at least one NSS signal observed by the NSS receiver:

determining (s80) an ionospheric pierce point (218) being at an intersection of the reference ionospheric shell (214) and a link between the NSS receiver and a NSS satellite from which the NSS signal originates; identifying (s90), among the plurality of reference points (216), any reference point (216) fulfilling a proximity criterion for the ionospheric pierce point (218), any such reference point (216) being hereinafter referred to as "proximate reference point"; determining (s100) an ionospheric disturbance level associated with the ionospheric pierce point (218) based on the reference point ionospheric disturbance level or levels of the proximate reference point or points (216); determining (s110) that the ionospheric disturbance level associated with the ionospheric pierce point (218) exceeds a threshold; and for at least one NSS estimator of the NSS estimator set, performing at least one of a first operation and a second operation, wherein the first operation comprises:

adapting (s120) an ionospheric noise model of the NSS estimator based on the ionospheric disturbance information; or switching (s130) the NSS estimator to ionosphere-free observations; and

the second operation comprises: adapting (s140) an observation noise model of the NSS estimator based on the ionospheric disturbance information.

10. Method, carried out by at least one of a navigation satellite system, hereinafter abbreviated as "NSS", receiver, and a processing entity capable of receiving data from the NSS receiver, for estimating parameters useful to determine a position, the NSS receiver observing NSS signals from NSS satellites, the method comprising:

operating (s60) at least one estimation process, each estimation process being hereinafter referred to as "NSS estimator" and the at least one NSS estimator being hereinafter referred to as "NSS estimator set", wherein each NSS estimator uses state variables and computes values of its state variables based on at least one of: NSS signals observed by the NSS receiver, and information derived from the NSS signals;

obtaining (s70), for each of a plurality of reference points (216) on a reference ionospheric shell (214) above a surface of interest (204), ionospheric disturbance information associated with the reference point (216), the ionospheric disturbance information being hereinafter referred to as "reference point ionospheric disturbance level" and the surface of interest (204) being at least a part of the Earth's surface (202); and

for each of at least one NSS signal observed by the NSS receiver:

determining (s80) an ionospheric pierce point (218) being at an intersection of the reference ionospheric shell (214) and a link between the NSS receiver and a NSS satellite from which the NSS signal originates;

identifying (s90), among the plurality of reference points (216), any reference point (216) fulfilling a proximity criterion for the ionospheric pierce point (218), any such reference point (216) being hereinafter referred to as "proximate reference point";

determining (s100) an ionospheric disturbance level associated with the ionospheric pierce point (218) based on the reference point ionospheric disturbance level or levels of the proximate reference point or points (216);

determining (s110) that the ionospheric disturbance level associated with the ionospheric pierce point (218) exceeds a threshold; and

for at least one NSS estimator of the NSS estimator set, performing one of:

refraining (s150a) from using the NSS signal in the NSS estimator;

refraining (s150b) from using a first type of observable of the NSS signal in the NSS estimator while still using a second type of observable of the NSS signal in the NSS estimator, wherein preferably the first type of observable is a carrier phase observable and the second type of observable is a code observable; and

refraining (s150c) from using a first group of at least one type of observable of the NSS signal in the NSS estimator while still using a second group of at least one type of observable of the NSS signal in the NSS estimator, wherein preferably the first group comprises a carrier phase observable and the second group comprises a code observable.

11. Method of claim 10, further comprising, after determining (s110) that the ionospheric disturbance level associated with the ionospheric pierce point (218) exceeds a threshold:

for the at least one NSS estimator of the NSS estimator set, applying (s150d, s150e, s150f, s150g, s150h) the same NSS-signal-, observable-type-, or observable-type-group- refraining-or-still-using measure (s150a, s150b, s150c), whichever is applicable, also to all other NSS signals from the NSS satellite from which the NSS signal originates, or to at least one other NSS signal from the NSS satellite from which the NSS signal originates.

12. Method according to any one of claims 9 to 11, wherein the plurality of reference points (216) on the reference ionospheric shell (214) form a grid.

13. Method of claim 12, wherein the grid is any one of: an isometric grid, an orthogonal grid, a rectilinear grid, and a hexagonal grid.

14. Method according to any one of claims 9 to 13, wherein the obtained ionospheric disturbance information comprises at least one of:

ionospheric amplitude scintillation information,
ionospheric phase scintillation information, and
ionospheric gradient information.

15. Method according to any one of claims 9 to 14, wherein

identifying (s90), among the plurality of reference points (216), any proximate reference point (216) comprises identifying a reference point (216) being the closest to the ionospheric pierce point (218); and
determining (s100) an ionospheric disturbance level associated with the ionospheric pierce point (218) comprises taking, as ionospheric disturbance level associated with the ionospheric pierce point (218), the reference point ionospheric disturbance level of the reference point (216) identified as the closest to the ionospheric pierce point (218).

16. Method according to any one of claims 9 to 14, wherein

identifying (s90), among the plurality of reference points (216), any proximate reference point (216) comprises identifying a plurality of proximate reference points (216); and
determining (s100) an ionospheric disturbance level associated with the ionospheric pierce point (218) comprises taking, as ionospheric disturbance level associated with the ionospheric pierce point (218), any one of:

a maximum value of the reference point ionospheric disturbance levels of the proximate reference points (216); and
an interpolated value of the reference point ionospheric disturbance levels of the proximate reference points (216).

17. System (1000) for providing ionospheric disturbance information applicable to at least a part (204) of the Earth's surface (202), the ionospheric disturbance information being suitable for use by at least one of

a navigation satellite system, hereinafter abbreviated as "NSS", receiver and
a processing entity capable of receiving data from the NSS receiver

in contributing to computing a positioning solution based on NSS signals received by the NSS receiver, the system (1000) being configured for:

computing, for each of a plurality of satellite-station links (206), an ionospheric disturbance level, hereinafter referred to as "link-specific ionospheric disturbance level", each satellite-station link (206) being a link between a NSS satellite (208) and a point (210), hereinafter referred to as "station" (210), on or near the surface of the Earth;
for each link-specific ionospheric disturbance level, associating the link-specific ionospheric disturbance level with an ionospheric pierce point (212) being at an intersection of a reference ionospheric shell (214) and the satellite-station link (206) for which the link-specific ionospheric disturbance level has been computed;
for each of a plurality of reference points (216) on the reference ionospheric shell (214):

identifying, among the ionospheric pierce points (212), any ionospheric pierce point (212) fulfilling a proximity criterion for the reference point (216), such ionospheric pierce point (212) being hereinafter referred to as "proximate ionospheric pierce point"; and
computing a measure of the link-specific ionospheric disturbance levels associated with the proximate ionospheric pierce point or points (212), the measure being hereinafter referred to as "reference point ionospheric disturbance level"; and

sending, to a plurality of devices, at least one message comprising ionospheric disturbance information being or comprising the reference point ionospheric disturbance levels, each of the plurality of devices being at least one of: a NSS receiver and a processing entity capable of receiving data from a NSS receiver.

18. System (2000a) comprising at least one of a navigation satellite system, hereinafter abbreviated as "NSS", receiver and a processing entity capable of receiving data from the NSS receiver, the system (2000a) being for estimating parameters useful to determine a position, the NSS receiver observing NSS signals from NSS satellites, and the system (2000a) being configured for:

operating at least one estimation process, each estimation process being hereinafter referred to as "NSS estimator" and the at least one NSS estimator being hereinafter referred to as "NSS estimator set", wherein each NSS estimator uses state variables and computes values of its state variables based on at least one of: NSS signals observed by the NSS receiver, and information derived from the NSS signals;
obtaining, for each of a plurality of reference points (216) on a reference ionospheric shell (214) above a surface of interest (204), ionospheric disturbance information associated with the reference point (216), the ionospheric disturbance information being hereinafter referred to as "reference point ionospheric disturbance level" and the surface of interest (204) being at least a part of the Earth's surface (202); and
for each of at least one NSS signal observed by the NSS receiver:

determining an ionospheric pierce point (218) being at an intersection of the reference ionospheric shell (214) and a link between the NSS receiver and a NSS satellite from which the NSS signal originates;

identifying, among the plurality of reference points (216), any reference point (216) fulfilling a proximity criterion for the ionospheric pierce point (218), any such reference point (216) being hereinafter referred to as "proximate reference point";

determining an ionospheric disturbance level associated with the ionospheric pierce point (218) based on the reference point ionospheric disturbance level or levels of the proximate reference point or points (216);

determining that the ionospheric disturbance level associated with the ionospheric pierce point (218) exceeds a threshold; and

for at least one NSS estimator of the NSS estimator set, performing at least one of a first operation and a second operation, wherein the first operation comprises:

adapting an ionospheric noise model of the NSS estimator based on the ionospheric disturbance information; or

switching the NSS estimator to ionosphere-free observations; and

the second operation comprises:

adapting an observation noise model of the NSS estimator based on the ionospheric disturbance information.

19. System (2000b) comprising at least one of a navigation satellite system, hereinafter abbreviated as "NSS", receiver and a processing entity capable of receiving data from the NSS receiver, the system (2000b) being for estimating parameters useful to determine a position, the NSS receiver observing NSS signals from NSS satellites, and the system (2000b) being configured for:

operating at least one estimation process, each estimation process being hereinafter referred to as "NSS estimator" and the at least one NSS estimator being hereinafter referred to as "NSS estimator set", wherein each NSS estimator uses state variables and computes values of its state variables based on at least one of: NSS signals observed by the NSS receiver, and information derived from the NSS signals;

obtaining, for each of a plurality of reference points (216) on a reference ionospheric shell (214) above a surface of interest (204), ionospheric disturbance information associated with the reference point (216), the ionospheric disturbance information being hereinafter referred to as "reference point ionospheric disturbance level" and the surface of interest (204) being at least a part of the Earth's surface (202); and

for each of at least one NSS signal observed by the NSS receiver:

determining an ionospheric pierce point (218) being at an intersection of the reference ionospheric shell (214) and a link between the NSS receiver and a NSS satellite from which the NSS signal originates;

identifying, among the plurality of reference points (216), any reference point (216) fulfilling a proximity criterion for the ionospheric pierce point (218), any such reference point (216) being hereinafter referred to as "proximate reference point";

determining an ionospheric disturbance level associated with the ionospheric pierce point (218) based on the reference point ionospheric disturbance level or levels of the proximate reference point or points (216);

determining that the ionospheric disturbance level associated with the ionospheric pierce point (218) exceeds a threshold; and

for at least one NSS estimator of the NSS estimator set, performing one of:

refraining from using the NSS signal in the NSS estimator;

refraining from using a first type of observable of the NSS signal in the NSS estimator while still using a second type of observable of the NSS signal in the NSS estimator, wherein preferably the first type of observable is a carrier phase observable and the second type of observable is a code observable; and

refraining from using a first group of at least one type of observable of the NSS signal in the NSS estimator while still using a second group of at least one type of observable of the NSS signal in the NSS estimator, wherein preferably the first group comprises a carrier phase observable and the second group comprises a code observable.

20. System (2000b) of claim 19, further configured for, after determining that the ionospheric disturbance level associated with the ionospheric pierce point (218) exceeds a threshold:

for the at least one NSS estimator of the NSS estimator set, applying the same NSS-signal-, observable-type-, or observable-type-group- refraining-or-still-using measure, whichever is applicable, also to all other NSS signals from the NSS satellite from which the NSS signal originates, or to at least one other NSS signal from the NSS satellite from which the NSS signal originates.

21. Vehicle comprising a system (2000a, 2000b) according to any one of claims 18 to 20, the vehicle preferably being at least one of: a motor vehicle, an agricultural tractor, a combine harvester, a crop sprayer, a construction equipment, a truck, a bus, a train, a motorcycle, an autonomous vehicle, a self-driving vehicle, a driverless vehicle, a robotic vehicle, a highly or partially automated vehicle, an aircraft, and an unmanned aerial vehicle.

22. Computer program or set of computer programs comprising computer-readable instructions configured, when executed on a computer or set of computers, to cause the computer or set of computers to carry out the method according to any one of claims 1 to 16.

23. Computer program product or storage mediums comprising a computer program or set of computer programs according to claim 22.

computing, for each of a plurality of satellite-station links, a link-specific ionospheric disturbance level — s10

for each link-specific ionospheric disturbance level, associating the link-specific ionospheric disturbance level with an IPP — s20

for each of a plurality of reference points

identifying, among the IPPs, any IPP fulfilling a proximity criterion for the reference point, such IPP being a "proximate IPP" — s30

computing a reference point ionospheric disturbance level associated with the proximate IPP(s) — s40

sending, to a plurality of devices, message(s) comprising ionospheric disturbance information being or comprising the reference point ionospheric disturbance levels — s50

Fig. 1

Fig. 2

Fig. 3a

Fig. 3b

Fig. 4

Fig. 5

computing, for each of a plurality of satellite-station links, a link-specific ionospheric disturbance level, comprising computing a link-specific ionospheric amplitude scintillation level for the satellite-station link ⟋ s10a

for each link-specific ionospheric disturbance level, associating the link-specific ionospheric disturbance level with an IPP ⟋ s20

for each of a plurality of reference points

identifying, among the IPPs, any IPP fulfilling a proximity criterion for the reference point, such IPP being a proximate IPP ⟋ s30

computing a reference point ionospheric disturbance level associated with the proximate IPP(s) ⟋ s40

sending, to a plurality of devices, message(s) comprising ionospheric disturbance information being or comprising the reference point ionospheric disturbance levels ⟋ s50

Fig. 6

computing, for each of a plurality of satellite-station links, a link-specific ionospheric disturbance level, comprising computing a link-specific ionospheric phase scintillation level for the satellite-station link

s10b

for each link-specific ionospheric disturbance level, associating the link-specific ionospheric disturbance level with an IPP

s20

for each of a plurality of reference points

identifying, among the IPPs, any IPP fulfilling a proximity criterion for the reference point, such IPP being a proximate IPP

s30

computing a reference point ionospheric disturbance level associated with the proximate IPP(s)

s40

sending, to a plurality of devices, message(s) comprising ionospheric disturbance information being or comprising the reference point ionospheric disturbance levels

s50

Fig. 7

computing, for each of a plurality of satellite-station links, a link-specific ionospheric disturbance level, comprising computing a link-specific ionospheric gradient level for the satellite-station link  — s10c

determining a time-differenced ionospheric delay — s12

dividing time-differenced ionospheric delay by distance — s14

for each link-specific ionospheric disturbance level, associating the link-specific ionospheric disturbance level with an IPP — s20

for each of a plurality of reference points

identifying, among the IPPs, any IPP fulfilling a proximity criterion for the reference point, such IPP being a proximate IPP — s30

computing a reference point ionospheric disturbance level associated with the proximate IPP(s) — s40

sending, to a plurality of devices, message(s) comprising ionospheric disturbance information being or comprising the reference point ionospheric disturbance levels — s50

Fig. 8

```
┌─────────────────────────────────────────────┐
│          operating NSS estimator set         │  s60
└─────────────────────────────────────────────┘
                        │
                        ▼
┌─────────────────────────────────────────────┐
│   obtaining, for each of a plurality of      │
│   reference points, reference point          │  s70
│   ionospheric disturbance level              │
└─────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ┐
  for each of at least one NSS signal observed
│ by the NSS receiver                          │
    ┌───────────────────────────────────────┐
│   │          determining IPP              │   │  s80
    └───────────────────────────────────────┘
│                   │                          │
                    ▼
│   ┌───────────────────────────────────────┐ │
    │ identifying, among the plurality of    │
│   │ reference points, any reference point  │ │   s90
    │ fulfilling a proximity criterion for   │
│   │ the IPP, such reference point being a  │ │
    │ "proximate reference point"            │
│   └───────────────────────────────────────┘ │
                    │
│                   ▼                          │
    ┌───────────────────────────────────────┐
│   │ determining an ionospheric disturbance │ │  s100
    │ level associated with the IPP based on │
│   │ the reference point ionospheric        │ │
    │ disturbance level(s) of the proximate  │
│   │ reference point(s)                     │ │
    └───────────────────────────────────────┘
│                   │                          │
                    ▼
│   ╭───────────────────────────────────────╮ │
    │ ionospheric disturbance level          │    s110
│   │ associated with IPP exceeding a        │ │
    │ threshold?                             │
│   ╰───────────────────────────────────────╯ │
                    │  yes
│                   ▼                          │
    ┌───────────────────────────────────────┐
│   │ for at least one NSS estimator of the  │ │
    │ NSS estimator set, adapting an         │    s120
│   │ ionospheric noise model of the NSS     │ │
    │ estimator based on the ionospheric     │
│   │ disturbance information                │ │
    └───────────────────────────────────────┘
└ ─ ─ ─ ─ ─ ─ ─ ─ ─ ─ ─ ─ ─ ─ ─ ─ ─ ─ ─ ─ ─ ─ ┘
```

Fig. 9a

```
┌─────────────────────────────────────────────────┐
│           operating NSS estimator set           │──── s60
└─────────────────────────────────────────────────┘
                        │
                        ▼
┌─────────────────────────────────────────────────┐
│  obtaining, for each of a plurality of reference │
│  points, reference point ionospheric disturbance │──── s70
│                     level                        │
└─────────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ─ ─ ┐
   for each of at least one NSS signal observed by the
│                   NSS receiver                    │
   ┌─────────────────────────────────────────────┐
│  │              determining IPP                 │ │──── s80
   └─────────────────────────────────────────────┘
│                      │                            │
                       ▼
│  ┌─────────────────────────────────────────────┐ │
   │  identifying, among the plurality of reference│
│  │  points, any reference point fulfilling a     │ │──── s90
   │  proximity criterion for the IPP, such        │
│  │  reference point being a                      │ │
   │  "proximate reference point"                  │
│  └─────────────────────────────────────────────┘ │
                       │
│                      ▼                            │
   ┌─────────────────────────────────────────────┐
│  │  determining an ionospheric disturbance level │ │──── s100
   │  associated with the IPP based on the reference│
│  │  point ionospheric disturbance level(s) of the│ │
   │  proximate reference point(s)                 │
│  └─────────────────────────────────────────────┘ │
                       │
│                      ▼                            │
   ╭─────────────────────────────────────────────╮
│  │ ionospheric disturbance level associated with IPP│──── s110
   │            exceeding a threshold?             │
│  ╰─────────────────────────────────────────────╯ │
                       │  yes
│                      ▼                            │
   ┌─────────────────────────────────────────────┐
│  │   for at least one NSS estimator of the NSS   │ │──── s130
   │   estimator set, switching the NSS estimator to│
│  │   ionosphere-free observations                │ │
   └─────────────────────────────────────────────┘
└ ─ ─ ─ ─ ─ ─ ─ ─ ─ ─ ─ ─ ─ ─ ─ ─ ─ ─ ─ ─ ─ ─ ─ ─ ┘
```

Fig. 9b

```
┌─────────────────────────────────────────────────┐
│          operating NSS estimator set            │ ～ s60
└─────────────────────────────────────────────────┘
                        │
                        ▼
┌─────────────────────────────────────────────────┐
│  obtaining, for each of a plurality of reference │
│  points, reference point ionospheric disturbance │ ～ s70
│                     level                        │
└─────────────────────────────────────────────────┘
                        │
                        ▼
```

┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐

   for each of at least one NSS signal observed by the NSS receiver

```
  ┌─────────────────────────────────────────────────┐
  │                determining IPP                  │ ～ s80
  └─────────────────────────────────────────────────┘
                          │
                          ▼
  ┌─────────────────────────────────────────────────┐
  │  identifying, among the plurality of reference   │
  │  points, any reference point fulfilling a proximity │ s90
  │  criterion for the IPP, such reference point being a │
  │          "proximate reference point"             │
  └─────────────────────────────────────────────────┘
                          │
                          ▼
  ┌─────────────────────────────────────────────────┐
  │  determining an ionospheric disturbance level    │
  │  associated with the IPP based on the reference  │ s100
  │  point ionospheric disturbance level(s) of the   │
  │         proximate reference point(s)             │
  └─────────────────────────────────────────────────┘
                          │
                          ▼
  ╭─────────────────────────────────────────────────╮
  │ ionospheric disturbance level associated with IPP │ s110
  │            exceeding a threshold?                │
  ╰─────────────────────────────────────────────────╯
                          │ yes
                          ▼
  ┌─────────────────────────────────────────────────┐
  │   for at least one NSS estimator of the NSS estimator set │
  │  ┌───────────────────────────────────────────────┐ │
  │  │ adapting an ionospheric noise model of the NSS estimator │ s120
  │  │ based on the ionospheric disturbance information │ │
  │  └───────────────────────────────────────────────┘ │
  │                      and                          │
  │  ┌───────────────────────────────────────────────┐ │
  │  │ adapting an observation noise model of the NSS estimator │ s140
  │  │ based on the ionospheric disturbance information │ │
  │  └───────────────────────────────────────────────┘ │
  └─────────────────────────────────────────────────┘
```

└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘

Fig. 9c

operating NSS estimator set — s60

obtaining, for each of a plurality of reference points, reference point ionospheric disturbance level — s70

for each of at least one NSS signal observed by the NSS receiver

determining IPP — s80

identifying, among the plurality of reference points, any reference point fulfilling a proximity criterion for the IPP, such reference point being a "proximate reference point" — s90

determining an ionospheric disturbance level associated with the IPP based on the reference point ionospheric disturbance level(s) of the proximate reference point(s) — s100

ionospheric disturbance level associated with IPP exceeding a threshold? — s110

yes

for at least one NSS estimator of the NSS estimator set

switching the NSS estimator to ionosphere-free observations — s130

and

adapting an observation noise model of the NSS estimator based on the ionospheric disturbance information — s140

Fig. 9d

```
┌─────────────────────────────────────────────┐
│         operating NSS estimator set         │──── s60
└─────────────────────────────────────────────┘
                      │
                      ▼
┌─────────────────────────────────────────────┐
│  obtaining, for each of a plurality of      │
│  reference points, reference point          │──── s70
│  ionospheric disturbance level              │
└─────────────────────────────────────────────┘
                      │
                      ▼
```

for each of at least one NSS signal observed by the
NSS receiver

```
┌─────────────────────────────────────────────┐
│            determining IPP                  │──── s80
└─────────────────────────────────────────────┘
                      │
                      ▼
┌─────────────────────────────────────────────┐
│  identifying, among the plurality of        │
│  reference points, any reference point      │
│  fulfilling a proximity criterion for the   │──── s90
│  IPP, such reference point being a          │
│  "proximate reference point"                │
└─────────────────────────────────────────────┘
                      │
                      ▼
┌─────────────────────────────────────────────┐
│  determining an ionospheric disturbance     │
│  level associated with the IPP based on     │
│  the reference point ionospheric            │──── s100
│  disturbance level(s) of the                │
│  proximate reference point(s)               │
└─────────────────────────────────────────────┘
                      │
                      ▼
╭─────────────────────────────────────────────╮
│  ionospheric disturbance level associated   │
│  with IPP exceeding a threshold?            │──── s110
╰─────────────────────────────────────────────╯
                      │ yes
                      ▼
┌─────────────────────────────────────────────┐
│  for at least one NSS estimator of the NSS  │
│  estimator set, adapting an observation     │
│  noise model of the NSS estimator based     │──── s140
│  on the ionospheric disturbance information │
└─────────────────────────────────────────────┘
```

Fig. 9e

```
┌─────────────────────────────────────────┐
│        operating NSS estimator set        │── s60
└─────────────────────────────────────────┘
                     │
                     ▼
┌─────────────────────────────────────────┐
│  obtaining, for each of a plurality of    │
│  reference points, reference point         │── s70
│  ionospheric disturbance level             │
└─────────────────────────────────────────┘
                     │
                     ▼
┌ ─ ─ ─ ─ ─ ─ ─ ─ ─ ─ ─ ─ ─ ─ ─ ─ ─ ─ ─ ─ ┐
   for each of at least one NSS signal
│  observed by the NSS receiver             │
   ┌─────────────────────────────────────┐
│  │         determining IPP              │ │── s80
   └─────────────────────────────────────┘
│                  │                        │
                   ▼
│  ┌─────────────────────────────────────┐ │
   │ identifying, among the plurality of  │
│  │ reference points, any reference point│ │── s90
   │ fulfilling a proximity criterion for │
│  │ the IPP, such reference point being a│ │
   │   "proximate reference point"        │
│  └─────────────────────────────────────┘ │
                   │
│                  ▼                        │
   ┌─────────────────────────────────────┐
│  │ determining an ionospheric           │ │
   │ disturbance level associated with the│ │── s100
│  │ IPP based on the reference point     │ │
   │ ionospheric disturbance level(s) of  │
│  │ the proximate reference point(s)     │ │
   └─────────────────────────────────────┘
│                  │                        │
                   ▼
│  ╭─────────────────────────────────────╮ │
   │ ionospheric disturbance level        │ │── s110
│  │ associated with IPP exceeding a      │ │
   │ threshold?                           │
│  ╰─────────────────────────────────────╯ │
                   │  yes
│                  ▼                        │
   ┌─────────────────────────────────────┐
│  │ for at least one NSS estimator of the│ │── s150a
   │ NSS estimator set, refraining from   │
│  │ using the NSS signal in the NSS      │ │
   │ estimator                            │
│  └─────────────────────────────────────┘ │
└ ─ ─ ─ ─ ─ ─ ─ ─ ─ ─ ─ ─ ─ ─ ─ ─ ─ ─ ─ ─ ┘
```

Fig. 9f

...

↓ yes

for at least one NSS estimator of the NSS estimator set, refraining from using, in the NSS estimator, a first type of observable of the NSS signal while still using a second type of observable of the NSS signal in the NSS estimator

s150b

Fig. 9g

...

↓ yes

s150c

for at least one NSS estimator of the NSS estimator set, refraining from using, in the NSS estimator, a first group of at least one type of observable of the NSS signal while still using a second group of at least one type of observable of the NSS signal in the NSS estimator

Fig. 9h

...

↓ yes

for at least one NSS estimator of the NSS estimator set, refraining from using, in the NSS estimator, (i) the NSS signal and (ii) all other NSS signals, or at least one other NSS signal, from the NSS satellite from which the NSS signal originates

s150d

Fig. 9i

...

↓ yes

s150e

for at least one NSS estimator of the NSS estimator set, (i) refraining from using, in the NSS estimator, a first type of observable of the NSS signal while still using a second type of observable of the NSS signal in the NSS estimator and (ii) applying the same refraining-or-still-using measure to all other NSS signals, or at least one other NSS signal, from the NSS satellite from which the NSS signal originates

Fig. 9j

...

↓ yes

for at least one NSS estimator of the NSS estimator set, (i) refraining from using, in the NSS estimator, a first group of at least one type of observable of the NSS signal while still using a second group of at least one type of observable of the NSS signal in the NSS estimator and (ii) applying the same refraining-or-still-using measure to all other NSS signals, or at least one other NSS signal, from the NSS satellite from which the NSS signal originates

s150f

Fig. 9k

...

↓ yes

for at least one NSS estimator of the NSS estimator set, refraining from using, in the NSS estimator, the carrier phase observable of all NSS signals from the affected satellite while still using, in the NSS estimator, the code observable of all NSS signals from the affected satellite

s150g

Fig. 9l

...

↓ yes

for at least one NSS estimator of the NSS estimator set, refraining from using, in the NSS estimator, the carrier phase observable and the Doppler observable of all NSS signals from the affected satellite while still using, in the NSS estimator, the code observable of all NSS signals from the affected satellite

s150h

Fig. 9m

ionospheric disturbance level associated with IPP exceeding a threshold?  ~ s110

yes

for a first NSS estimator of the NSS estimator set, adapting an ionospheric noise model of the NSS estimator based on the ionospheric disturbance information  s120~

for another NSS estimator of the NSS estimator set, switching the NSS estimator to ionosphere-free observations  ~ s130

Fig. 10a

ionospheric disturbance
information indicating an
ionospheric disturbance level
exceeding a threshold?

s50

yes

for a first NSS estimator of the NSS
estimator set,

adapting an ionospheric noise
model of the NSS estimator
based on the ionospheric
disturbance information

s120

and

adapting an observation noise
model of the NSS estimator
based on the ionospheric
disturbance information

s140

for another NSS
estimator of the
NSS estimator set,
switching the NSS
estimator to
ionosphere-free
observations

s130

Fig. 10b

$216_1$ $216_2$ $216_3$

$218$ $216_5$ $216_6$
$216_4$

$216_7$ $216_8$ $216_9$

Fig. 11a

Fig. 11b

Fig. 12

1000

1010 — link-specific ionospheric disturbance level computing unit

1020 — associating unit

1030 — identifying unit

1040 — reference point ionospheric disturbance level computing unit

1050 — sending unit

Fig. 13

2000a

2060 — estimator-operating unit

2070 — reference point
ionospheric disturbance
level obtaining unit

2080 — IPP determining unit

2090 — proximate reference point
identifying unit

2100 — ionospheric disturbance
level determining unit

2110 — threshold-exceeded
determining unit

| ionospheric noise model adapting unit | ionosphere-free switching unit | observation noise model adapting unit |
|---|---|---|
| 2120 | 2130 | 2140 |

Fig. 14

2000b

2060 — estimator-operating unit

2070 — reference point
ionospheric disturbance
level obtaining unit

2080 — IPP determining unit

2090 — proximate reference point
identifying unit

2100 — ionospheric disturbance
level determining unit

2110 — threshold-exceeded
determining unit

excluding unit

2150

Fig. 15

GPS21 L1CA C/N$_0$ rate (dBHz/s)

Fig. 16

GPS21 Ionospheric delay rate derived from L1CA-L2PE carrier phase (m/s)

Fig. 17

Europäisches
Patentamt

European
Patent Office

Office européen
des brevets

# EUROPEAN SEARCH REPORT

**Application Number**

EP 24 19 4905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/18677 A1 (AIRSYS ATM INC [US]; HUNDLEY THOMAS WARREN [US] ET AL.) 15 April 1999 (1999-04-15) | 1-5,7,8, 17,22,23 | INV. G01S19/07 G01S19/42 |
| Y | * figures 3, 12, 13, 14, 15 * * page 5, line 21 - line 22 * * page 12, line 1 - line 6 * * page 27, line 17 - line 20 * * page 33, line 17 - page 36, line 3 * * page 41 - page 43 * * page 45, line 2 - line 5 * * page 55 - page 56 * * page 65 - page 66 * ----- | 6,9-16, 18-21 | ADD. G01S19/08 |
| Y | LUO XIAOMIN ET AL: "Amplitude scintillation index derived from/measurements released by common geodetic GNSS receivers operating at 1 Hz", JOURNAL OF GEODESY, SPRINGER BERLIN HEIDELBERG, BERLIN/HEIDELBERG, vol. 94, no. 2, 13 February 2020 (2020-02-13), XP037020191, ISSN: 0949-7714, DOI: 10.1007/S00190-020-01359-7 [retrieved on 2020-02-13] | 6 | |
| A | * Abstract * * Introduction * ----- | 4,7 | |
| A | WO 2012/128980 A1 (TRIMBLE NAVIGATION LTD [US]; LEANDRO LEANDRO [DE] ET AL.) 27 September 2012 (2012-09-27) * paragraph [0107] - paragraph [0110] * ----- | 4,8 | |
| Y | CN 117 872 405 A (ST MICROELECTRONICS SRL) 12 April 2024 (2024-04-12) * paragraph [0013] - paragraph [0031] * ----- | 9,11-16, 18,20,21 | |

TECHNICAL FIELDS
SEARCHED (IPC)

G01S

-/--

The present search report has been drawn up for all claims

| Place of search | Date of completion of the search | Examiner |
|---|---|---|
| Munich | 27 May 2025 | Bomart, Sébastien |

EPO FORM 1503 03.82 (P04C01)

page 1 of 2

## EUROPEAN SEARCH REPORT

Application Number

EP 24 19 4905

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/056505 A1 (MORLEY THOMAS [CA]) 21 February 2019 (2019-02-21) * paragraph [0053] - paragraph [0054] * ----- | 10-16, 19-21 | |
| Y | KR 101 925 624 B1 (IUCF KOREA AEROSPACE UNIV [KR]) 5 December 2018 (2018-12-05) * paragraph [0196] - paragraph [0197] * ----- | 10-16, 19-21 | |
| | | | **TECHNICAL FIELDS SEARCHED (IPC)** |

The present search report has been drawn up for all claims

| Place of search | Date of completion of the search | Examiner |
|---|---|---|
| Munich | 27 May 2025 | Bomart, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 19 4905

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 24 19 4905

The Search Division considers that the present European patent application does not comply with the requirements of unity of invention and relates to several inventions or groups of inventions, namely:

1. claims: 1-8, 17, 22, 23

   Refining the ionospheric disturbance level information
   ---

2. claims: 9-16, 18-21

   Position estimation in a NSS receiver considering ionospheric disturbance level information.
   ---

## ANNEX TO THE EUROPEAN SEARCH REPORT
## ON EUROPEAN PATENT APPLICATION NO.

EP 24 19 4905

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | | Publication date | Patent family member(s) | | Publication date |
|---|---|---|---|---|---|
| WO 9918677 | A1 | 15-04-1999 | AU | 1900199 A | 27-04-1999 |
| | | | WO | 9918677 A1 | 15-04-1999 |
| WO 2012128980 | A1 | 27-09-2012 | CN | 103430046 A | 04-12-2013 |
| | | | CN | 103620444 A | 05-03-2014 |
| | | | EP | 2689265 A1 | 29-01-2014 |
| | | | EP | 2689266 A2 | 29-01-2014 |
| | | | US | 2014002300 A1 | 02-01-2014 |
| | | | US | 2014015712 A1 | 16-01-2014 |
| | | | WO | 2012128979 A2 | 27-09-2012 |
| | | | WO | 2012128980 A1 | 27-09-2012 |
| CN 117872405 | A | 12-04-2024 | NONE | | |
| US 2019056505 | A1 | 21-02-2019 | CA | 3010207 A1 | 17-02-2019 |
| | | | CA | 3218388 A1 | 17-02-2019 |
| | | | EP | 3447537 A1 | 27-02-2019 |
| | | | US | 2019056505 A1 | 21-02-2019 |
| | | | US | 2020174136 A1 | 04-06-2020 |
| KR 101925624 | B1 | 05-12-2018 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035080 A1
- EP 3130943 A1
- EP 3293549 A1
- US 6954488 B1
- US 9594168 B2

**Non-patent literature cited in the description**

- **HOFMANN-WELLENHOF, B. et al.** GNSS, Global Navigation Satellite Systems, GPS, GLONASS, Galileo, & more. Springer-Verlag, 2008
- **JAN VAN SICKLE**. Two Types of Observables I GEOG 862: GPS and GNSS for Geospatial Professionals. John A. Dutton e-Education Institute, College of Earth and Mineral Sciences, The Pennsylvania State University, 08 November 2021
- **PI, X. et al.** Monitoring of global ionospheric irregularities using the worldwide GPS network.. *Geophysical Research Letters*, 1997, vol. 24 (18), 2283-2286
- Study of the ionospheric TEC rate in Hong Kong region and its GPS/GNSS application. **ZHIZHAO, L. I. U.** ; **W. U. CHEN.** Global Navigation Satellite System: Technology Innovation and Application (CPGPS 2009). NA V Technology Co., Ltd., 2009, 129-137
- **CHERNIAK, IURII** ; **ANDRZEJ KRANKOWSKI** ; **IRINA ZAKHARENKOVA**. Observation of the ionospheric irregularities over the Northern Hemisphere: Methodology and service.. *Radio Science*, 2014, vol. 49 (8), 653-662
- **NGUYEN, VIET KHOI et al.** Measuring phase scintillation at different frequencies with conventional GNSS receivers operating at 1 Hz.. *Journal of Geodesy*, 2019, vol. 93, 1985-2001
- **LUO, XIAOMIN et al.** Amplitude scintillation index derived from C/N0 measurements released by common geodetic GNSS receivers operating at 1 Hz.. *Journal of Geodesy*, 2020, vol. 94 (2), 27
- **WANNINGER, LAMBERT.** Ionospheric disturbance indices for RTK and network RTK positioning. *Proceedings of the 17th International Technical Meeting of the Satellite Division of The Institute of Navigation (ION GNSS 2004).*, 2004
- **LEE, JINSIL** ; **JIYUN LEE.** Correlation between ionospheric spatial decorrelation and space weather intensity for safety-critical differential GNSS systems.. *Sensors*, 2019, vol. 19 (9), 2127
- **CAAMANO, MARIA et al.** Network-based ionospheric gradient monitoring to support GBAS.. *Navigation*, 2021, vol. 68 (1), 135-156
- **CHANG, HYEYEON et al.** Ionospheric spatial decorrelation assessment for GBAS daytime operations in Brazil.. *Navigation*, 2021, vol. 68 (2), 391-404
- **MARINI-PEREIRA** ; **LEONARDO, ALISON DE OLIVEIRA MORAES** ; **SAM PULLEN**. A Simple and Effective Approach to Real-Time Ionospheric Monitoring for GBAS in Low Latitudes.. *Proceedings of the 35th International Technical Meeting of the Satellite Division of The Institute of Navigation (ION GNSS+ 2022).*, 2022
- **SUPRIADI, SLAMET et al.** Construction of nominal ionospheric gradient using satellite pair based on GNSS CORS observation in Indonesia.. *Earth, Planets and Space*, 2022, vol. 74 (1), 71
- **KLOBUCHAR, JOHN A.** Ionospheric time-delay algorithm for single-frequency GPS users. *IEEE Transactions on aerospace and electronic systems*, 1987, vol. 3, 325-331
- RTCM standard 10403.3 differential GNSS (global navigation satellite systems) services-version 3. *RTCM Special Committee*, 2016, vol. 104
- CMRx: A new correction format from Trimble. White paper. Trimble Navigation Ltd., June 2009
- **ZHANG, YIXIN et al.** A study on the characteristics of the ionospheric gradient under geomagnetic perturbations.. *Sensors*, 2020, vol. 20 (7), 1805
- **FRISSELL, NATHANIEL A. et al.** First observations of large scale traveling ionospheric disturbances using automated amateur radio receiving networks.. *Geophysical Research Letters*, 2022, vol. 49 (5), e2022GL097879
- **WOO, K. T.** Optimum semi-codeless carrier phase tracking of L2.. *Navigation*, 2000, vol. 47 (2), 82-99